# EUROPEAN PATENT APPLICATION

(11) **EP 0 626 486 A1**
(43) Date of publication of application: **30.11.1994**
(21) Application number: 94111356.5
(22) Date of filing: 23.02.1990
(51) Int. Cl.: E04D 13/18

(54) **Roof**

(30) Priority: 30.03.1989 JP 76703/89
(62) Divisional of application: 90903423.3
(71) Applicant: HIRAI ENGINEERING CORPORATION, Minato-ku Tokyo (JP)
(72) Inventor: Hirai, Takashi, Tokyo (JP); Kaneko, Yoshio, Hachioji-shi, Tokyo (JP)
(74) Representative: Hackett, Sean James

(57) **Abstract**

A roof-mounted light-transmitting frame (B) comprises: a pair of left and right longitudinal sash members (160); a light-transmitting sheet support sash member (420) mounted along an inner surface of each longitudinal sash member (160); a lower horizontal sash member (150) mounted between front ends of said light-transmitting sheet support sash members (420); an upper horizontal sash member (170) mounted between rear ends of said light-transmitting sheet support sash members (420); and a light-transmitting sheet (180) mounted inside a space defined by said light-transmitting sheet support sash members (420), said upper horizontal sash member (170) and said lower horizontal sash member (150). The light-transmitting support sash member (420) is mounted obliquely to said longitudinal sash member (160) such that a distance between its front end and a lower edge of said longitudinal sash member (160) is made larger than a distance between its rear end and a lower edge of said longitudinal sash member (160). A recess (434) is longitudinally formed on the front end of a lower portion of said lower horizontal sash member (150) to be fitted to said upper horizontal sash member (170).

## Description

### FIELD OF THE ART

This invention relates to a roof structure for collecting solar energy.

### BACKGROUND ART

There are two types of roof-mounted known structure for collecting solar energy, one, in which a heating medium sealed in a transparent sheet is heated by means of solar energy to make use of the resultant heat; and another, in which a solar energy collection member made of amorphous silicon or crystalline silicon is mounted on the back side of a light-transmitting sheet.

However, when the entire surface of a roof is covered with solar energy collection members, the cost goes up and a large number of solar energy collection members of different dimensions are required to use in combination with each other to correspond to the size of the roof surface. Also, the roof increases in weight, so that rafters and sheathing boards have to bear substantial weight. Since each of these conventional structures is complicated in structure and includes a large number of members, the erection of such conventional roof-mounted structures is troublesome, and, the correction of dimensional errors is troublesome, so that it has been impossible to provide a roof with sufficient surface for use in collecting solar energy.

JP-A-56085648 and GB 2000860 each disclose a structure which suffers from these problems.

The objects of the present invention are to provide a solar energy collecting structure, which can accommodate errors in dimension between a roof and the solar energy collecting roof member due to thermal expansion, which is simple to erect so as to be capable of easily providing a large-scale energy collecting structure, which does not need to cover the entire roof surface with light-transmitting frames, which is arranged to accommodate the dimensions of a portion of the roof for collecting solar energy according to a desired value, which permits erection of a structure using standard-sized light-transmitting frames, which reduce the weight on the roof itself and avoids burdening rafters or sheathing boards with excessive weight, and which has an excellent external appearance.

In order to improve the efficiency of collection of light of a solar energy collecting portion of a small area entirely covered with light-transmitting sheets, the invention provides a roof-mounted light-transmitting frame according to Claim 1.

According to the solar energy collection structure of the present invention, since the usual roof members occupy the eaves part and the gable part, and the solar energy collection members are laid on the predetermined part enclosed with the overlying roof members, it is not necessary to cover the entire roof surface with the lighting frames. Consequently, the dimension of the roof portion for collecting the solar energy are defined according to a desired value, the erection of the roof structure is done with the standard-sized light-transmitting frames, and the weight of the roof is reduced to avoid burdening the rafters or the sheathing boards.

Also, the roof-mounted solar energy collection structure has a beautiful external appearance and offers a wide variety of different forms.

Since the light-transmitting frame has an insertion recess formed on the front end of the lower portion of the lower horizontal sash member and fitted to the adjacent upper horizontal sash member, a cover portion for covering the upper horizontal sash member does not need to be provided on an upper portion of the lower horizontal sash member, so that rain water or snow smoothly flows down without staying on the top surface of the light-transmitting sheet, and dust never accumulates.

Also, since the adjoining ends of the solar energy collection members adjacent to each other in the eaves-ridge direction are overlapped with each other to lengthen the light-transmitting sheet, the light collection area relative to the total roof area is enlarge to improve the efficiency of light collection.

Furthermore, since the adjoining ends of the solar energy collection members are overlapped with each other, each light-transmitting sheet is inclined relative to the sheathing boards of the roof. Each light-transmitting sheet support sash member is mounted as being inclined to the corresponding longitudinal sash member, so that the longitudinal sash member is mounted parallel to the sheathing roof board. Also, since the longitudinal sash member and the light-transmitting sheet support sash member differ from each other in inclination and are provided separately from each other, both of these sash members may be easily manufactured by means of extrusion molding. Thus, even if the inclination angle of the light-transmitting sheet support sash member relative to the corresponding longitudinal sash member varies with the change of the length of the solar energy collection member in the eaves-ridge direction, it is possible to easily adjust to the above-mentioned change of the inclination angle by using the same members.

### BRIEF DESCRIPTION OF THE DRAWINGS

Fig. 1 is a perspective view showing an embodiment of the present invention;
Fig. 2 is a fragmentary longitudinal sectional view illustrating an embodiment of the present invention;
Fig. 3 is a fragmentary cross-sectional view illustrating the present invention;
Fig. 4 is a fragmentary perspective view showing the present invention before an eaves support member and a side support member are mounted to a crosspiece;
Fig. 5 is a cross-sectional view showing the eaves support member;
Fig. 6 is a fragmentary perspective view showing the present invention after the eaves support member and the side support member;
Fig. 7 is a cross-sectional view showing the side support member;
Fig. 8 is a perspective view showing another embodiment of the present invention;
Fig. 9 is a fragmentary longitudinal sectional view showing another embodiment of the present invention;
Fig. 10 is a fragmentary cross-sectional view showing another embodiment of the present invention;
Fig. 11 is a fragmentary perspective view showing another embodiment of the present invention before an eaves support member and a side support member are mounted to a crosspiece;
Fig. 12 is a cross-sectional view showing the eaves support member in another embodiment of the present invention;
Fig. 13 is a fragmentary perspective view showing another embodiment of the present invention after the eaves support member and the side support member are mounted to the crosspiece;
Fig. 14 is a cross-sectional view showing the side support member;
Fig. 15 is a cross-sectional view showing a lower-part connecting member;
Fig. 16 is an exploded rear perspective view showing the lower-part connecting member, a connecting member fitting and a sheathing roof board;
Fig. 17 is a cross-sectional view showing a lower side connecting member;
Fig. 18 is a front view showing an eaves waterproof sheet;
Fig. 19 is a plan view showing the eaves waterproof sheet of Fig. 18;
Fig. 20 is a side view showing the eaves waterproof sheet of Fig. 18;
Fig. 21 is a front view showing an intermediate waterproof sheet;
Fig. 22 is a plan view showing the intermediate waterproof sheet of Fig. 21;
Fig. 23 is a side view showing the intermediate waterproof sheet of Fig. 21;
Fig. 24 is a front view showing a ridge waterproof sheet;
Fig. 25 is a plan view showing the ridge waterproof sheet of Fig. 24;
Fig. 26 is a side view showing the ridge waterproof sheet of Fig. 24;
Fig. 27 is a fragmentary sectional view showing the eaves waterproof sheet and the intermediate waterproof sheet;
Fig. 28 is a fragmentary side sectional view showing a waterproof sheet after being laid on supports;
Fig. 29 is a fragmentary enlarged-scale sectional view showing the waterproof sheet of Fig. 28 after being laid on supports;
Fig. 30 is a fragmentary perspective view showing the waterproof sheet mounting;
Fig. 31 is a fragmentary perspective view showing the lower-part connecting member and the lower side connecting member prior to the mounting;
Fig. 32 is a fragmentary perspective view showing the lower-part connecting member and the lower side connecting member after mounting;
Fig. 33 is a front view showing an upper-part connecting member;
Fig. 34 is a front view showing an intermediate connecting member cover;
Fig. 35 is a perspective view showing the upper-part connecting member before an eaves cover engaging support member is mounted thereto;
Fig. 36 is a perspective view showing the upper-part connecting member after the eaves cover engaging support member is mounted thereto;
Fig. 37 is a front view showing an upper side connecting member;
Fig. 38 is a front view showing a side connecting member cover;
Fig. 39 is an exploded perspective view showing an intermediate connecting member and a side connecting member;
Fig. 40 is a perspective view showing the intermediate connecting member and the side connecting member;
Fig. 41 is a fragmentary perspective view showing an eaves cover prior to the mounting;
Fig. 42 is an exploded perspective view showing the eaves cover;
Fig. 43 is a perspective view showing the eaves cover when mounted;
Fig. 44 is a fragmentary perspective view showing a dustproof cap prior to the mounting;
Fig. 45 is a fragmentary perspective view showing the dustproof cap after the mounting;
Fig. 46 is a longitudinal sectional view showing an eaves part before a porous sheet is mounted thereto;
Fig. 47 is a longitudinal sectional view showing the eaves part after the porous sheet is mounted thereto;
Fig. 48 is a plan view showing the eaves part of Fig. 47;
Fig. 49 is a front view showing the eaves part of Fig. 47;
Fig. 50 is a longitudinal sectional view showing the eaves part before the eaves cover and the dustproof cap are mounted thereto;
Fig. 51 is a longitudinal sectional view showing the eaves part when the eaves cover is mounted thereto;
Fig. 52 is a longitudinal sectional view showing the eaves part when the eaves cover and the dustproof cap are mounted thereto;

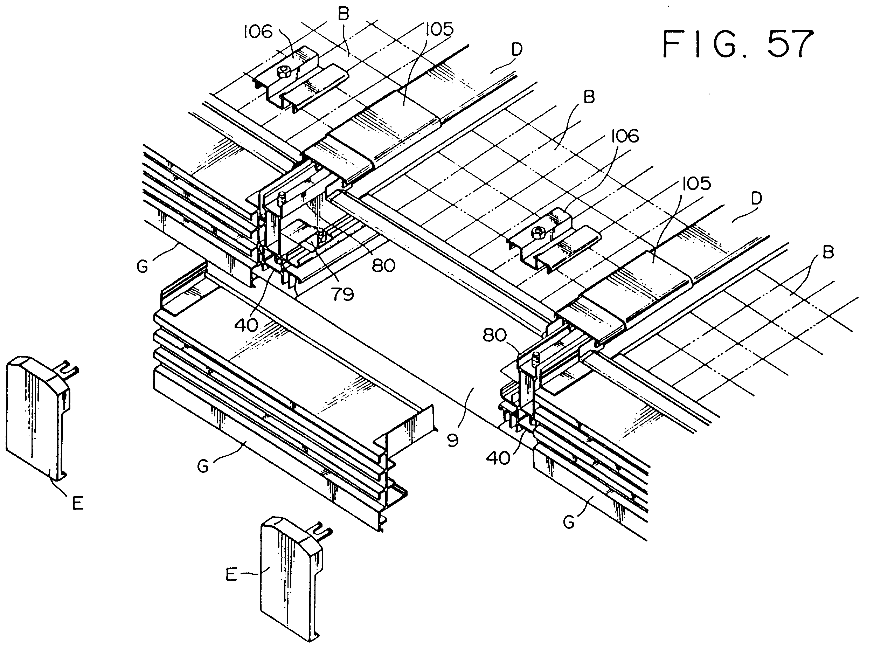

Fig. 53 through 57 are perspective views of the eaves part of the roof showing the steps of removing the eaves cover therefrom, respectively;
Fig. 58 is a plan view showing an eaves-side or intermediate light-transmitting;
Fig. 59 is a front view showing the eaves-side or intermediate light-transmitting frame;
Fig. 60 is a side view showing the eaves-side or intermediate light-transmitting frame;
Fig. 61 is a plan view showing a ridge-side light-transmitting frame;
Fig. 62 is a front view showing the ridge-side light-transmitting frame;
Fig. 63 is a side view showing the ridge-side light-transmitting frame;
Fig. 64 is a perspective view showing the ridge-side light-transmitting;
Figs. 65 through 68 are fragmentary longitudinal sectional views showing steps of mounting the eaves-side light-transmitting frame to the eaves cover, respectively;
Figs. 69 through 72 are fragmentary longitudinal sectional views showing steps of longitudinally interconnecting the light-transmitting frames, respectively;
Fig. 73 is a cross-sectional view showing an intermediate connection portion;
Fig. 74 is a fragmentary cross-sectional view showing a way of mounting the light-transmitting frame as adjusted relative to a narrow sheathing roof board;
Fig. 75 is a fragmentary cross-sectional view showing a way of normally mounting light-transmitting frame;
Fig. 76 is a fragmentary cross-sectional view showing a way of mounting the light-transmitting frame as being adjusted relative to a wide sheathing roof board;
Fig. 77 is a fragmentary cross-sectional view showing a way of mounting the eaves cover as adjusted relative to the narrow sheathing roof board;
Fig. 78 is a fragmentary cross-sectional view showing a way of normally mounting the eaves cover;
Fig. 79 is a fragmentary cross-sectional view showing a way of mounting the eaves cover as adjusted relative to the wide sheathing roof board;
Fig. 80 is a fragmentary exploded perspective view showing a ridge adjusting member and a ridge-side light-transmitting frame;
Fig. 81 is a fragmentary longitudinal sectional view showing a way of normally mounting the ridge adjusting member;
Fig. 82 is an enlarged-scale perspective view showing a mounting slot portion of Fig. 81;
Fig. 83 is a fragmentary longitudinal sectional view showing a way of mounting the edge adjusting plate member as adjusted relative to the roof surface which is relatively small in length between the ridge and the eaves;
Fig. 84 is an enlarged-scale perspective view showing a mounting slot portion of Fig. 83;
Fig. 85 is a fragmentary longitudinal sectional view showing a way of mounting the ridge adjusting plate member as adjusted relative to the roof surface which is relatively large in length between the ridge and the eaves;
Fig. 86 is an enlarged-scale perspective view showing a mounting slot portion of Fig. 85;
Fig. 87 is an exploded perspective view showing ridge cover, a ridge side face member and a ridge end face cap;
Fig. 88 is a perspective view showing the ridge cover, the ridge side face member and the ridge end face cap when being assembled together;
Fig. 89 is a fragmentary perspective view showing a ridge end part after the ridge cover and the ridge end face cap are mounted thereto;
Fig. 90 is an exploded perspective view showing a roof member for use in longitudinal roofing;
Fig. 91 is a perspective view showing the assembled roof member of Fig. 90;
Fig. 92 is a sectional view showing a connecting member;
Fig. 93 is a sectional view showing a connecting member cover;
Fig. 94 is a plan view showing the connecting member in mounting;
Fig. 95 is a longitudinal sectional view showing the connecting member of Fig. 94;
Fig. 96 is a cross-sectional view showing a roof side part;
Fig. 97 is a perspective view showing an eaves part of the roof before a cap is mounted thereto;
Fig. 98 is a perspective view showing the eaves part of the roof after the cap is mounted thereto;
Figs. 99 and 100 are longitudinal sectional views of the eaves part showing steps of mounting the roof member, respectively;
Fig. 101 is a longitudinal sectional view showing the eaves part of the roof when the roof member is shrunken;
Fig. 102 is a longitudinal sectional view showing the eaves part of the roof when the roof member is normally mounted;
Fig. 103 is a longitudinal sectional view showing the eaves part of the roof when the roof member is expanded;
Fig. 104 is an exploded perspective view showing the ridge-opening fill unit;
Fig. 105 is an exploded perspective view showing the ridge-opening fill unit;
Fig. 106 is a fragmentary perspective view showing the ridge-opening fill unit in mounting;
Fig. 107 is a cross-sectional view showing the ridge-opening fill unit in mounting;
Fig. 108 is a cross-sectional view showing the roof ridge part;
Fig. 109 is an exploded perspective view showing another embodiment of the present invention for use with longitudinal roofing;
Fig. 110 is an exploded cross-sectional view showing a connecting member;
Fig. 111 is a perspective view showing a roof member connection;
Fig. 112 is a perspective view showing a roof member fixing member;
Fig. 113 is a cross-sectional view showing a roof member connector;
Fig. 114 is a cross-sectional view showing a roof mounting with a minus adjustment;
Fig. 115 is a cross-sectional view showing a roof mounting with normal alignment;
Fig. 116 is a cross-sectional view showing a roof mounting with a plus adjustment;
Fig. 117 is a perspective view showing a side-part roof member fitting;
Fig. 118 is an exploded perspective view showing a roof side part;
Fig. 119 is a cross-sectional view showing a side end face member;
Fig. 120 is a cross-sectional view showing the roof side part when the side end face member is mounted thereto;

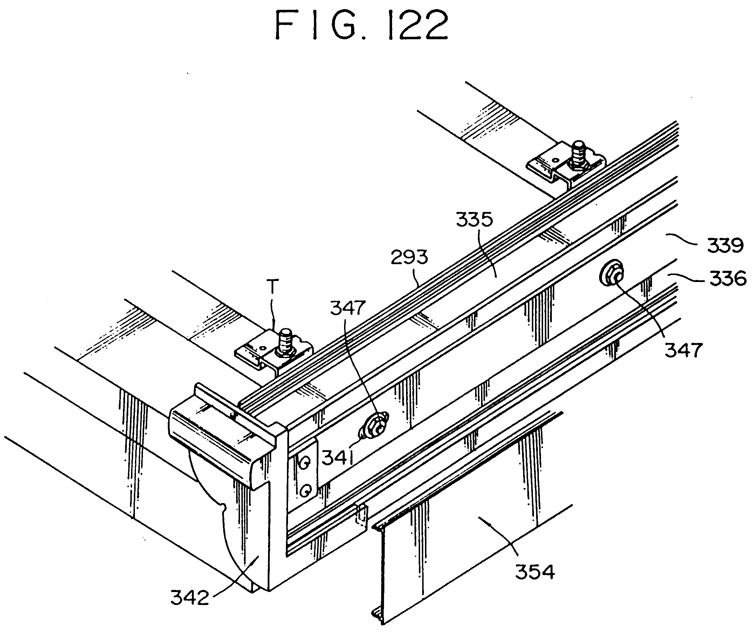

Figs. 121 through 123 are perspective views showing the procedure of the roof side part, respectively;
Fig. 124 is a perspective view showing a ridge end part;
Fig. 125 is a perspective view showing the ridge end part to which another ridge member is mounted;
Fig. 126 is a perspective view showing the backside of the ridge end face cap of Fig. 125;
Fig. 127 is a perspective view showing the surface of the ridge end face cap of Fig. 125;
Fig. 128 is a perspective view showing a fit frame member;
Fig. 129 is a perspective view showing a ridge end slide connector;
Fig. 130 is a perspective view showing a ridge end face cap;
Fig. 131 is a perspective view showing the ridge cover and the ridge end member prior to the connection;
Fig. 132 is a longitudinal sectional view showing the ridge cover and the ridge end member;
Fig. 133 is a cross-sectional view showing the ridge end part;
Fig. 134 is a cross-sectional view showing a longitudinal sash member;
Fig. 135 is a side view showing the longitudinal sash member;
Fig. 136 is a cross-sectional view showing an upper horizontal sash member;
Fig. 137 is a side view showing the upper horizontal sash member;
Fig. 138 is a cross-sectional view showing a lower horizontal sash member;
Fig. 139 is a side view showing the lower horizontal sash member;
Fig. 140 is a cross-sectional view showing the eaves-side end of the light-transmitting frame;
Fig. 141 is a cross-sectional view showing the eaves-side end of the light-transmitting frame;
Fig. 142 is a fragmentary perspective view showing a light-transmitting sheet support sash member;
Fig. 143 is a sectional view showing the light-transmitting sheet support sash member;
Fig. 144 is a side view showing the light-transmitting sheet support sash member;
Fig. 145 is a longitudinal sectional view showing the side of the light-transmitting frame;
Fig. 146 is a longitudinal sectional view showing the center of the light-transmitting frame;
Fig. 147 is a fragmentary exploded perspective view showing the light-transmitting frame;
Fig. 148 is a perspective view, partly omitted, showing the light-transmitting frame;
Fig. 149 is a fragmentary cross-sectional view showing the roof;
Fig. 150 is a fragmentary longitudinal sectional view showing the roof; and
Figs. 151 and 152 are longitudinal sectional views showing the light-transmitting frames different from each other in length, respectively.

### BEST MODE FOR CARRYING OUT THE INVENTION

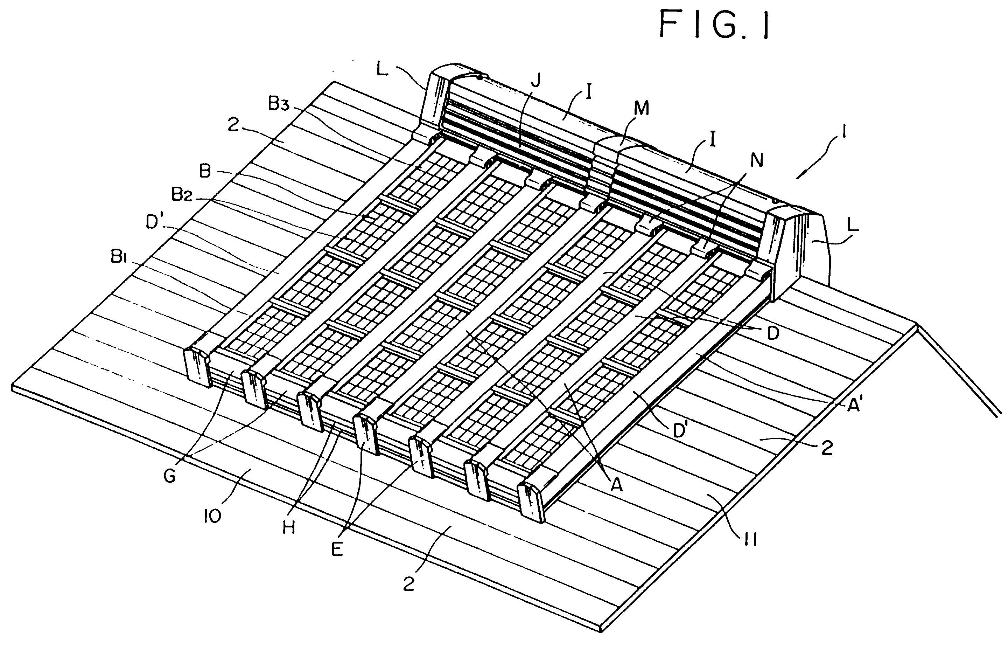

Fig. 1 is a perspective view showing an embodiment of a complete roof-mounted structure according to the present invention. In Fig. 1, reference numeral 1 designates a gable style roof having inclined surfaces respectively extending from a ridge toward opposite sides thereof, wherein an eaves part and a gable part of one inclined surface of the gable roof 1 are roofed with roof members 2 made of metal sheets for use in lateral roofing or elongate metal sheets provided with dutch lap-like pointed joints, and a part of one inclined surface enclosed by overlying roof members 2 is covered with light-transmitting frames B constituting solar energy collection members.

Reference symbol A designates an intermediate connecting member, and B a light-transmitting frame mounted between the adjacent intermediate connecting members A, A serving as the connecting member. A photoelectric generating element for transducing solar energy into electric energy is provided under the light-transmitting frame.

The light-transmitting frame B consists of an eaves-side light-transmitting frame B1, an intermediate light-transmitting frame B2 and a ridge-side light-transmitting frame B3.

Reference symbol A' designates a side connecting member, and on one side of the side connecting member A' are mounted the overlying roof members 2, instead of the light-transmitting frames B.

Reference symbol D designates an intermediate connecting member cover mounted on the intermediate connecting member A, and D' a side connecting member cover mounted on the side connecting member A'. Each of the connecting member covers D, D' is approximately equal in length with the light-transmitting frame B.

Reference symbol E designates a dustproof cap, G an eaves-side cover used for a prevention of dust and an inspection of a wiring, and H an eaves-side intake port provided in the eaves cover G.

Reference symbol I designates a ridge cover, J a ridge side face member mounted on the side face of the ridge cover I, L a ridge end member mounted to an end of the ridge cover I, M a ridge cover connecting member for interconnecting the ridge covers I, I, and N a ridge mounting member.

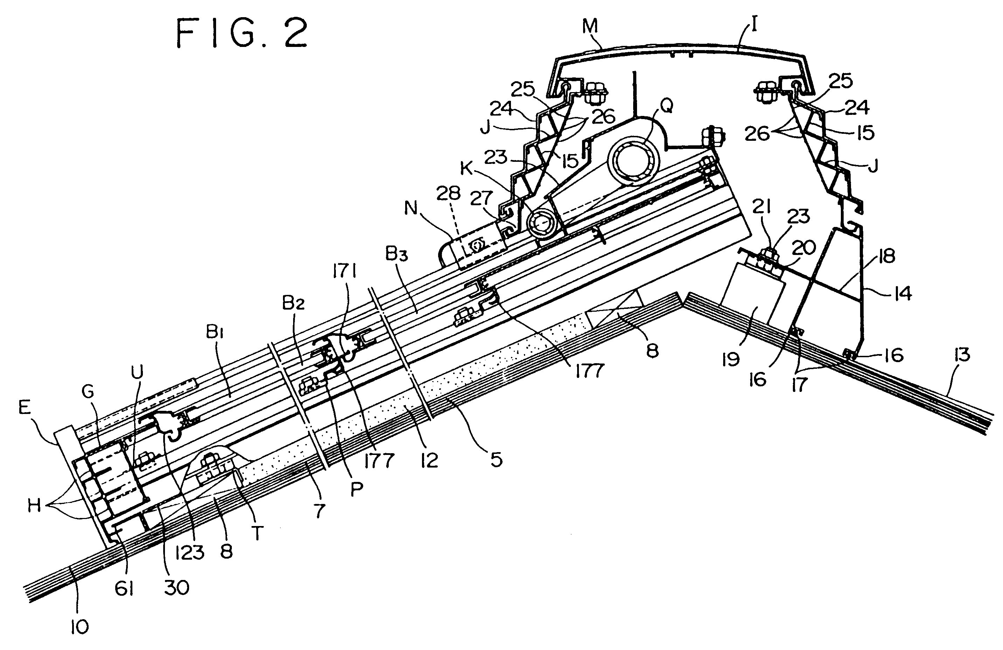

Fig. 2 is a fragmentary longitudinal sectional view showing a roof with solar energy collection equipment.

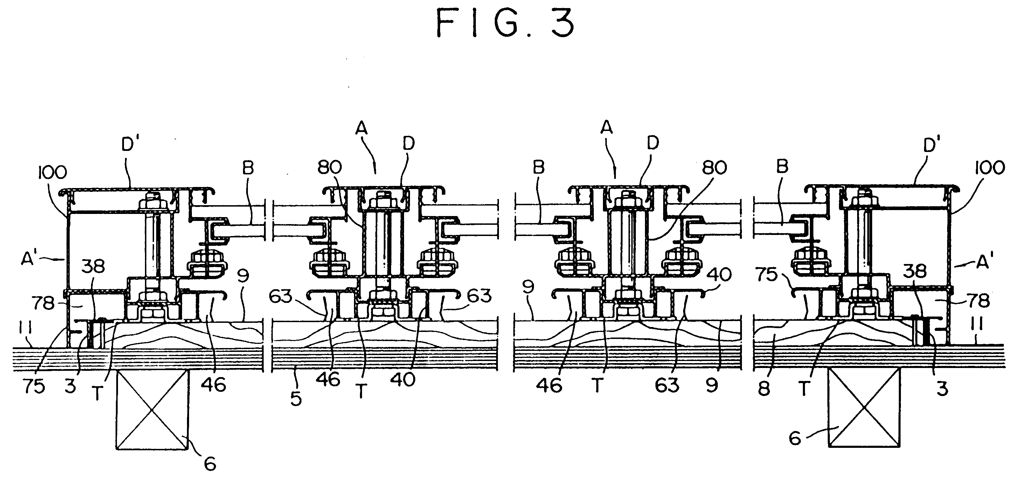

In Fig. 2, reference numeral 5 designates a roof sheathing board, which laid on rafters 6 (See Fig. 3). The sheathing board 5 is covered with a building paper 7, and a plurality of crosspieces 8 are disposed on the building paper 7 except the eaves part and the gable part as extending in parallel with the ridge part. On these crosspieces are mounted waterproof sheets 9 successively interconnected in the lateral direction by the respective intermediate connecting members A, as shown in Fig. 3.

The crosspiece 8 closest to the eaves is made wider than the other crosspieces 8.

Also, the roof members 2 consisting of eaves-side metal roof sheets 10 are provided on the eaves-side building paper 7, and the roof members 2 consisting of gable-side metal roof sheets 11 are provided on the gable-side building paper 7.

Each waterproof sheet 9 is provided at both sides with upright engaging waterproof walls 63 and at the eaves side with a downward bent eaves throating portion 61.

A heat-insulating material 12 (such as glass wool, foaming resin or the like) occupies the space between adjacent crosspieces 8 at the underside of each waterproof sheet 9.

The eaves cover G, the eaves-side light-transmitting frame B1, the intermediate light-transmitting B2 and the ridge-side light-transmitting frame B3 are successively interconnected from the eaves side toward the ridge on a plurality of waterproof sheets 9 successively interconnected in the lateral direction by the respective intermediate connecting members A.

Reference symbol P designates a light-transmitting frame fitting for mounting the light-transmitting frame B, and U a porous sheet mounted to the eaves cover G. Reference numeral 30 designates an eaves support member.

Each dustproof cap E closes an eaves-side end of each intermediate connecting member A and that of each side connecting member A', as shown in Fig. 1.

Reference symbol K designates a sprinkling pipe connected to a cleaning device Q used for melting snow on the lighting frame.

The building paper 7 laid on the sheathing board 5 on the other inclination surface of the gable roof 1 is covered with metal roof sheets 13. A ridge end face member 14 is mounted on the metal roof sheet 13 close to its ridge-side end, and the ridge side face member J having ventilating openings 15 is engaged with the upside of the ridge end face member 14. The ridge cover I is provided across a portion between an upper end of the ridge side face member J and an upper end of another edge side face member J mounted on a ridge-side end of the ridge-side lighting frame B3.

The ridge end face member 14 has waterproof material fit grooves 16 are sealed with packing 17. After the grooves 16 are sealed with the packing 17, the ridge end face member 14 is installed on the metal roof sheets 13 along the ridge-side edge thereof, and then fixed to the sheathing roof board by the use of bolts 21, which are inserted through bolt holes of a connection plate 18 and also through fittings 20 mounted to a horizontal sash member 19, and nuts 23.

Reference numeral 22 designates a ridge adjusting member mounted to the upside of the ridge-side end of the ridge-side light-transmitting frame B3, and on which the sprinkling pipe K is placed. Reference numeral 24 designates a ridge side face connecting member for closing a connecting portion of the adjacent ridge side face members J and engaging the ridge cover connecting member M, and 25 a ridge waterproof sheet having air outlets 26 and provided in engagement with the inside of the ridge side face member J.

The ridge side face member J is formed with a mounting groove 27, with which a connector member 28 is brought into engagement. Each previously mounted ridge mounting member N is fitted to the connector member 28, and thence mounted thereto by way of bolts and nuts, so that the ridge cover I is mounted to the intermediate connecting member covers D through the ridge side face member J.

Fig. 3 is a fragmentary cross-sectional view showing the roof with the solar energy collection equipment. In Fig. 3, the waterproof sheets 9 are successively interconnected in the lateral direction by bringing the engaging waterproof walls 63 of the waterproof sheets 9 into engagement with the intermediate connecting members A, and the light-transmitting frames B are covered above the waterproof sheets 9 at an interval when the opposite sides of each light-transmitting frame B front on the corresponding intermediate connecting members A.

The side connecting member A' has an inside end facing the end of the waterproof sheet 9 and also brought into engagement with the end of the light-transmitting frame B and an outside end, to which the roof sheets 2 are mounted.

The intermediate connecting member cover D is fittingly mounted to each intermediate connecting member A, and the side connecting member cover D' is fittingly mounted to each side connecting member A'.

The intermediate connecting member A is composed of a lower-part connecting member 40 for interconnecting the waterproof sheets 9 and an upper-part connecting member 80 for interconnecting the light-transmitting frames B. The side connecting member A' is composed of a lower side connecting member 75 and an upper side connecting member 100.

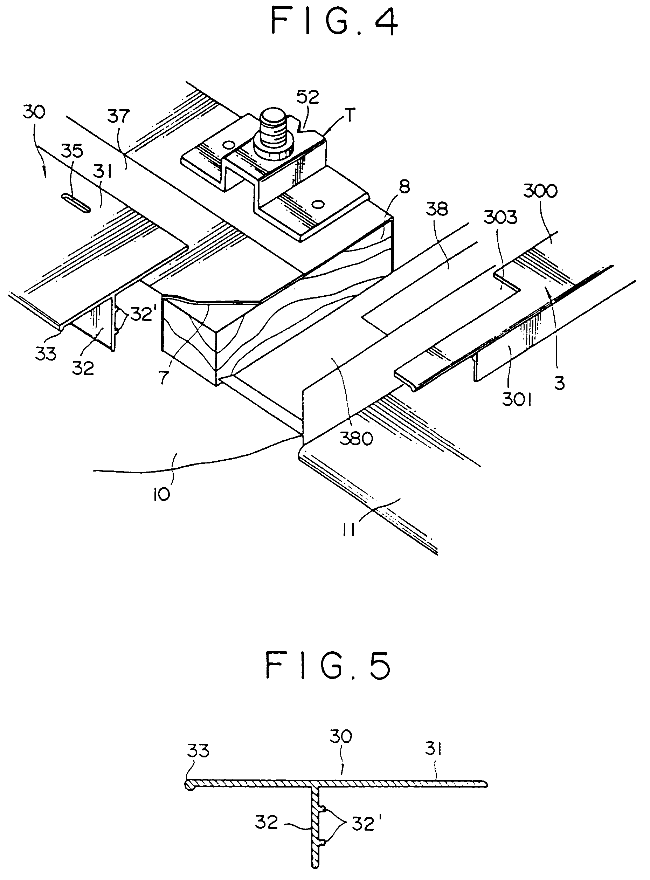

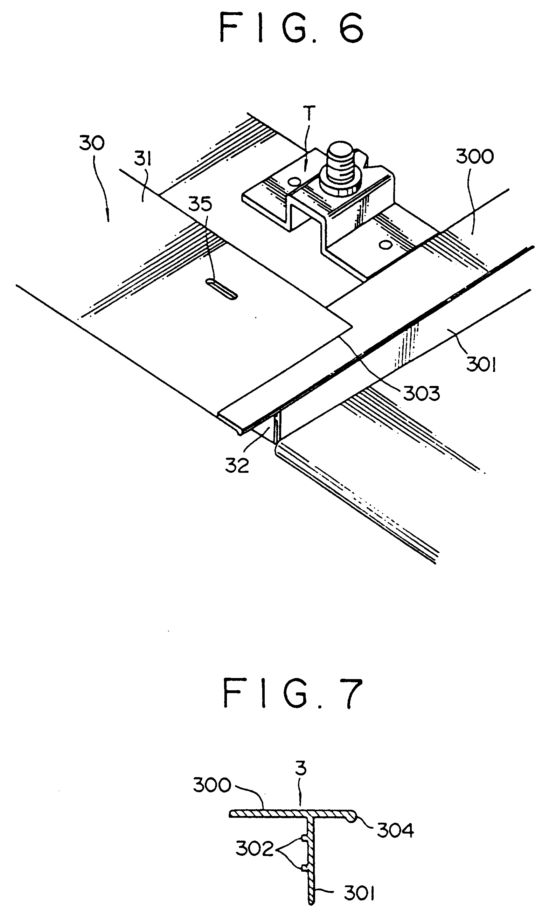

Figs. 4 and 6 respectively show a way of mounting the eaves support member 30 and a side support member 3. The eaves support member 30 has a substantially T-like shape in cross-section as shown in Fig. 5 and has a horizontal portion 31, a wall 32 extending downward from the underside of the horizontal portion 31, and several rows of throatings 32' formed on the back surface of wall 32.

A slot 35 having a long axis extending parallel to the eaves line is bored in the horizontal portion 31 of the eaves support member 30, and an eaves-side end of the horizontal portion 31 is formed into a waterproof sheet engaging portion 33.

Also, a stair-like engaging step portion 37 is formed at a ridge-side end of the eaves-side metal roof sheet 10.

The eaves support member 30 is mounted to the crosspiece 8 located closest to the eaves as follows:

Firstly, the ridge-side edge of the building paper 7 below the eaves metal sheet 10 is bent upward to be fixed to the upper side of the crosspiece 8, and then the engaging step portion 37 of the eaves-side metal roof sheet 10 is mounted to the upper side of the building paper 7 fixed to the upside of the crosspiece 8. Subsequently, the horizontal portion 31 of the eave support member 30 is mounted on the engaging step portion 37 of the eaves-side metal roof sheet 10, and then the eaves support member 30 is fixed to the crosspiece 8 closest to the eaves with a nail or the like by making use of the slot 35 provided in the horizontal portion 31 of the eaves support member 30.

Then, a connecting member fitting T having an eye measurement guide notch portion 52 is mounted to the ridge side of the crosspiece 8 closest to the eaves.

As shown in Fig. 7, the side support member 3 has a horizontal overhang surface 300, a side wall 301 shorter than the horizontal overhang surface 300 and extending downward from the underside of the horizontal overhang surface 300 at its eaves side, and several rows of throating projections 302 provided on the inner surface of the side wall 301. The horizontal overhang surface 300 has an eaves-side inner end formed with a notch 303 and an outer edge formed into a large-diameter engaging portion 304.

Also, a side portion of the gable-side metal roof sheet 11 is provided with a waterproof rising wall 38 brought into engagement with an end face of the crosspiece 8. The waterproof rising wall 38 is also formed with a fit notch portion 380 in a position corresponding to the notch 303. Then, the waterproof rising wall 38 of the gable-side metal roof sheet 11 and the side support member 3 are mounted to the upside of the end of the crosspiece 8 so that the notch 303 and the fit notch portion 380 are fitted to a ridge-side corner of the eaves support member 30.

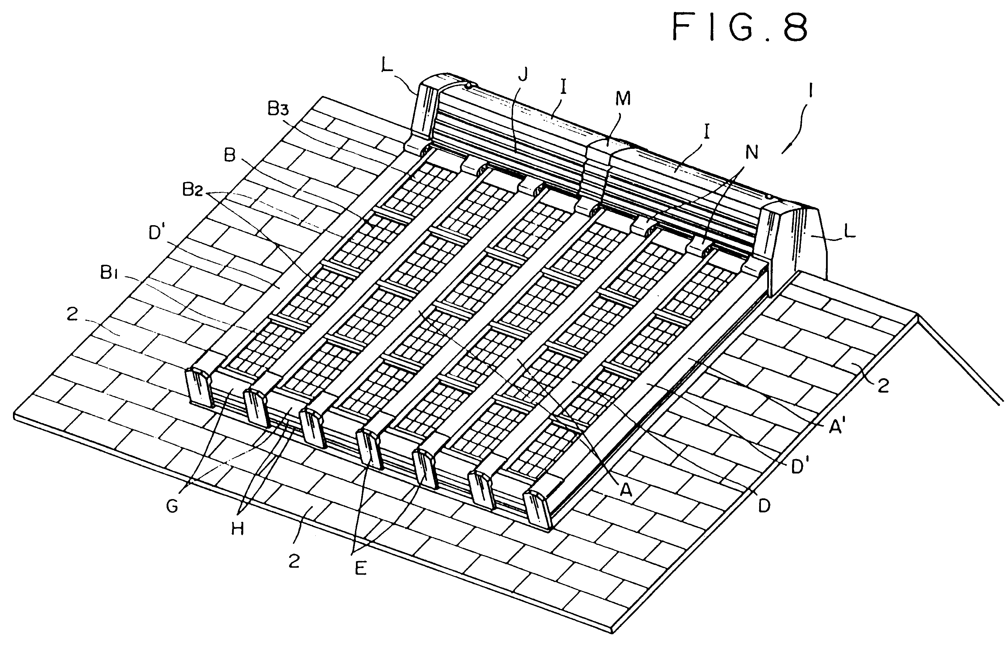

Figs. 8 through 14 show another embodiment of the roof with the solar energy collection equipment according to the present invention, respectively, wherein the gable part and the eaves part of the roof are roofed with flat roof members 2 such as asbestos cement and asphalt roofing tile.

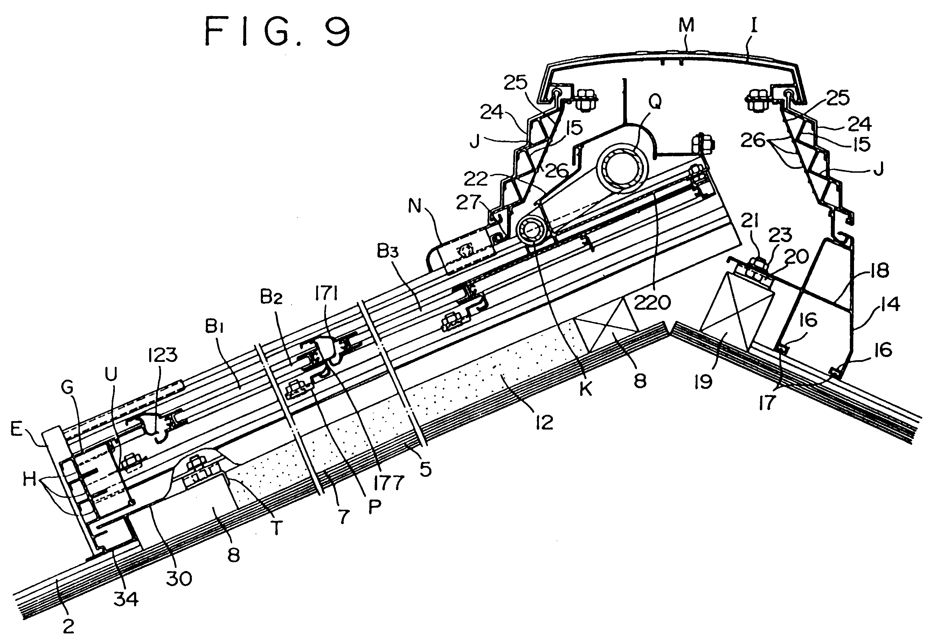

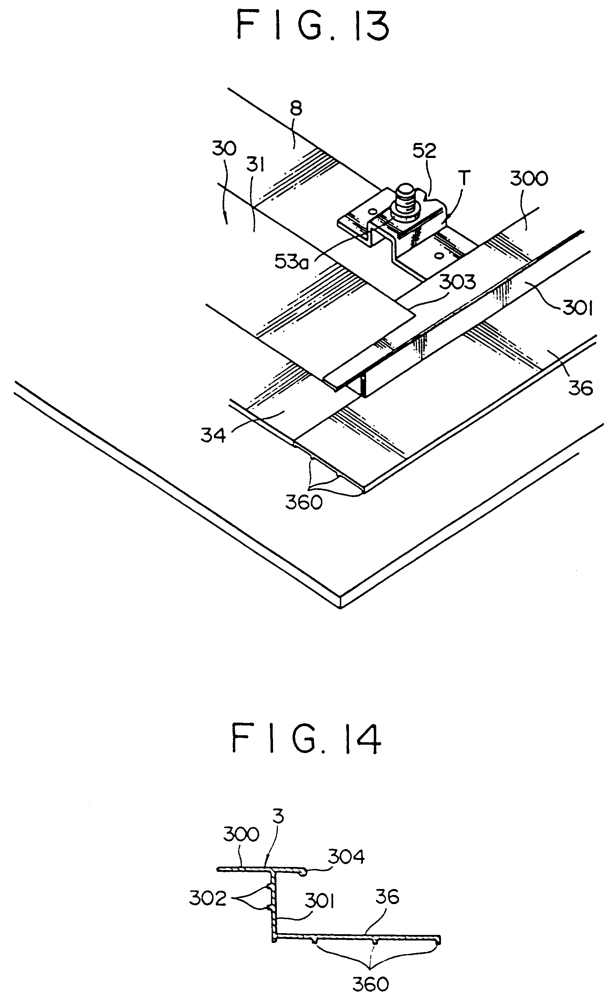

As shown in Fig. 9, the eaves support member 30 is fixed to the crosspiece 8 closest to the eaves so that the eaves support member 30 presses down the upside of each eaves-side roof member 2. As shown in Fig. 12, a front end of an eaves roof member pressing waterproof portion 34 extending from a lower end of the wall 32 of the eaves support member 30 is overhung to be located closer to the eaves than the end of the horizontal portion 31, and a plurality of throating projection rows 340 parallel to each other are formed on the underside of the front end and intermediate portions of the eaves roof member pressing waterproof portion 34, whereby the waterproof structure for the roof members 2 is constituted.

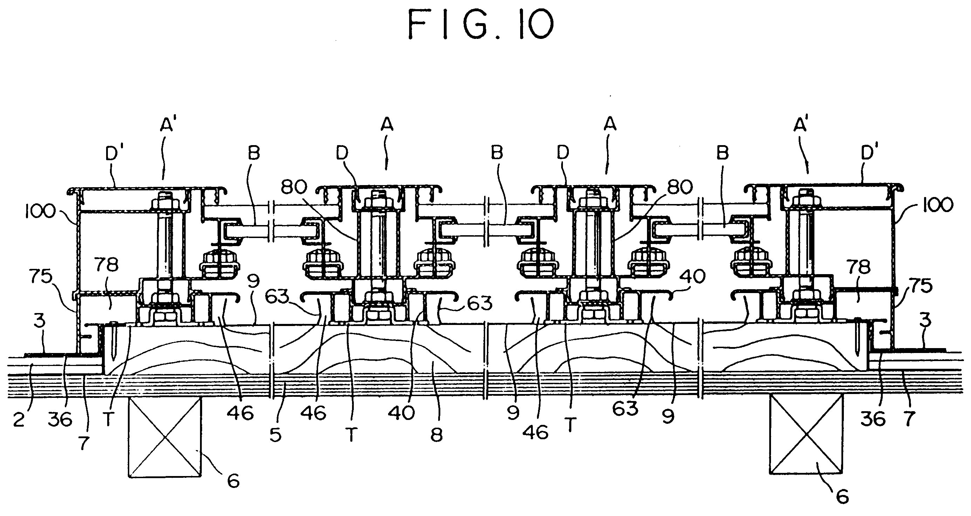

Also, as shown in Fig. 10, the side support member 3 is fixed to the crosspiece 8 so that the side support member 3 presses down the upside of each gable-side roof member 2. As shown in Fig. 14, the side support member 3 has a side roof member pressing waterproof portion 36 extending from the lower end of the side wall 301 toward the gable side such that a front end of the side roof member pressing waterproof portion 36 is overhung to be located closer to the gable than a front end of the horizontal overhang surface 300, and a plurality of throating projection rows 360 parallel to each other are formed on the underside of the front end and intermediate portions of the side roof member pressing waterproof portion 36, whereby the waterproof structure for the roof members 2 is constituted.

To mount the eaves support member 30 and the side support member 3. The ridge-side edge of the eaves-side building paper 7 is bent upward to be fixed to the upside of the crosspiece 8 located closest to the eaves, and the roof members 2 are mounted to the upside of the building paper 7. Subsequently, the horizontal portion of the eaves support member 30 is mounted to the upside of the crosspiece 8, and then the roof members 2 are pressed down by the eaves roof member pressing waterproof portion 34 from above to constitute the waterproof structure for the eaves portion.

Also, the side edge of the gable-side building paper 7 is similarly bent upward to be fixed to the side of each crosspiece 8, and the upside of the building paper 7 is covered with the roof members 2. Subsequently, the horizontal overhang surface 300 of the side support member 3 is mounted to the upper side of the side of the crosspiece 8 so as to be orthogonal to the crosspiece 8, and then, the roof members 2 are pressed down by the side roof member pressing waterproof portion 36 from above to constitute the waterproof structure for the side.

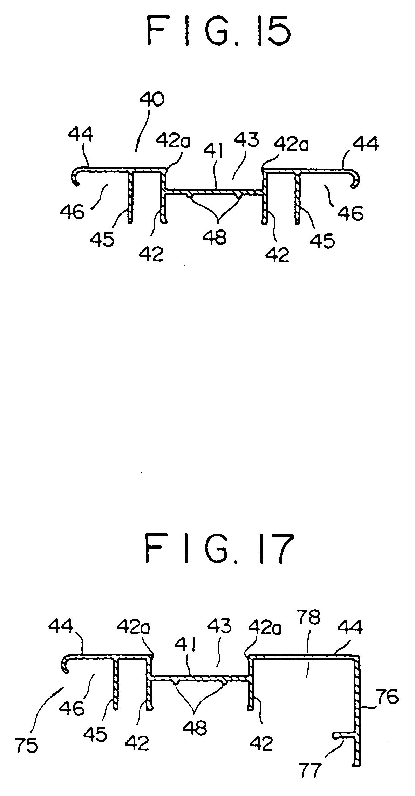

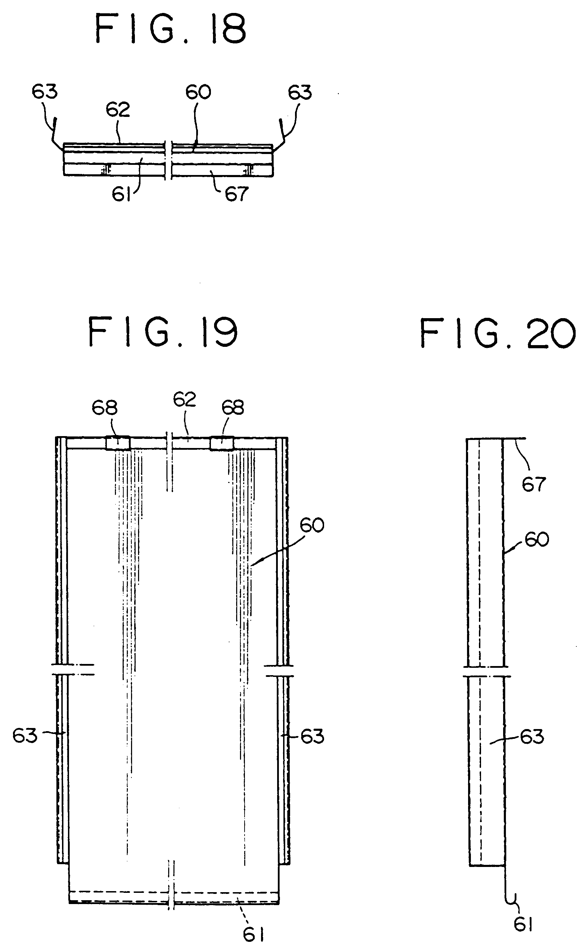

As shown in Figs. 15 and 17, the lower-part connecting member 40 of the intermediate connecting member A for interconnecting the waterproof sheets 9 has a horizontal fixing portion 41, a pair of vertical walls 42 provided at opposite ends of the horizontal fixing portion 41 as extending from the horizontal fixing portion 41 upward and downward, and engaging projections 42a respectively provided on inner side portions of upper ends of the vertical walls 42, wherein a recess 43 is defined by both vertical walls 42 and the upside of the horizontal fixing portion 41.

The lower-part connecting member 40 further has overhang portions 44 respectively projecting outward from the upper ends of the vertical walls 42 rightward and leftward and having the downward curved tips, and a downward piece 45 extending downward from the underside of each overhang portion 44, wherein a wide waterproof sheet inserting portion 46 is defined by the outer surface of the downward piece 45 and the underside of the overhang portion 44.

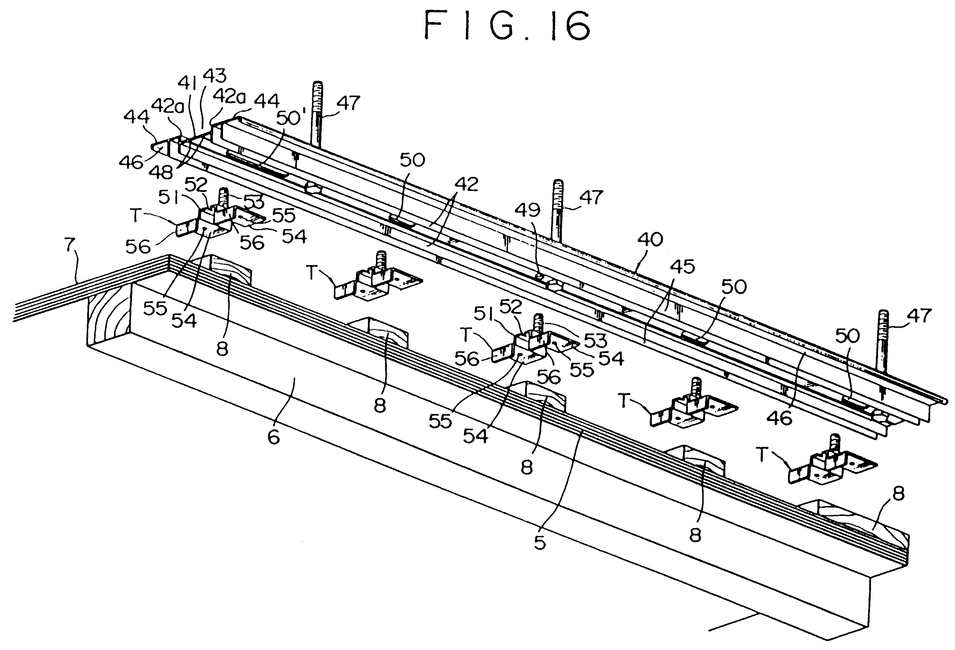

As shown in Fig. 16, the horizontal fixing portion 41 of the lower-part connecting member 40 is provided with connection bolts 47 for fixing the upper-part connecting member 80, and the underside of the horizontal fixing portion 41 is formed with contact pieces 48 mounted to the upside of the connecting member fitting T which will be described later.

A circular fixing hole 49 is bored in the substantially longitudinal center of the horizontal fixing portion 41 of the lower-part connecting member 40, and fixing slots 50 having long axes extending parallel to a line connecting the eaves and the ridge are bored at intervals in portions at the ridge side and the eaves side of the circular hole 49.

Among the slots 50 of the lower-part connecting member 40, a slot 50' closest to the ridge is formed longer in long axis than the other slots 50.

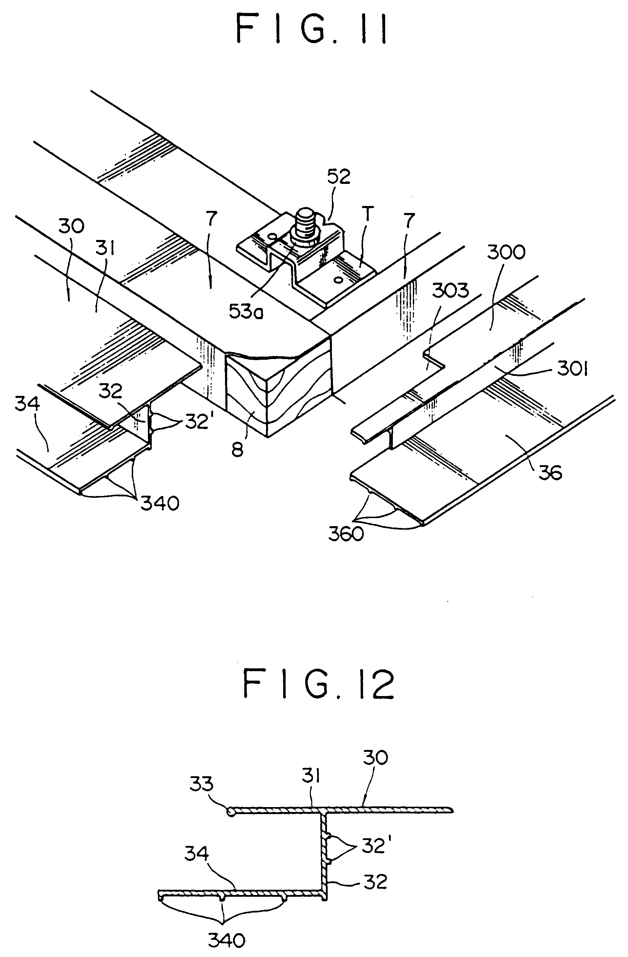

The connecting member fitting T has an upward protuberant portion 51 fitted to the underside of the horizontal fixing portion 41 of the lower-part connecting member 40, and an eye measurement guide notch portion 52 formed at one end of the protuberant portion 51. As shown in Fig. 11, a bolt 53 projects from the upside of the protuberant portion 51 and has a large-diameter portion 53a fitted into the circular hole 49 or each slot 50 of the horizontal fixing portion 41 of the lower-part connecting member 40.

The connecting member fitting T also has tongue-like pieces 54 respectively extending outward from opposite lower ends of the protuberant portion 51 rightward and leftward, a mounting hole 55 bored in each tongue-like piece 54, and a downward bent hitch portion 56 extending downward from the ridge-side edge of each tongue-like piece 54 to be brought into engagement with the ridge-side end face of the crosspiece 8.

The structure of one half of the lower side connecting member 75 of the side connecting member A' is exactly identical with that of the lower-part connecting member 40 of the intermediate connecting member A, so that the same numbers as those of the lower-part connecting member 40 are provided to the portions of the lower side connecting member 75 corresponding to those of the lower-part connecting member 40 to omit the description thereof.

Since the other half of the lower side connecting member 75 of the side connecting member A' is not provided with a waterproof sheet 9, the half of the lower side connecting member 75 is provided with a waterproof wall 76 extending downward from an end of the overhang portion 44 and contacting the upside of the roof sheet 2, and a flashing piece 77 longitudinally formed on the inside of the waterproof wall 76, as shown in Fig. 17, instead of the downward piece 45 provided on the underside of the overhang portion 44.

A downward open receiving portion 78 is defined between the vertical wall 42 and the waterproof wall 76 of the lower side connecting member 75 to receive the side support member 3 and the waterproof rising wall 38 of the gable-side metal roof sheet 11.

The connecting member fittings T are fixed to the crosspieces 8 at proper intervals with nails or the like by making use of the mounting holes 55 of the tongue-like pieces 54. The lower-part connecting members 40 and the lower side connecting member 75 are mounted to these connecting member fittings T so as to be aligned with a line connecting the eaves and the ridge. Then, the bolts 53 of the connecting member fittings T are inserted into the circular holes 49 and the slots 50, 50' of the lower-part connecting members 40 and the lower side connecting member 75 to be fastened with nuts, so that the lower-part connecting members 40 and the lower side connecting member 75 are fixed to the connecting member fittings T.

In this manner, the lower-part connecting members 40 and the lower side connecting member 75 are so mounted that they longitudinally slide about their central portions against the thermal expansion to absorb the thermal expansion (strain).

Figs. 18 through 26 show the structure of the waterproof sheet 9, respectively. As shown in Figs. 18, 19 and 20, an eaves waterproof sheet 60 has an eaves throating portion 61 provided by bending upward an eaves-side end of a flat sheet portion toward the ridge and engaged with a front end of the horizontal portion 31 of the eaves support member 30, a flashing engagement wall 62 provided by bending upward the other end of the flat sheet portion toward the eaves, and engaging waterproof walls 63, i.e., riding portions provided at opposite sides of the flat sheet portion and inserted into the corresponding waterproof sheet inserting portions 46 of the lower-part connecting member 40. Each engaging waterproof wall 63 of the eaves waterproof sheet 60 is so formed that it is bent outward and upward, thence an intermediate portion of the bent portion is bent upward and slightly inward, and a front end of the resultant bent portion is folded back outward.

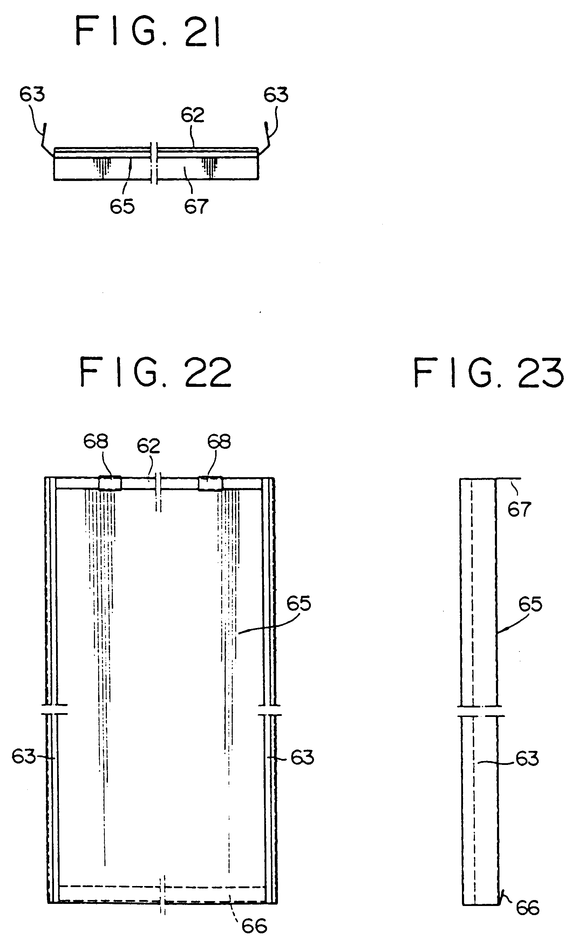

As shown in Figs. 21, 22 and 23, an intermediate waterproof sheet 65 has an engagement throating portion 66 provided at an eaves-side end of a flat sheet portion and engaged with the flashing engagement wall 62, a flashing engagement wall 62 provided at the other end of the flat sheet portion similarly to the case of the eaves waterproof sheet 60, and engaging waterproof walls 63, i.e., rising portions provided at opposite sides of the flat sheet portion and inserted into the corresponding waterproof sheet inserting portions 46 of the lower-part connecting member 40 similarly to the case of the eaves waterproof sheet 60.

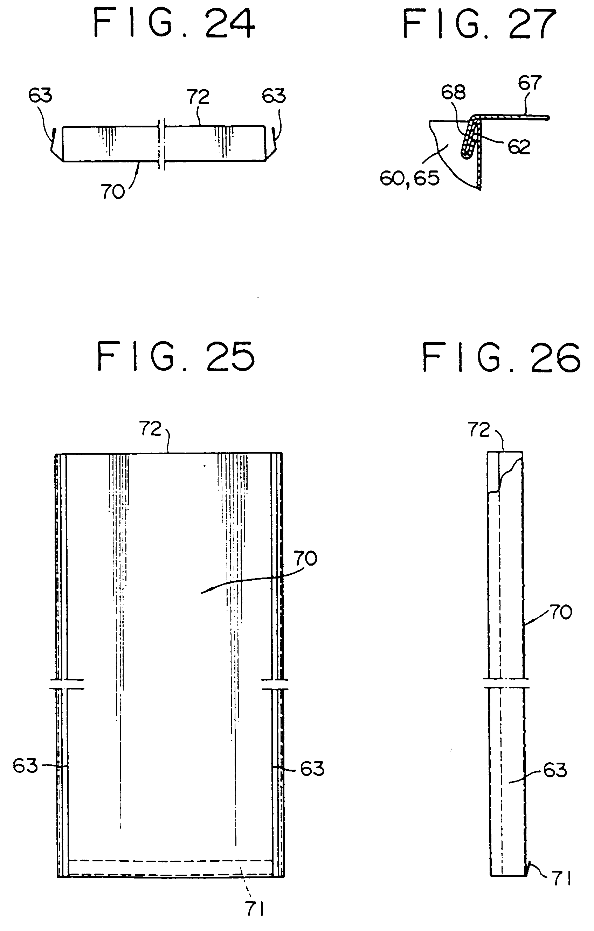

As shown in Fig. 27, a crosspiece engaging member 67 extending downward is provided along a ridge-side edge of each of the eaves waterproof sheet 60 and the intermediate waterproof sheet 65 and mounted to the flashing engagement wall 62 with a proper number of caulking portions 68 formed at the upper end of the crosspiece engaging member 67.

As shown in Figs. 24, 25 and 26, a ridge waterproof sheet 70 has an engagement throating portion 71 provided at an eaves-side end of a flat sheet portion and engaged with the flashing engagement wall 62 of the intermediate waterproof sheet 65, an upward vertically bent waterproof wall 72 provided at the other end of the flat sheet portion, and engaging waterproof walls 63, i.e., rising portions provided at opposite sides of the flat sheet portion and inserted into the corresponding waterproof sheet inserting portions 46 of the lower-part connecting member 40 similarly to the cases of the eaves waterproof sheet 60 and the intermediate waterproof sheet 65.

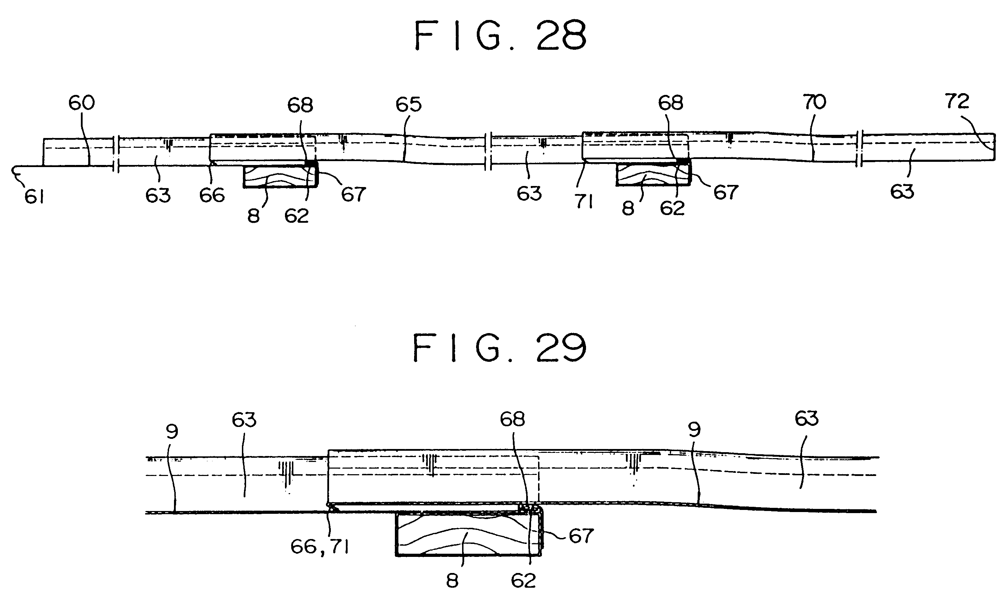

Figs. 28 and 29 show the connection of each waterproof sheet 9. The eaves throating portion 61 of the eaves waterproof sheet 60 is mounted to the sheathing roof board toward the eaves, and the edge of the intermediate waterproof sheet 65 at the side of the engagement throating portion 66 is overlaid on the edge of the eaves waterproof sheet 60 at the side of the flashing engagement wall 62.

Also, the edge of the ridge waterproof sheet 70 at the side of the engagement throating portion 71 is overlaid on the edge of the intermediate waterproof sheet 65 at the side of the flashing engagement wall 62 to be connected to each other.

Then, the crosspiece engaging member 67 of the eaves waterproof sheet 60 and that of the intermediate waterproof sheet 65 are fastened to the upper ends of the crosspieces 8 to prevent the eaves waterproof sheet 60 and the intermediate waterproof sheet 65 from sliding down.

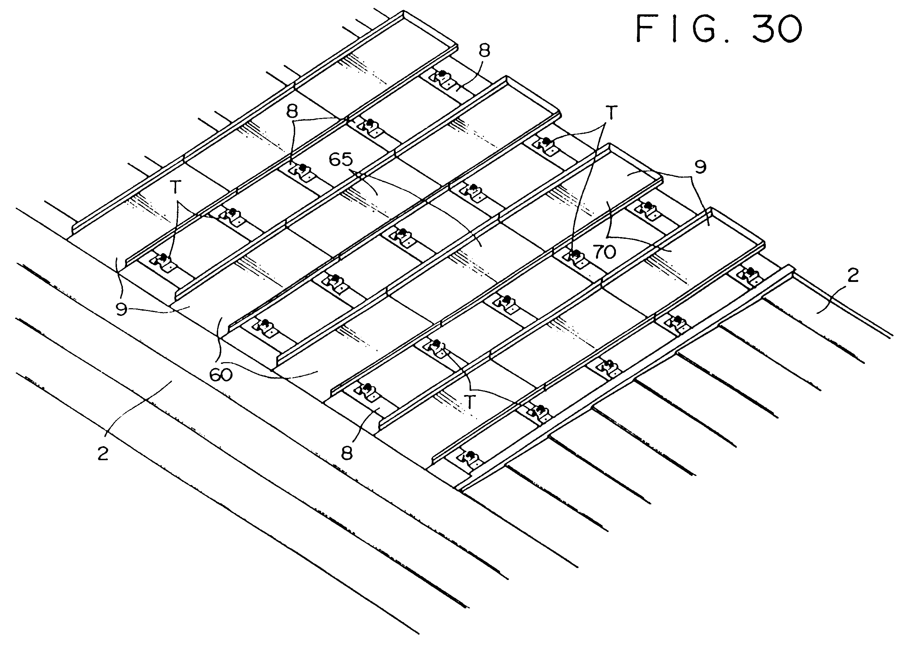

Figs. 30 through 32 show a way of mounting the waterproof sheets 9, the lower-part connecting members 40 and the lower side connecting member 75, respectively.

Firstly, as shown in Fig. 30, the eaves waterproof sheets 60, the intermediate waterproof sheets 65 and the ridge waterproof sheets 70 are arranged in the mentioned order between the connecting member fittings T, T mounted to the respective crosspieces 8.

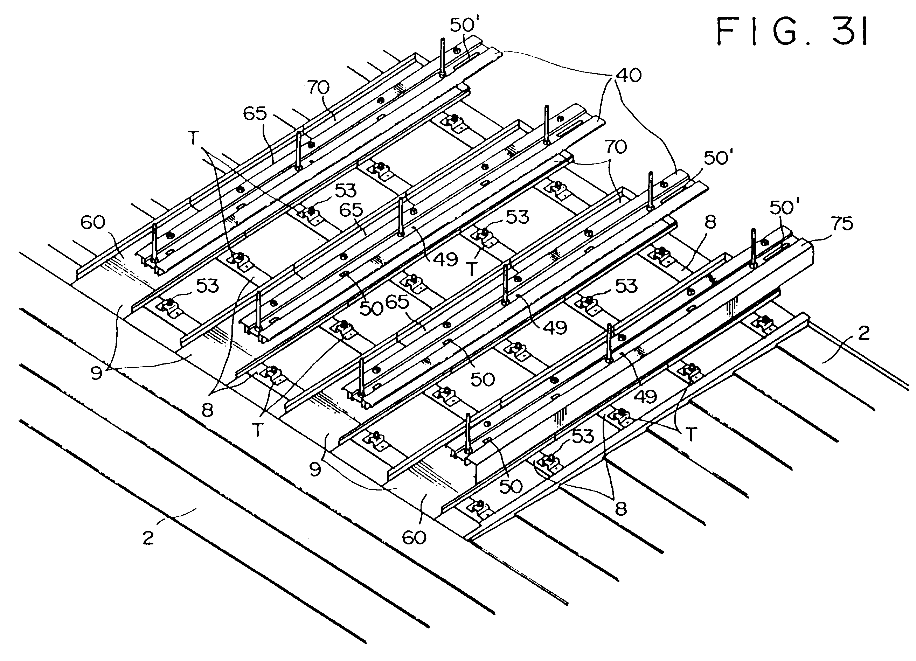

Secondly, as shown in Fig. 31, the lower-part connecting members 40 and the lower side connecting member 75 are mounted on the connecting member fittings T so as to the aligned with the line connecting the ridge and the eaves, and the bolts 53 of the connecting member fittings T are inserted into the circular holes 49 and the slots 50, 50' of the lower-part connecting members 40 and of the lower side connecting member 75.

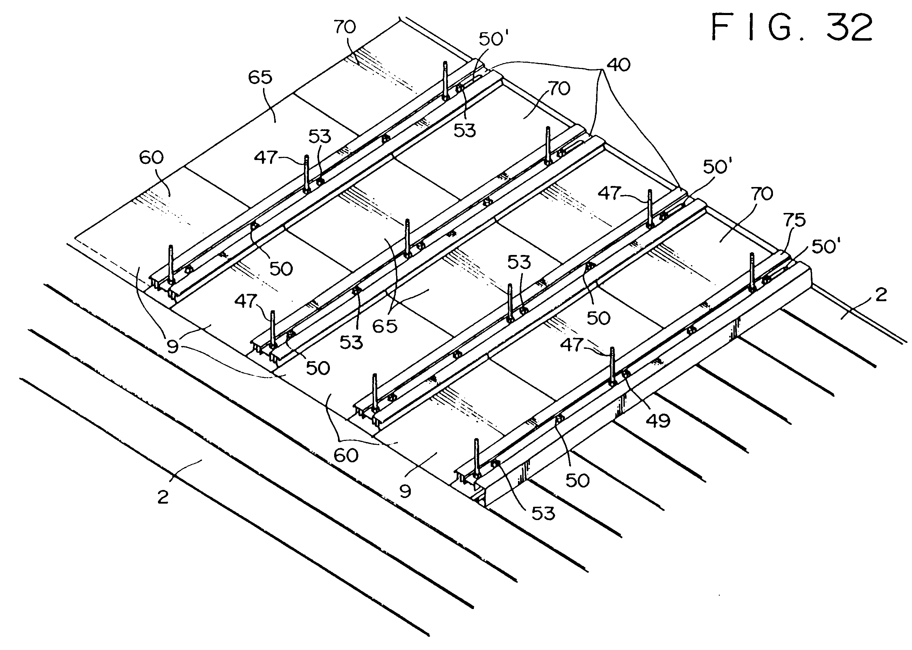

Subsequently, as shown in Fig. 32, the nuts are screwed onto the bolts 53 of the connecting member fittings T through washers (not shown), so that the lower-part connecting members 40 and the lower side connecting member 75 are mounted to the connecting member fittings T, and the waterproof sheets 9 are interconnected between the adjacent lower-part connecting members 40 and between the lower-part connecting member 40 and the lower side connecting member 75.

By so doing, the engaging waterproof walls 63 of the eaves waterproof sheets 60, the intermediate waterproof sheets 65 and the ridge waterproof sheets 75 are respectively located within the corresponding waterproof sheet inserting portions 46 of the lower-part connecting members 40 and the lower side connecting member 75, and the waterproof rising wall 38 of the gable-side metal roof sheet 11 is fitted within the receiving portion 78 of the lower side connecting member 75 (see Fig. 3).

The rainwater leaking out to the waterproof sheets 9 flows down along the waterproof sheets 9 from the ridge toward the eaves and is drained from the eaves part to the outside without flowing into the underside of the roof members 2. Also, the eaves support member 30 prevents the rainwater from flowing into the inside, and besides, shuts out the submergence due to a spout of rainwater.

Further, the flashing piece 77 of the lower side connecting member 75 prevents the rainwater from flowing inside. Since the side end of each gable-side roof member 2 and the side support member 3 are received in the receiving portion 78 of the lower side connecting member 75, even if the rainwater flows inside, the rainwater is drained to the outside without flowing into the inside by the side support member 3 to thereby for a waterproof structure for the eaves part and the side.

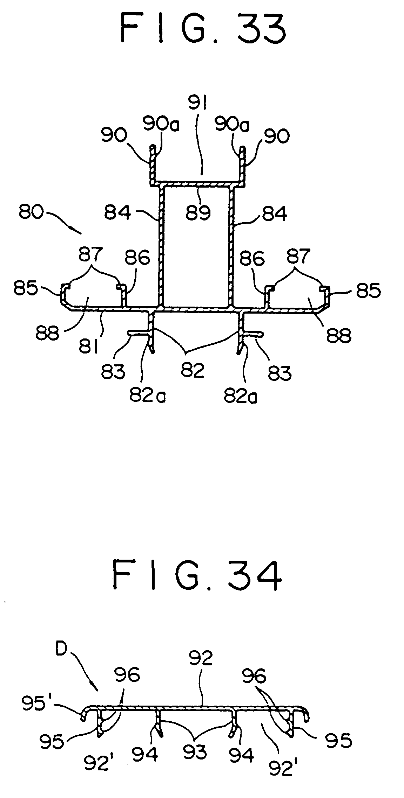

As shown in Fig. 33, the upper-part connecting member 80 of the intermediate connecting member a for interconnecting the lighting frames B has a pair of walls 82 extending downward from the underside of a horizontal base plate 81 and inserted into the fitting recess 43 of the lower-part connecting member 40. A lower end of each wall 82 is inclined inward and an engaging portion 82a is formed on the outside surface of each wall 82 to be engaged with the engaging protuberance portion 42a of the lower-part connecting member 40. A horizontal contact piece 83 is provided on the center of the outside surface of each wall 82 to be mounted to the overhang portion 44 of the lower-part connecting member 40.

Two vertical pieces 84 are provided at an interval on the upside of the horizontal base plate 81 of the upper-part connecting member 80 as being located close to the center thereof, and two end rising walls 85 are respectively provided on opposite edges of the horizontal base plate 81.

An intermediate rising wall 86 is provided between each vertical piece 84 and the corresponding end rising wall 85 of the upper-part connecting member 80, and projections 87 are respectively provided at the upper ends of the end rising wall 85 and the intermediate rising wall 86 and inwardly confronting each other, wherein a wide fit groove 88 open upward is defined by the end rising wall 85, the intermediate rising wall 86 and the horizontal base plate 81.

A horizontal receiving piece 89 is provided across a portion between the upper ends of the vertical pieces 84 of the upper-part connecting member 80, and engaging projection pieces 90 having engaging projections 90a provided on the inner surfaces of end portions are provided on opposite edges of the horizontal receiving piece 89, wherein an upward opening portion 91 is defined by the horizontal receiving piece 89 and the engaging projection pieces 90.

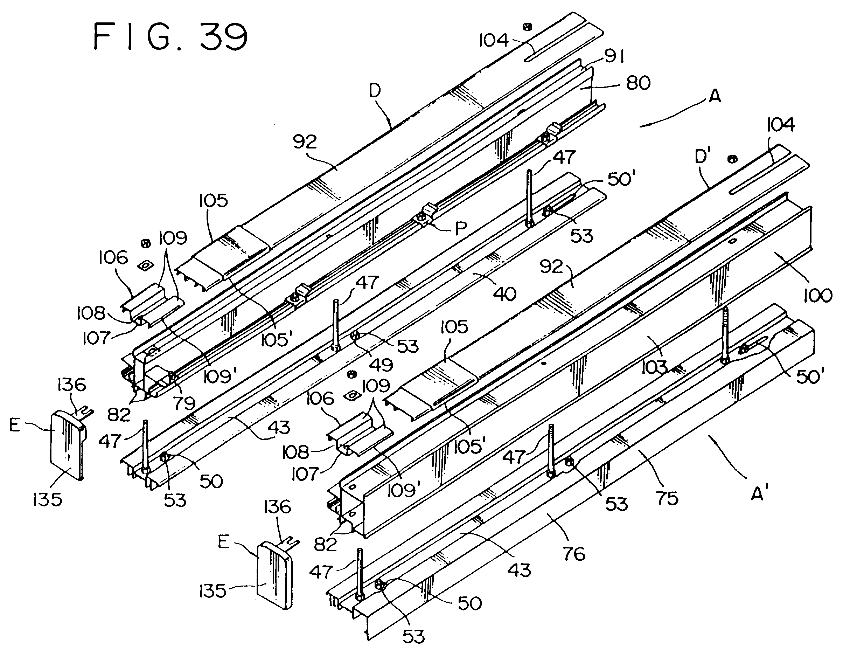

Also, a portion of the horizontal base plate 81 and a portion of the horizontal receiving piece 89 corresponding to a portion between the vertical pieces 84 of the upper-part connecting member 80 are provided with fixing holes (see Fig. 39), through which the connection bolts 47 of the lower-part connecting member 40 are inserted.

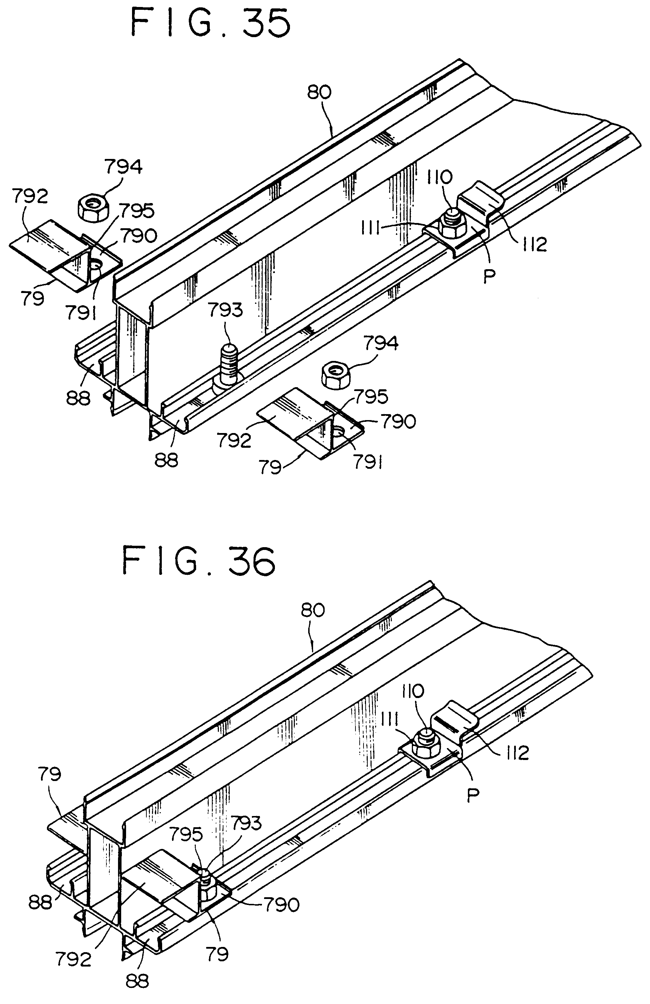

Further, as shown in Figs. 35 and 36, eaves cover engaging support members 79 are mounted to eaves-side opposite side portions of the upper-part connecting member 80.

Each eaves cover engaging support member 79 has a fixing piece 790 provided with a bolt hole 791, an inverse L-shaped engaging piece 792 extending from the upside of one end of the fixing piece 792 toward the eaves, and an engaging projection 795 formed at the ridge-side upper end of the engaging piece 792. The eaves cover engaging support members 79 are mounted to the eaves-side opposite side portions of the upper-part connecting member 80 by inserting bolts 793 having head portions fitted to the fitting grooves 88 of the upper-part connecting member 80 through the corresponding bolt holes 791 and screwing the nuts 794 onto the bolt 793.

Further, the light-transmitting frame fitting P is mounted to each side portion of the upper-part connecting member 80 at a proper interval so as to cover the fitting groove 88, and fixed by a bolt 110 and a nut 111 by making use of the fitting groove 88 of the upper-part connecting member 80.

The light-transmitting frame fitting P has an engaging projection piece 112 formed at its upper portion and opening to the ridge, and a fitting engagement piece 177 formed on an upper horizontal sash member 170 of the light-transmitting frame B is fitted from above to the engaging projection piece 112 of the light-transmitting frame fitting P (see Fig. 2).

As shown in Fig. 34, the intermediate connecting member cover D mounted to the upper-part connecting member 80 has a horizontal cover portion 92, engaging curved portions 95' formed by bending downward the opposite ends of the horizontal cover portion 92, and engaging leg portions 93 provided at an interval to be close to the center of the underside of the horizontal cover portion 92 and inserted into the upward open portion 91 of the upper-part connecting member 80.

The tip of each engaging leg portion 93 of the intermediate connecting member cover D is bent slightly inward, and the outside surface of each engaging leg portion 93 is formed with an engaging portion 94 engaged with the engaging projection 90a of the upper-part connecting member 80.

The intermediate connecting member cover D also has throating pieces 95 extending downward from the underside of the horizontal cover portion 92 and located close the opposite ends thereof, and a plurality of throating projection rows 96 formed on the inside surface of each throating piece 95, wherein a wide upper-part adjusting space 92' is defined below each side of the horizontal cover portion 92.

Since the structure of one half of the upper side connecting member 100 of the side connecting member A' mounted to the lower side connecting member 75 is exactly identical with that of the intermediate connecting member A, the same numbers as those of the intermediate connecting member A are provided to the portions of the upper side connecting member 100 corresponding to those of the intermediate connecting member A to omit the description thereof.

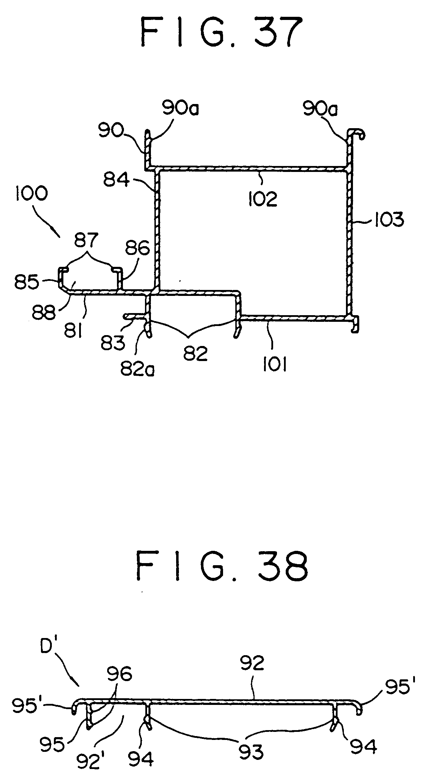

Since no light-transmitting B is mounted to the other half of the upper side connecting member 100 of the side connecting member A', the other half of the upper side connecting member is not provided with the vertical piece 84, the end rising wall 85 and the intermediate rising wall 86, but has a lower-part connecting member contact piece 101 formed by extending sidewise the horizontal contact piece 83 and mounted to the upside of the overhang portion 44 of the lower side connecting member 75, and a horizontal portion 102 formed by extending outward the horizontal receiving portion 89, as shown in Fig. 37.

The upper side connecting member 100 also has a side end face vertical wall 103 extending upward from the tip of the lower-part connecting member contact piece 101 through the tip of the horizontal portion, and an engaging projection 90a provided on the inner surface of the vertical wall 103 and close to its upper end. The upper end of the vertical wall 103 is bent outward.

Also, the lighting frame fitting P is mounted to the fitting groove 88 of the upper side connecting member 100 of the side connecting member A', similarly to the case of the upper-part connecting member 80.

Since the structure of one half of the side connecting member cover D' mounted to the upper side connecting member 100 is exactly identical with that of the intermediate connecting member cover D, the same numbers as those of the intermediate connecting member cover D are provided to the portions of the side connecting member cover D' corresponding to those of the intermediate connecting member cover D to omit the description thereof.

Since the other half of the side connecting member cover D' is not provided with the throating piece 95 at the same side as the horizontal portion 102 corresponding to the upper side connecting member 100, as shown in Fig.38, the horizontal cover portion 92 is slightly extended to cover the horizontal portion 102 of the upper side connecting member 100.

As shown in Fig. 39, a ridge-side end of the horizontal cover portion 92 of each of the intermediate connecting member cover D and the side connecting member cover D' is formed with a fitting insertion notch 104 extending along its longitudinal direction, and a longitudinally slidable cover 105 is fitted to the upside of the ridge-side end of the horizontal cover portion 92.

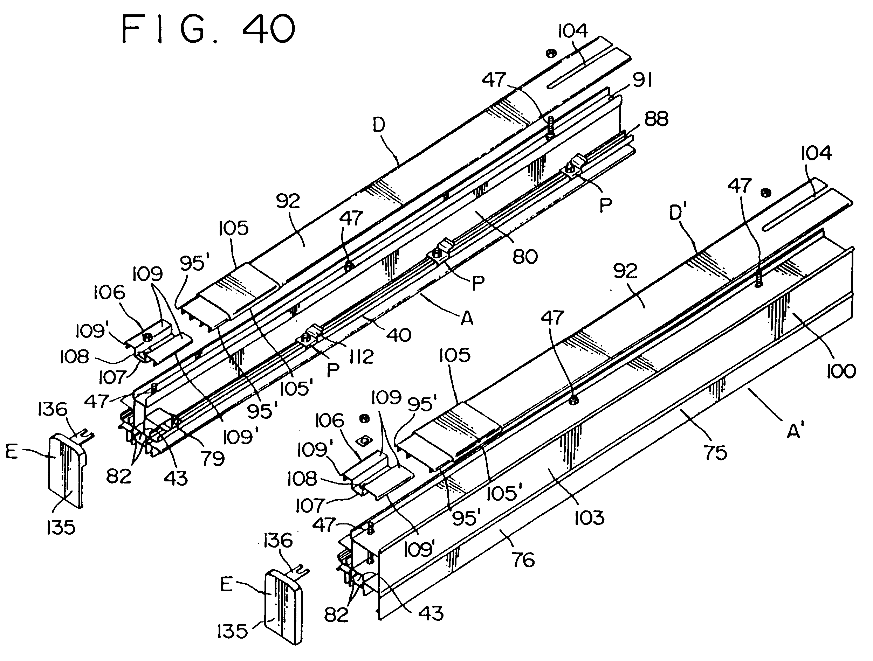

As shown in Figs. 39 and 40, the upper-part connecting member 80 and the upper side connecting member 100 are respectively mounted to the lower-part connecting member 40 and the lower side connecting member 75 as follows. Firstly, the insertion pieces 82 of the upper-part connecting member 80 and those of the upper side connecting member 100 are respectively inserted into the recess 43 of the lower-part connecting member 40 and that of the lower side connecting member 75, and the engaging portions 82a formed on both the insertion pieces 82 of the upper-part connecting member 80 and those of the upper side connecting member 100 are respectively brought into engagement with the engaging projections 42a of the lower-part connecting member 40 and those of the lower side connecting member 75, while the connection bolts 47 of the lower-part connecting member 40 and those of the lower side connecting member 75 are respectively inserted into the corresponding fixing holes bored in both the horizontal base plate 81 and the horizontal receiving piece 89 of the upper-part connecting member 80 and those of the upper side connecting member 100.

Subsequently, the nuts are screwed onto the connection bolts 47 projecting into both the upward open portion 91 of the upper-part connecting member 80 and that of the upper side connecting member 100 through washers to fix the upper-part connecting member 80 and the upper side connecting member 100 to the lower-part connecting member 40 and the lower side connecting member 75 mounted to the connecting member fittings T.

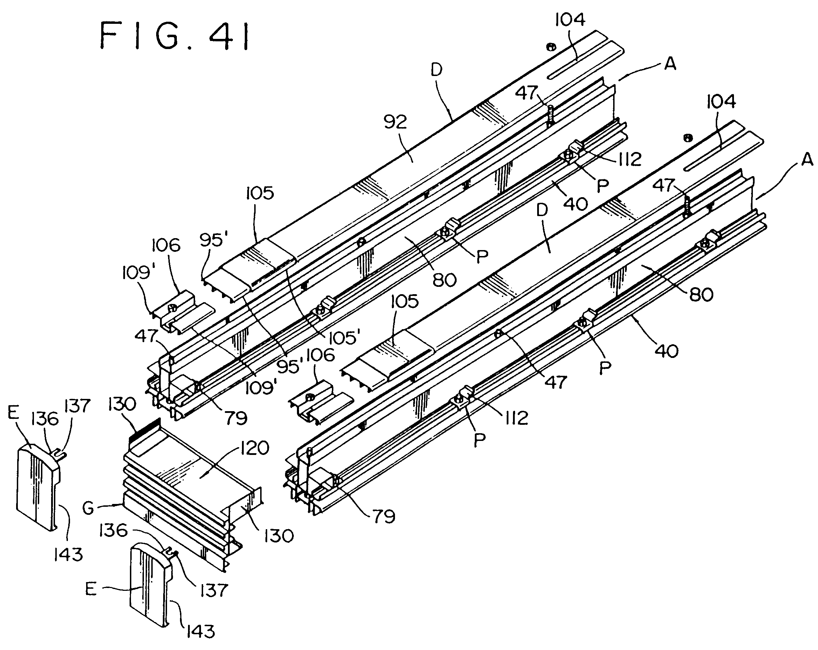

Then, as shown in Figs. 41 through 45, since the eaves cover G is mounted as being fittingly engaged with the eaves cover engaging support members 79 mounted to the eaves portions of the upper-part connecting members 80, the error of the width of the sheathing roof board is satisfactorily absorbed to facilitate the detachment when the eaves part is inspected and cleaned, and besides, the eaves cover G is firmly fastened without getting out of the upper-part connecting members 80 for the wind pressure.

Eaves fit plates 106 are respectively mounted to the upside of both the eaves-side end of the upper-part connecting member 80 of the intermediate connecting member A and that of the upper side connecting member 100 of the side connecting member A'. Each eaves fit plate 106 is provided on its opposite ends with engaging curved portions 109 having the same shape as the engaging curved portions 95' of the intermediate connecting member cover D. The eaves fit plates 106 have downward projecting central recess grooves 107 fitted into both the upward open portion 91 of the upper-part connecting member 80 and that of the upper side connecting member 100, and the connection bolt 47 of the lower-part connecting member 40 and that of the lower side connecting member 75 are inserted into the slots 108 bored in the bottom surface of the recess grooves 107.

After the dustproof caps E are respectively mounted to both the eaves end face of the intermediate connecting member A and that of the side connecting member A', the intermediate connecting member cover D is fittingly mounted to the upper-part connecting member 80 of the intermediate connecting member A, and the side connecting member cover D' is fittingly mounted to the upper side connecting member 100 of the side connecting member A'. Then, the connection bolt 47 of the lower-part connecting member 40 and that of the side connecting member 75 which are closest to the ridge are respectively inserted into the fitting insertion notch 104 of the intermediate connecting member cover D and that of the side connecting member cover D', and the nuts are screwed onto the connection bolts 47 to fix the intermediate connecting member cover D and the side connecting member cover D' to the intermediate connecting member A and the side connecting member A' respectively.

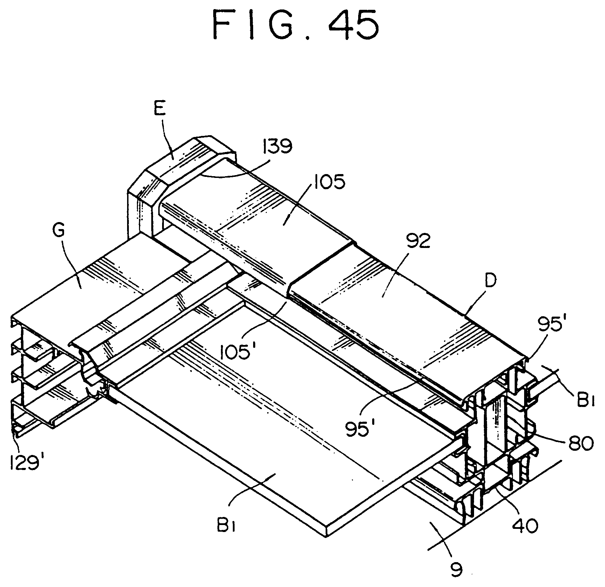

The slide covers 105 are mounted to both the intermediate connecting member cover D and the side connecting member cover D' in such manner that the engaging projection pieces 105' provided at the opposite ends of the slide covers 105 are slidably engaged with both the engaging curved portions 95' of the intermediate connecting member cover D and those of the side connecting member cover D'. The engaging projection pieces 105' of the slide covers 105 engagingly slide along the engaging curved portions 95' of the connecting member covers D and D' and thence slide along the engaging curved portions 109 of the eaves fit plates 106 to be fitted into the corresponding cavities 139 of the dustproof caps E, so that the eaves-side end of both the intermediate connecting member cover D and the side connecting member cover D' are respectively fixed to both the intermediate connecting member A and each side connecting member A'. As a result, as shown in Fig. 45, the eaves part of an integral structure is provided by one eaves bolt 47, and besides, the eaves part is formed into a wind-pressure tight structure which facilitates the detachment and is excellent in external appearance without appearing any bolt fitting on the surface.

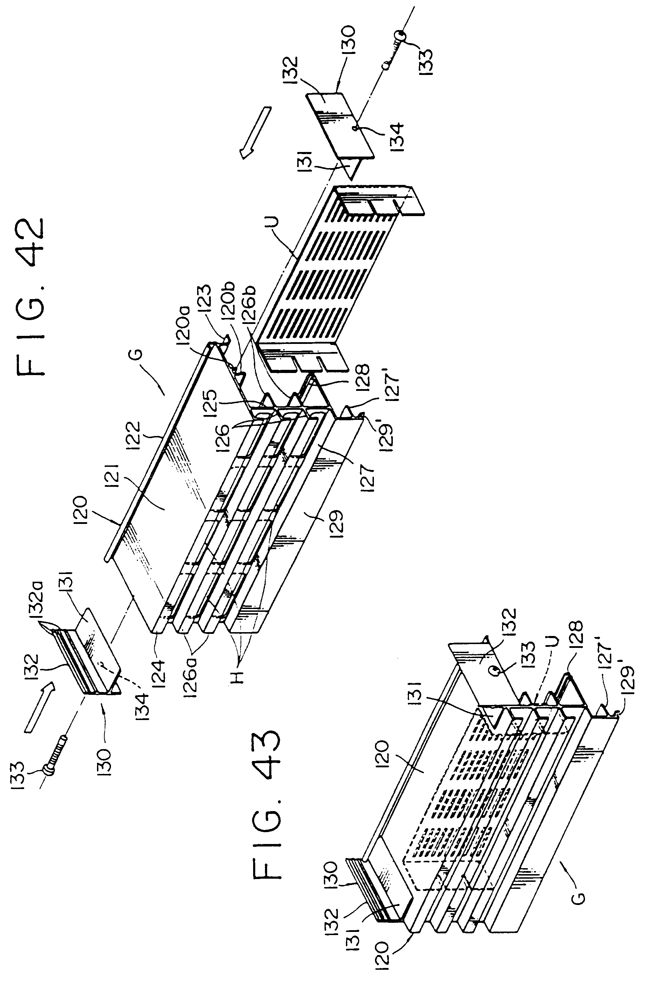

Fig. 41 shows the mounting of the eaves cover G to a portion between the intermediate connecting members A and A. As shown in Fig. 42, the eaves cover G has a cover body 120, a porous sheet U and flashing waterproof walls 130.

The cover body 120 of the eaves cover G has a horizontal top surface 121, a flashing projection piece 122 uprightly provided at an upper portion of a ridge-side edge of the horizontal top surface 121, and a throating guide piece 123 provided at a lower portion of the ridge-side edge of the horizontal top surface 121 and downward bent toward the ridge.

The cover body 120 further has a downward bent throating piece 124 provided at an eaves-side edge of the horizontal top surface 121, a dustproof wall 125 extending downward from a slightly inner portion of the throating piece 124, two parallel sheets 126 crossing the dustproof wall 125 and provided at an interval, a downward bent throating piece 126a provided at an eaves-side edge of each parallel sheet 126, an upward bent flashing projection piece 126b provided at a ridge-side edge of each parallel sheet 126, and eaves intake ports H bored in three portions of the dustproof wall 125 partitioned by two parallel sheets 126.

The cover body 120 further has a support sheet 127 provided at a lower end of the dustproof wall 125 and overhanging toward the ridge and also toward the eaves, an upward open porous sheet support groove 128 provided at a ridge-side edge of the support sheet 127, and a downward bent portion 129 provided at an eaves-side edge of the support sheet 127.

Further, a downward open engagement recess groove 129' is formed on the inner surface of a lower end of the downward bent portion 129, and an inward throating piece 127' is provided above the groove 129'.

The flashing waterproof wall 130 mounted to the cover body 120 has a waterproof fixing wall 132 provided at an outside end of a mounting piece 131 mounted to the horizontal top surface 121 of the cover body 120, a plurality of waterproof projection rows 132a formed on the inner surface of the waterproof fixing wall 132, and a fixing hole 134 bored in a lower portion of the waterproof fixing wall 132.

The porous sheet U is mounted parallel to the dustproof wall 125 of the cover body 120 by making use of both the porous sheet support groove 128 formed on the support sheet 127 of the cover body 120 and an eaves-side end of a projection piece 120b provided on the underside of the cover body 120 to form a screw receiving groove 120a. Thereafter, the mounting piece 131 of the flashing waterproof wall 130 is mounted to the horizontal top surface 121 of the cover body 120, and a tapping screw 133 is mounted to both the fixing hole 134 and the screw receiving groove 120a to mount the flashing waterproof walls 130 to the opposite sides of the cover body 120, so that the eaves cover G is assembled as shown in Fig. 43.

Subsequently, the cover body 120 of the eaves cover G is disposed at a portion between the intermediate connecting members A and A, and then the dustproof caps E and E are respectively mounted to the eaves-side end faces of the intermediate connecting members A and A, so that the eaves cover G is mounted to the portion between the intermediate connecting members A and A in such manner that the opposite sides of the eaves cover G are fittingly engaged with the dustproof caps E and E.

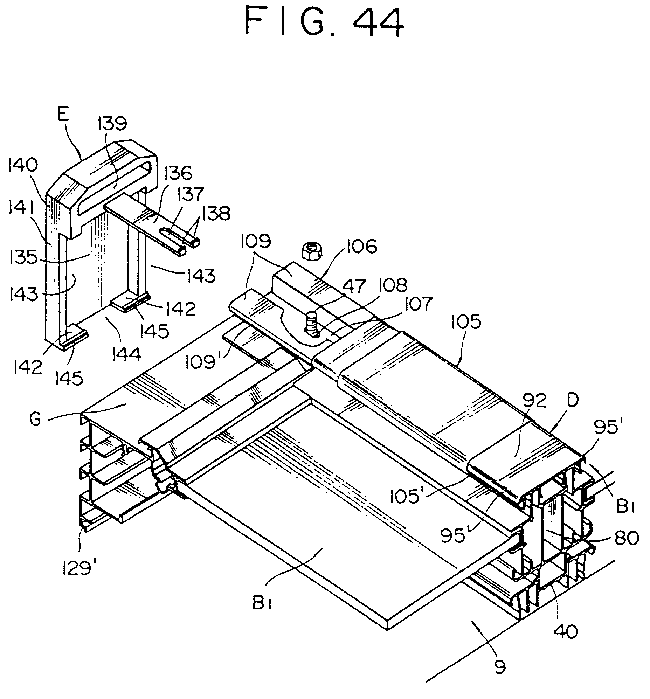

As shown in Fig. 44, each of the dustproof caps E for respectively closing the eaves-side end faces of the intermediate connecting members A and those of the side connecting members A' has a dustproof plate 135, a mounting projection piece 136 projecting from a back-side upper portion of the dustproof plate 135 toward the ridge, an elongate insertion notch 137 formed in the center of the tip of the mounting projection piece 136, and upward bent portions 138 provided at the opposite sides of the insertion notch 137.

The dustproof cap E further has a cavity 139 defined above the mounting projection piece 136 at the back side of the dustproof plate 135 in order to insert the eaves-side end of the slide cover 105 therein, wide side walls 140 provided on upper portions of back-side opposite edges of the dustproof plate 135, and slightly narrow side walls 141 provided below the wide side walls 140.

The dustproof cap E further has bent edges 142 projecting from the back-side lower edges of the dustproof plate 135 toward the ridge, an intake drain hole 144 defined between the bent edges 142 and an engaging projection portion 145 provided on the upside of an end of each bent edge 142 in order to be engaged with the engaging recess groove 129' of the cover body 120.

Also, a fit recess portion 143 is defined between each wide side wall 140 and each bent edge 142 in order to insert the eaves-side front face of the eaves cover G therein.

The tip of the connection bolt 47 of each lower connecting member 40 projecting from the upside of the eaves fit plate 106 is inserted into the insertion notch 137 formed on the mounting projection piece 136 of the dustproof plate 135, and then the nut is screwed onto the connection bolt 47 through a washer, so that the dustproof cap E is mounted to the eaves-side end face of each intermediate connecting member A and to that of each side connecting member A', as shown in Fig. 45.

Subsequently, the slide cover 105 mounted to the intermediate connecting member cover D is made to slide along the engaging bent portions 109 formed on the opposite ends of the eaves fit plate 106 to cover the eaves fit plate 106 with the slide cover 105.

In this connection, the eaves-side end of the slide cover 105 is fitted into the cavity 139 of the dustproof cap E.

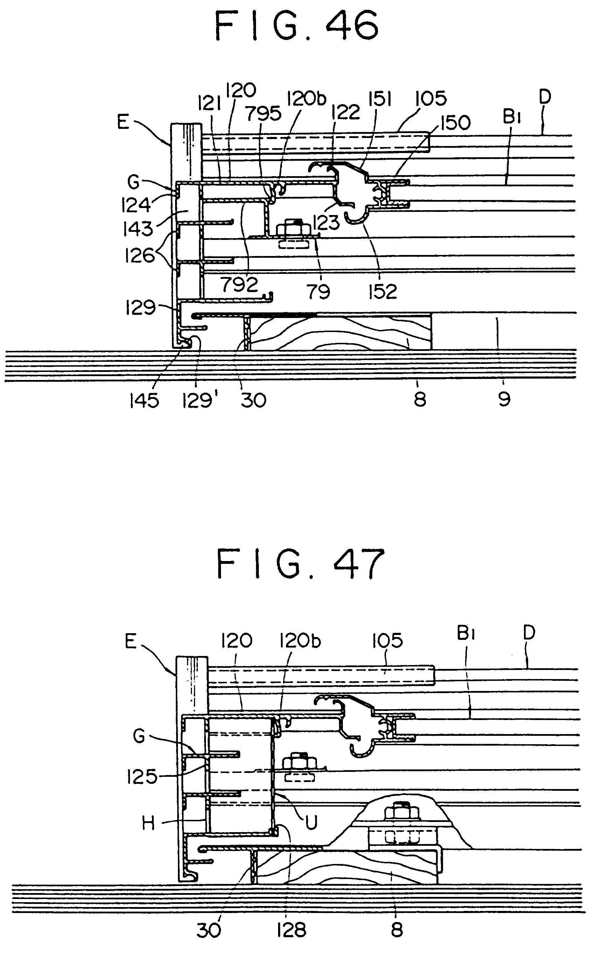

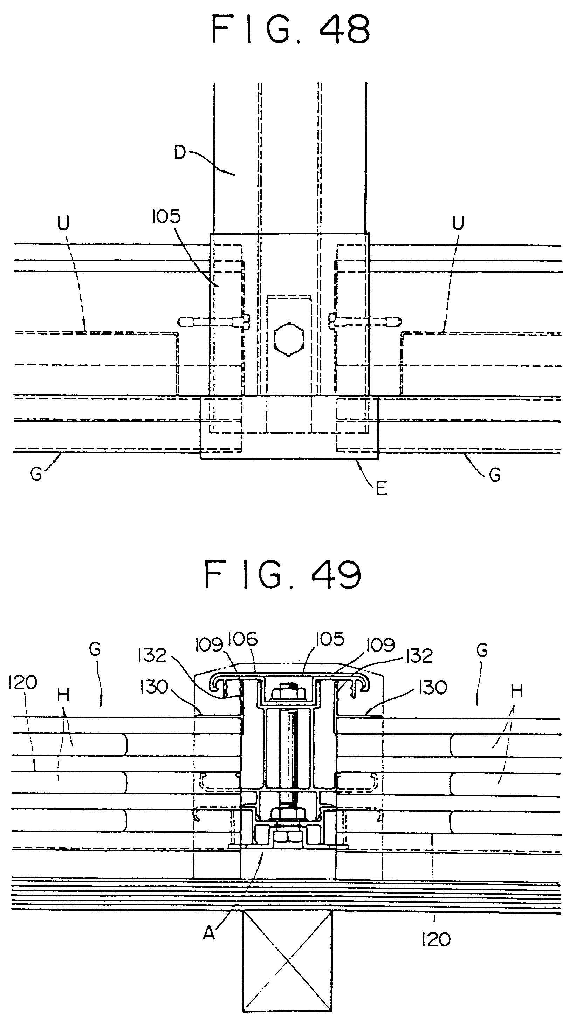

Figs. 46 through 49 show a way of mounting the eaves covers G to the connecting members A and A', respectively. The eaves cover G is placed at the eaves-side end of each intermediate connecting member A. The upright flashing projection piece 122 of the cover body 120 is located below a cover portion 151 formed on the lower horizontal sash member 150 of the eaves-side lighting frame B1, and the throating guide piece 123 of the cover body 120 is located above a curved waterproof gutter 152 formed on the lower horizontal sash member 150 of the eaves-side lighting frame B1.

The eaves cover G is fitted from outward of the eaves support member 30 mounted on the sheathing board of the roof, then the engaging projection 795 of the eaves cover engaging support member 79 is engaged with the lower end of the projection piece 120b of the cover body 120, and the tip of the engaging piece 792 is inserted below the horizontal top surface 121. Then, the dustproof cap E is mounted to the eaves-side end face of each of the connecting members A and A', and then the ends of downward bent throating pieces 124 and 126a and the downward bent portion 129 of the cover body 120 of the eaves cover G are fitted into the fitting recess 143 of the dustproof cap E.

The eaves fit plate 106 is mounted to the upside of the eaves-side end of each of the connecting members A and A', and the upper portions of the waterproof fixing walls 132 of the flashing waterproof walls 130 of the eaves cover G are inserted below the opposite portions of the eaves fit plate 106. Then, the porous sheet U is mounted inward of the dustproof wall 125 in such manner that the lower end of the porous sheet U is inserted into the porous sheet support groove 128 of the cover body 120 and the upper end thereof is engaged with the eaves-side face of the projection piece 120b of the cover body 120.

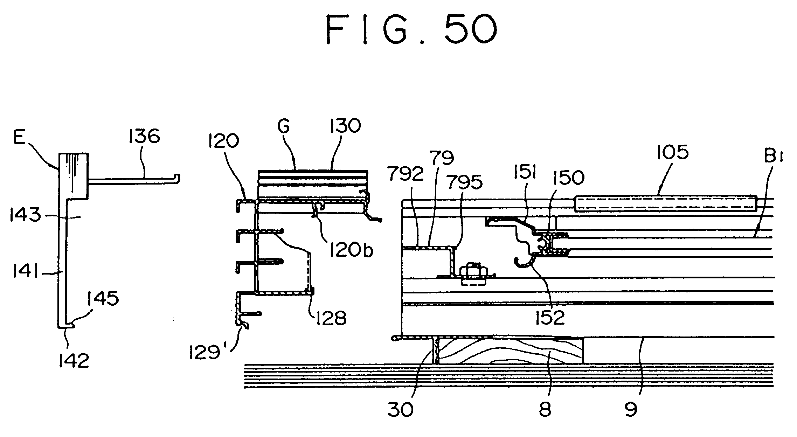

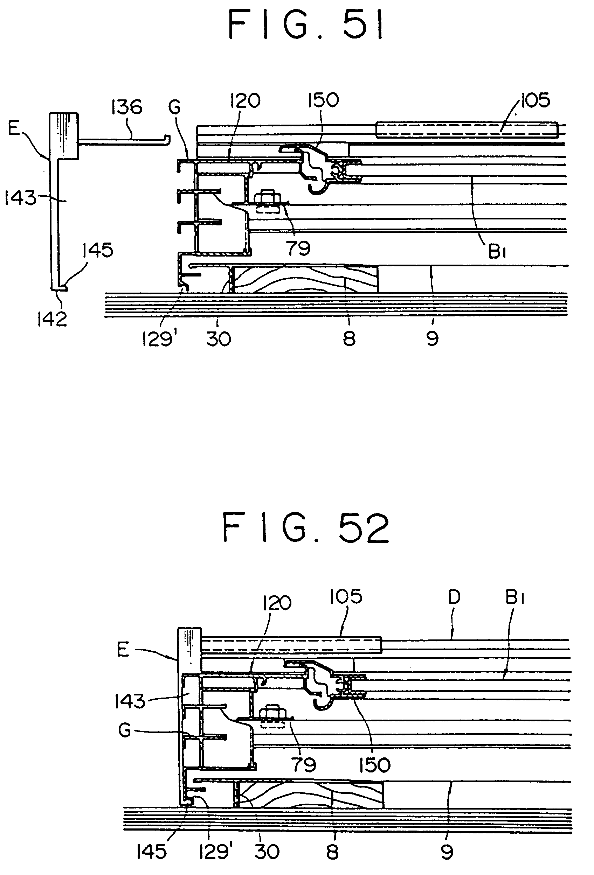

Also, the eaves covers G are respectively disposed at the eaves portions between the adjacent intermediate connecting members A and A and also between the intermediate connecting member A and the side connecting member A', and the dustproof caps E are mounted to the eaves-side end faces of the intermediate connecting members A and the side connecting members A' in such manner that the engaging projection 145 of each dustproof cap E is engaged with the engaging recess groove 129' of the cover body 120, as shown in Figs. 50 through 52. In this way, the eaves covers G are engaged with the connecting members A and A' by the dustproof caps E so as to prevent the opposite ends of the eaves covers G from getting out of their places.

As described in the foregoing, the eaves end face is firmly connected to each member because of the engaging fit structure without appearing any bolt on the surface. Further, the eaves front face is formed into an integral structure which facilitates the removal and also provides a complete flashing.

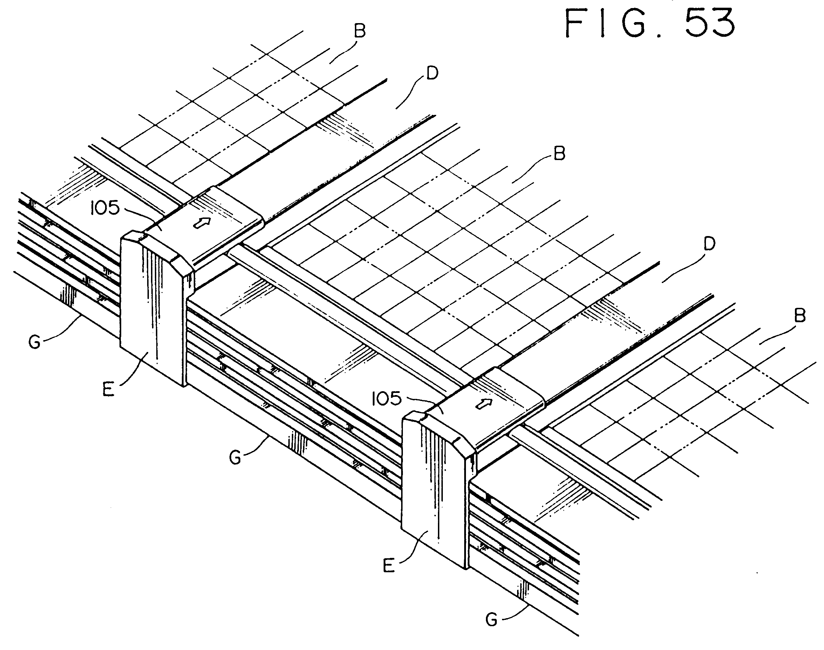

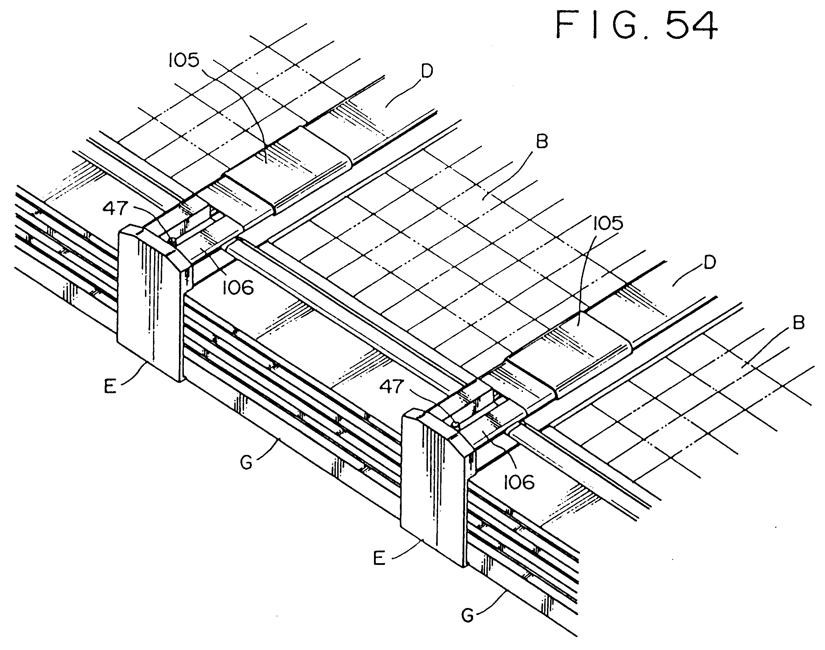

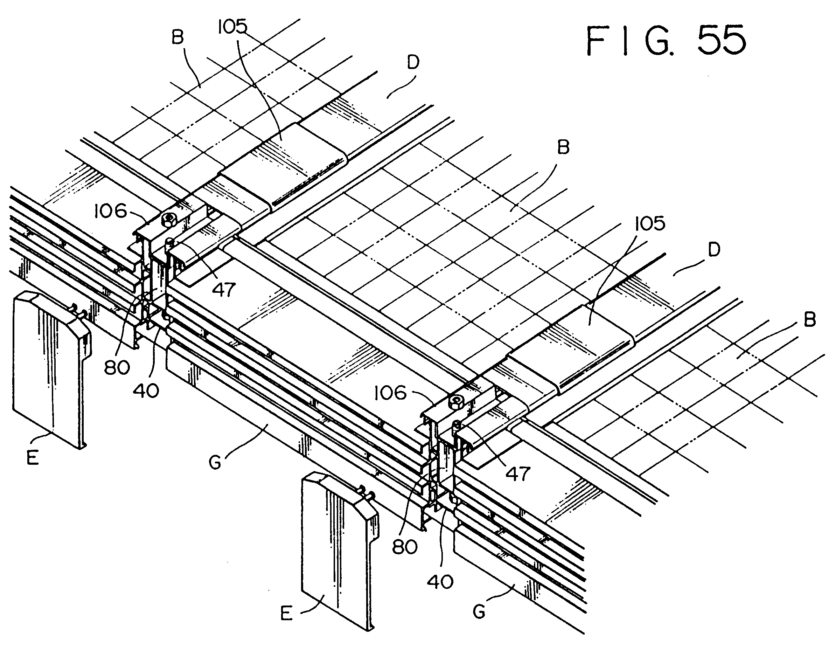

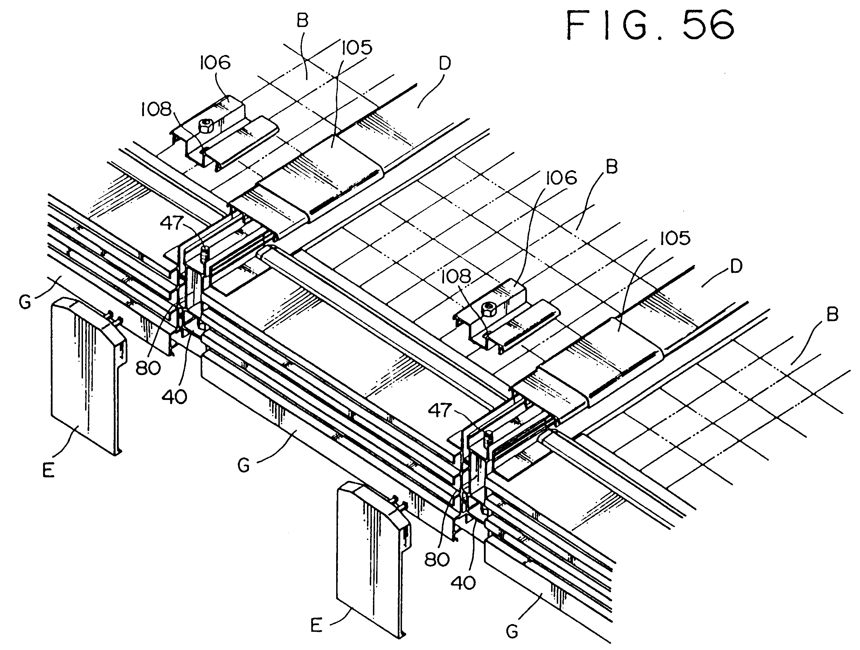

In case of inspecting the eaves part, the eaves covers G are removed in inverse order to the above procedures. More specifically, the slide covers 105 are made to slide toward the direction indicated by an arrow in Fig. 53, then the connection bolts 47 are exposed to the outside as shown in Fig. 54, and then the nuts are loosened to remove the dustproof caps E as shown in Fig. 55. Then, the eaves fit plates 106 are removed as shown in Fig. 56, so that the eaves covers G are easily removed without tampering with the connecting member covers D and D'.

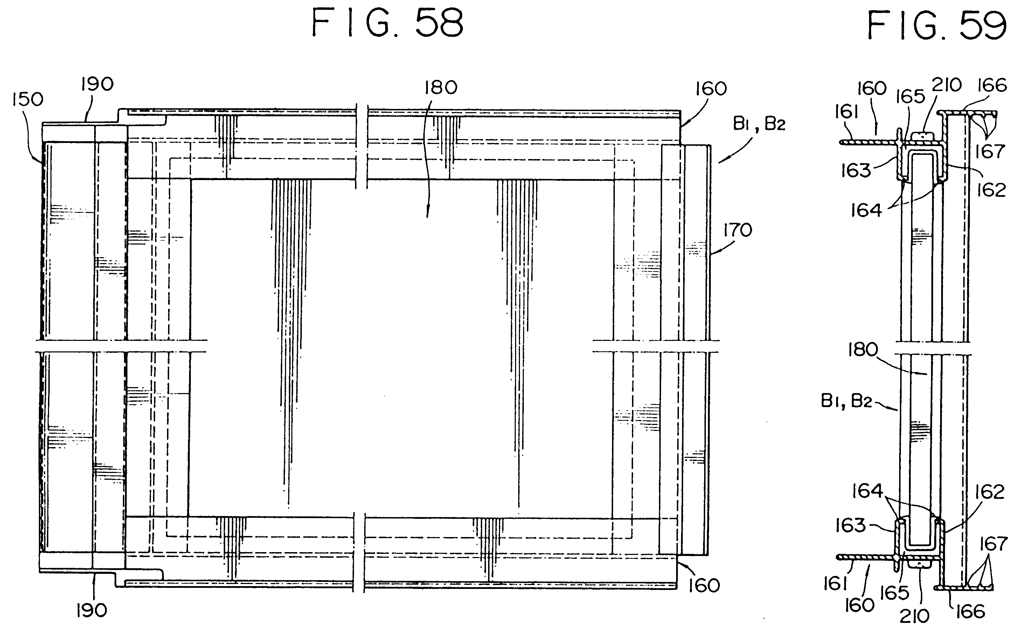

As shown in Fig. 58, each of the eaves-side light-transmitting frame B1 and the intermediate light-transmitting frame B2 has opposite longitudinal sash members 160, an upper horizontal sash member 170, a lower horizontal sash member 150, and a light-transmitting sheet 180 made of glass and acrylic or the like and fitted to the inside of a square frame constituted by the above-mentioned respective sash members.

As shown in Fig. 59, each longitudinal sash member 160 has a vertical insertion wall 161 having a lower end inserted into the fit groove 88 of each upper-part connecting member 80, an upper horizontal wing piece 162 extending leftward and rightward from an upper end of the vertical insertion wall 161, a lower horizontal wing piece 163 extending from an intermediate portion of the vertical insertion wall 161, and inward confronting bent projections 164 provided on inside ends of the upper and lower horizontal wing pieces 162 and 163, wherein a light-transmitting sheet insertion groove 165 is defined by the vertical insertion wall 161, an inside portion of the upper horizontal wing piece 162 and an inside portion of the lower horizontal wing piece 163.

Each longitudinal sash member 160 further has a vertical fit piece 166 extending upward from an outside end of the upper horizontal wing piece 162 to be fitted to the underside of the connecting member cover D, and a plurality of longitudinal throating projection rows 167 formed on the inside of the vertical fit piece 166.

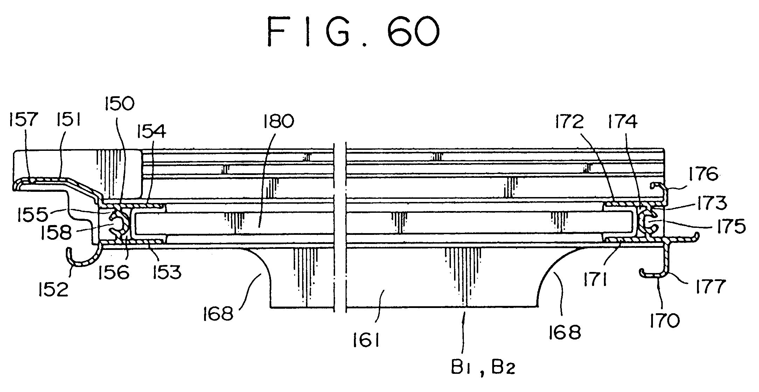

The ridge- and the eaves-side lower end of the vertical insertion wall 210 are formed with notches 168 (see Fig. 60) fitted to the light-transmitting frame fittings P and defining side air outlets.

As shown in Fig. 60, the upper horizontal sash member 170 has a light-transmitting sheet mounting wing piece 171, a light-transmitting sheet keep piece 172 provided above and parallel to the wing piece 171, and a connection wall 173 provided in parallel to a ridge-side edge of the light-transmitting sheet 180 and interconnecting the wing piece 171 and the keep piece 172, wherein a light-transmitting insertion groove 174 is defined by the wing piece 171, an eaves-side portion of the keep piece 172 and the connection wall 173.

The connection wall 173 of the upper horizontal sash member has a longitudinal hollow curved portion 175 having a groove open to the ridge-side, and the light-transmitting sheet keep piece 172 has an engaging bent portion 176 formed by bending upward a ridge-side edge of the keep piece 172 and further bending the resultant bent edge toward the eaves. The light-transmitting sheet mounting wing piece 171 has a fitting engagement piece 177 extending downward from an underside portion of the wing piece 171 and bent toward the eaves and further upward.

The lower horizontal sash member 150 has a light-transmitting sheet mounting wing piece 153, a light-transmitting sheet keep piece 154 provided above and parallel to the wing piece 153, and a connection wall 155 provided parallel to a eaves-side edge of the light-transmitting sheet 180 and interconnecting the wing piece 153 and the keep piece 154, wherein a light-transmitting sheet insertion groove 156 is defined by the wing piece 153, a ridge-side portion of the keep piece 154 and the connection wall 155.

The connection wall 155 of the lower horizontal sash member has a longitudinal hollow curved portion 158 having a groove open to the ridge-side, and the wing piece 153 has a curved waterproof gutter 152 extending downward from an eaves-side edge of the wing piece 153.

The light-transmitting sheet keep piece 154 of the lower horizontal sash member has the cover portion 151 extending from an eaves-side edge of the keep piece 154 and covering the upper horizontal sash member 170 of the lighting frame B adjacent to the eaves part, and a throating projection 157 provided on the underside of the cover portion 151.

In Figs. 58 through 60, reference numeral 190 designates a lighting frame fitting for interconnecting the longitudinal sash member 160 and the lower horizontal sash member 150, and the tapping screw 210 is inserted into the longitudinal sash member 160, the lighting frame fitting 190 and the hollow curved portion 158 of the lower horizontal sash member 150 to assemble the lighting frame B.

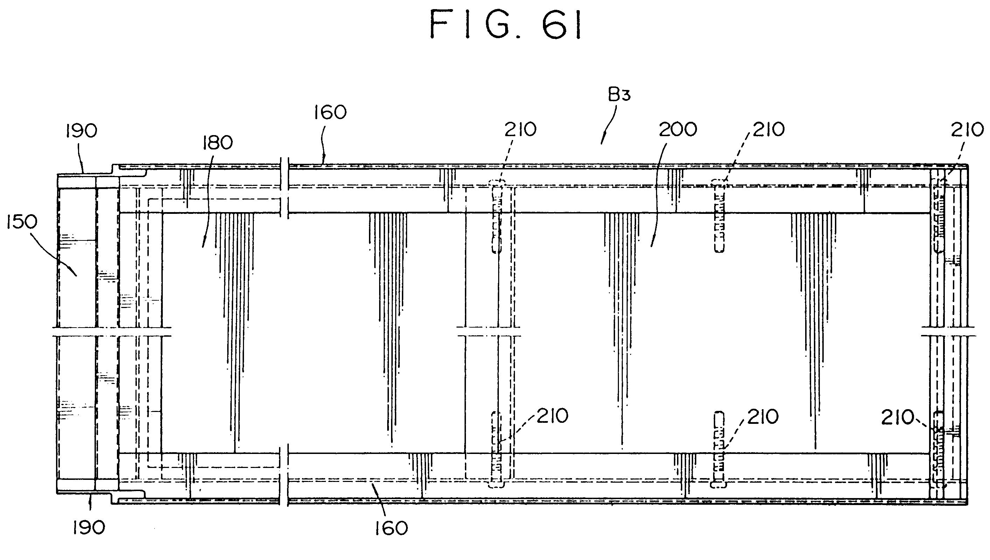

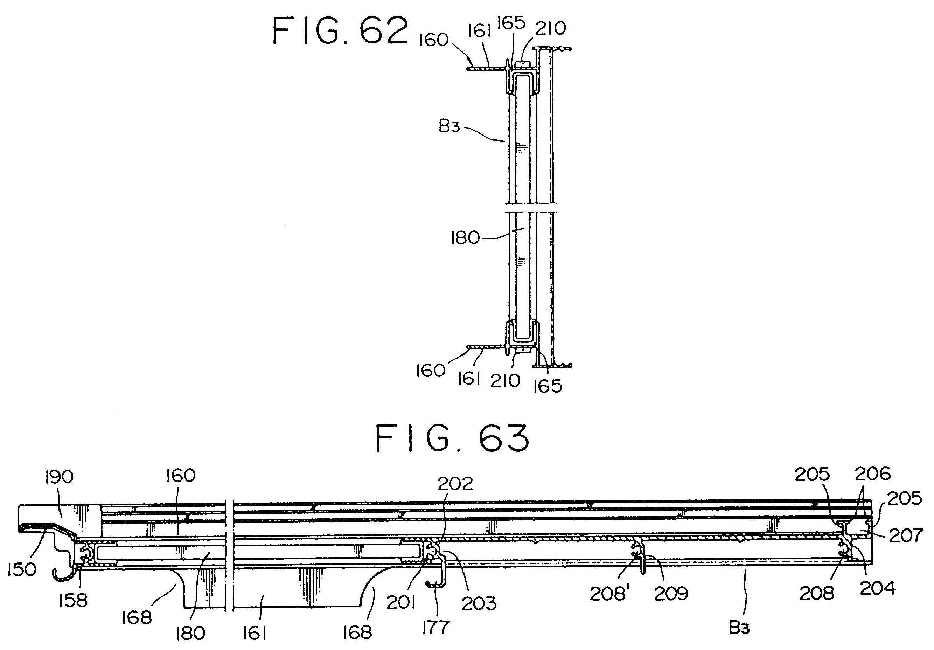

Figs. 61 through 64 show the ridge-side lighting frame B3, respectively. Instead of the upper horizontal sash member 170, a ridge-part adjusting portion 200 made of metal, synthetic resin or the like and having the same width as the light-transmitting sheet 180 is mounted to a ridge-side edge of the light-transmitting sheet 180.

The ridge-part adjusting portion 200 is provided at its eaves-side edge with a light-transmitting sheet insertion groove 201 open toward the eaves, a light-transmitting sheet insertion groove side wall 202, a longitudinal hollow curved portion 203 having a groove open to the eaves and provided at a central portion of the side wall 202, and a fitting engagement piece 177 extending downward from a lower portion of the side wall 202 and bent toward the eaves.

The ridge-part adjusting portion 200 is provided at its ridge-side edge with two upper vertical walls 205, 205 parallel to each other at an interval, inward bent portion 206, 206 respectively provided on the tips of the upper vertical walls 205 and confronting each other, and a fitting slide engaging groove 207 formed between two upper vertical walls 205.

The ridge-part adjusting portion 200 is provided below its ridge-side edge with a lower vertical wall 204 having the tip bent toward the ridge, and a longitudinal hollow curved portion 208 provided at a central portion of the lower vertical wall 204 and having a groove open toward the eaves.

The ridge-part adjusting portion 200 is further provided with an intermediate wall 209 extending downward from its underside portion between the fitting engagement piece 177 and the lower vertical wall 204 and having an intermediate curved portion 208' with a groove.

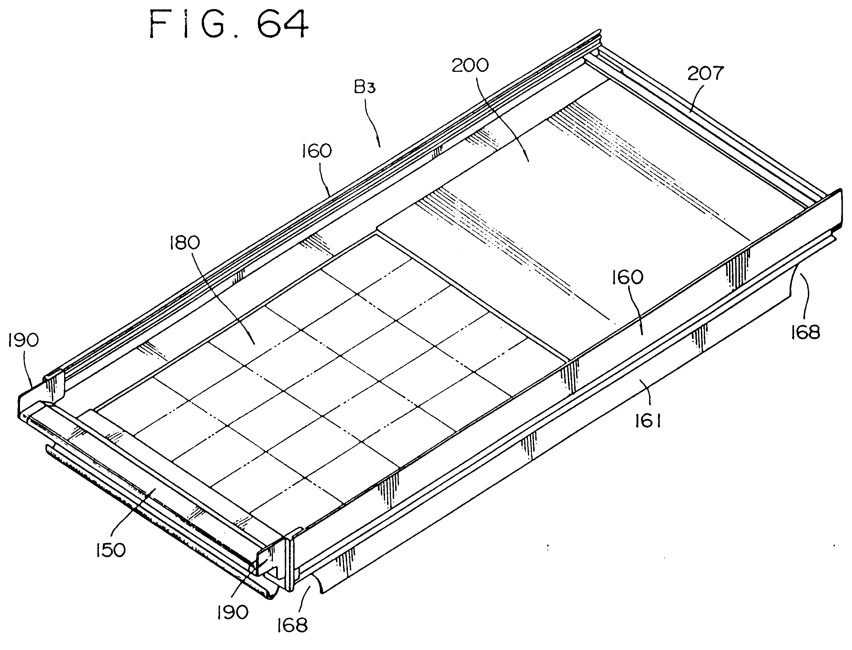

The length of the longitudinal sash member 160 is made equal to the sum of the length of a side edge of the light-transmitting sheet 180 and that of a side edge of the ridge-part adjusting portion 200. The longitudinal sash member 160 has through holes formed in the eaves-side tip of the side wall of the light-transmitting sheet insertion groove 165 and in portions corresponding to the hollow curved portions 203, 208' and 208 of the ridge-part adjusting portion 200. The tapping screws 210 are inserted into the respective through holes and screwed onto both the hollow curved portion 158 of the lower horizontal sash member 150 and the hollow curved portions 203, 208' and 208 of the ridge adjusting portion 200 to assemble the ridge-side light-transmitting frame B3, as shown in Fig. 64.

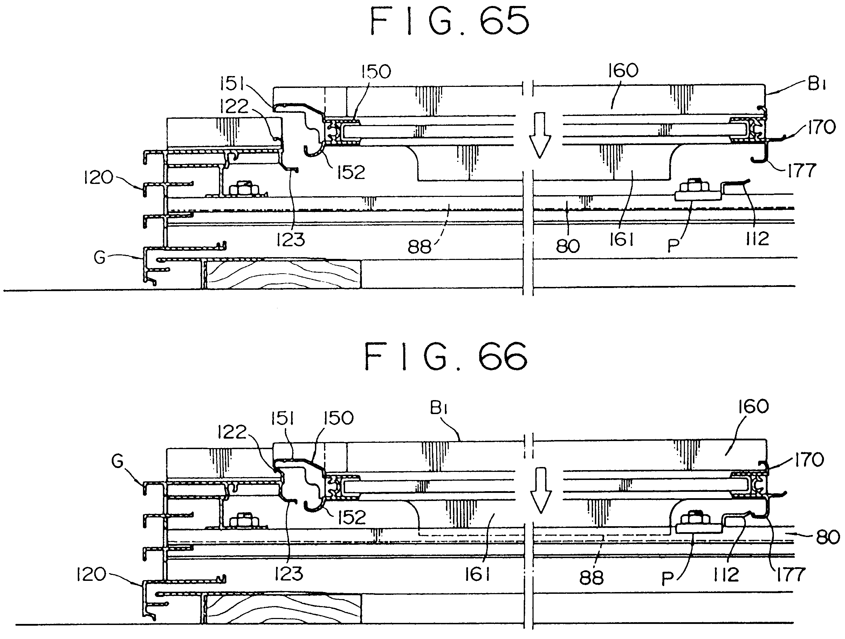

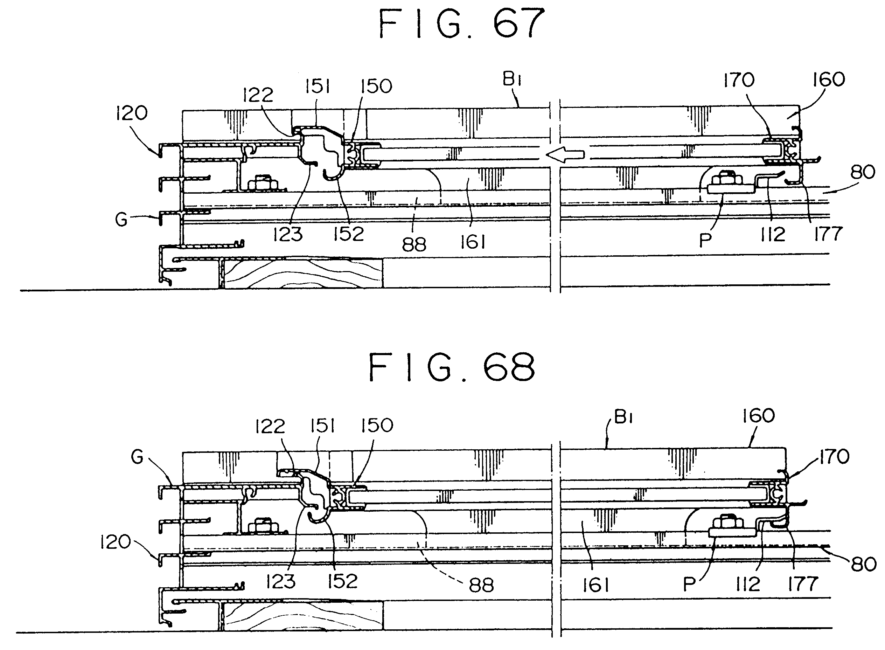

Next will be explained the procedure of mounting of the eaves-side light-transmitting frames B1. As shown in Fig. 65, each eaves-side light-transmitting frame B1 is pressed downward from above the eaves cover G. Then, as shown in Fig. 66, the vertical insertion wall 161 of the longitudinal sash member 160 is inserted into the insertion groove 88 of the upper-part connecting member 80, and the eaves-side light-transmitting frame B1 is made to slide along the insertion groove 88 in the direction indicated by an arrow in Fig. 67. Then, the eaves-side light-transmitting frame B1 is mounted such that the flashing projection piece 122 and the throating guide piece 123 of the cover body 120 are respectively located below the cover portion 151 of the lower horizontal sash member 150 and above the curved waterproof gutter 152, and the engaging projection piece 112 of the light-transmitting frame fitting P is engaged with the fitting engagement piece 177 of the upper horizontal sash member 170.

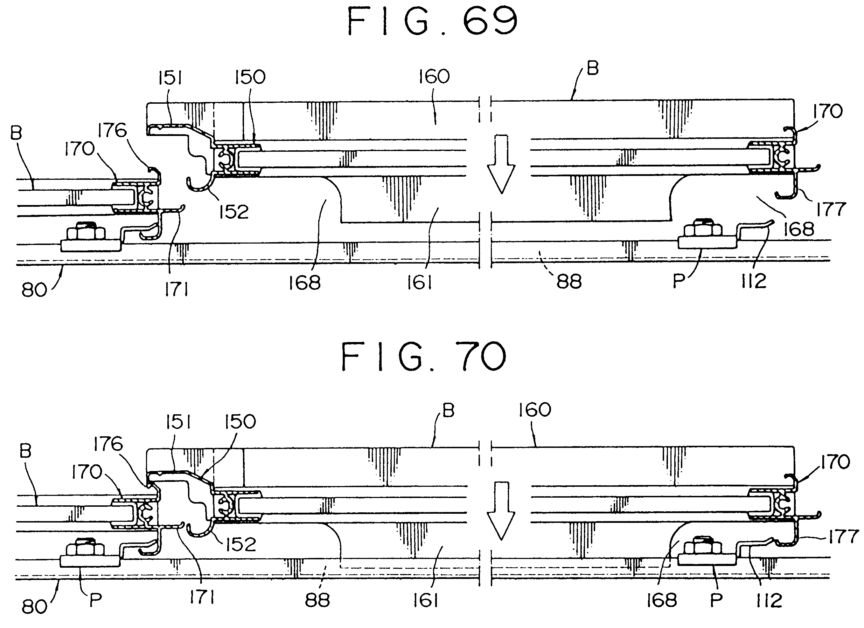

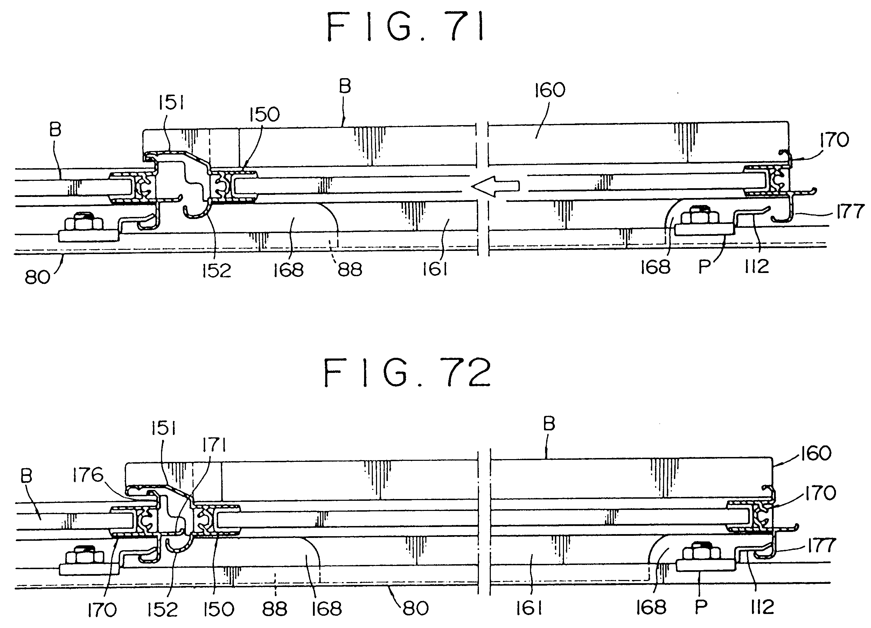

Also, as for the connection of the light-transmitting frames B in the eaves-ridge direction, similarly to the case of mounting of the eaves-side light-transmitting frames B1, as shown in Fig. 69, each light-transmitting frame B is pressed downward. Then, the vertical insertion wall 161 is inserted into the fit groove 88 and made to slide in the direction indicated by an arrow in Fig. 71. Thus, the light-transmitting frames B are successively roofed from the eaves toward the ridge such that the engaging bent portion 176 and the light-transmitting sheet mounting wing piece 171 of the upper horizontal sash member 170 of each eaves-side light-transmitting frame B are respectively located below the cover portion 151 of the lower horizontal sash member 150 and above the curved waterproof gutter 152, and the engaging projection piece 112 of the light-transmitting frame fitting P is engaged with the fitting engagement piece 177 of the upper horizontal sash member 170.

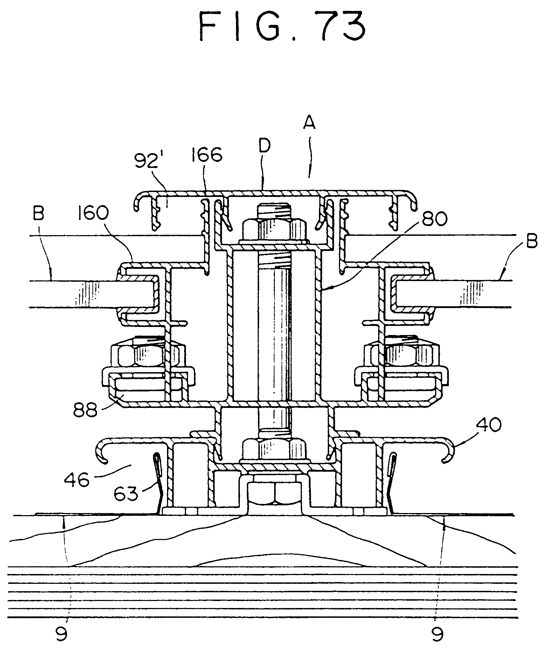

Further, as shown in Fig. 73, the light-transmitting frames B are laterally interconnected through the intermediate connecting members A by respectively inserting the vertical insertion wall 161 of each longitudinal sash member 160 into the fit groove 88 of the upper-part connecting member 80 and also inserting the vertical insertion piece 166 into the upper-part adjusting space 92' of the connecting member cover D.

Thus, the error of the sheathing board width is adjusted by the upper-part adjusting space 92' and the fit groove 88 in cooperation with the waterproof sheet inserting portion 46 of the lower-part connecting member 40.

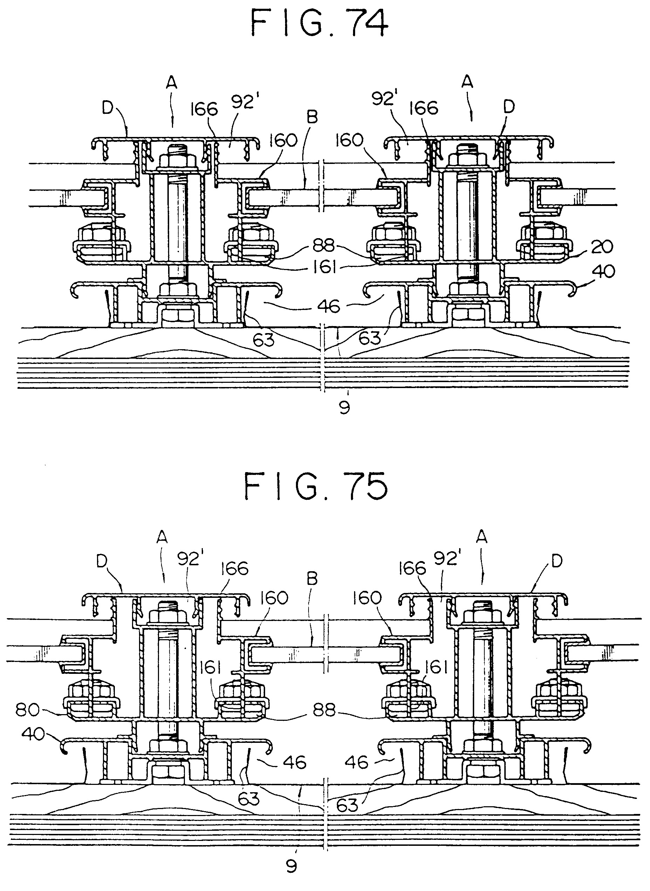

As shown in Fig. 75, when the sheathing board width is in a normal state, the vertical fit piece 166 of each longitudinal sash member 160 is located at the center of the upper-part adjusting space 92', the vertical insertion wall 161 thereof is located at the center of the fit groove, and the engaging waterproof wall 63 of each waterproof sheet 9 is located at the center of the waterproof sheet inserting portion 46 of each lower-part connecting member 40, respectively.

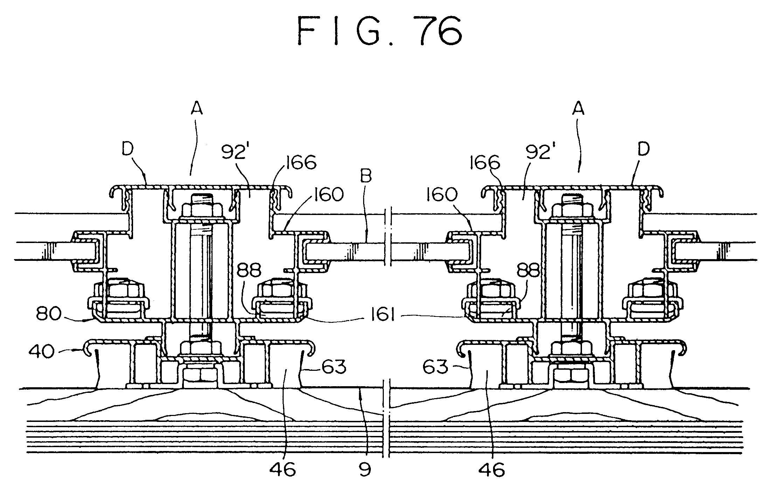

However, when the sheathing board width is narrower than that in the normal state, as shown in Fig. 74, the vertical fit piece 166, the vertical insertion wall 161 and the engaging waterproof wall 63 are respectively located close to the center line of each connecting member A as shown by one-dotted line. On the other hand, when the sheathing board width is wider than that in the normal state, as shown in Fig. 76, the vertical fit piece 166, the vertical insertion wall 161 and the engaging waterproof wall 63 are respectively located close to the side edge of each connecting member A.

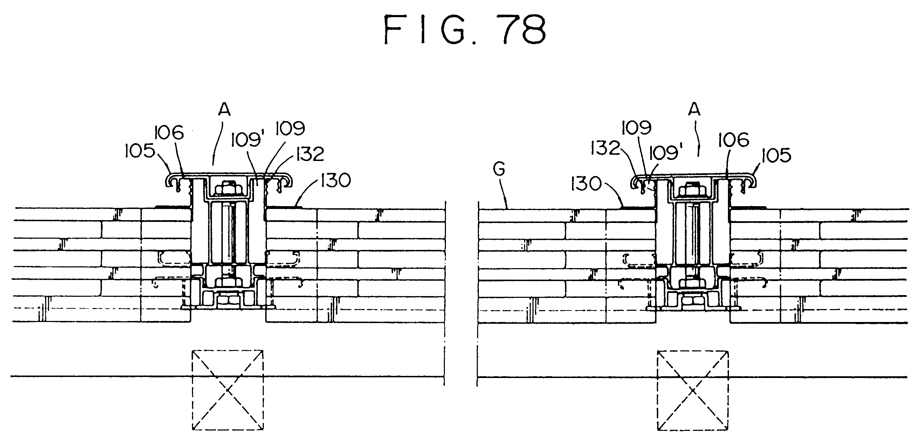

Similarly, the eaves cover G is capable of being mounted as being adjusted corresponding to the sheathing board width. When the sheathing board width is in a normal state, as shown in Fig. 78, the waterproof fixing wall 132 of each flashing waterproof wall 130 is located at the center of the adjusting space 109' defined below the horizontal wing piece 109 of each eaves fit plate 106.

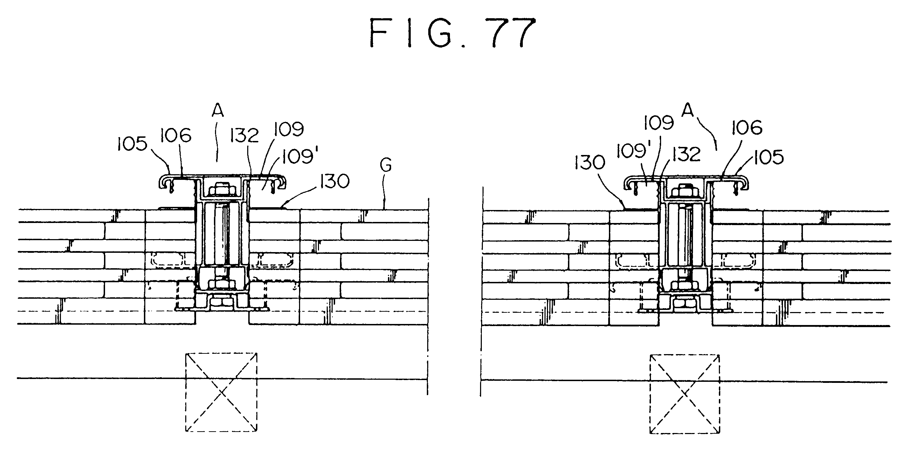

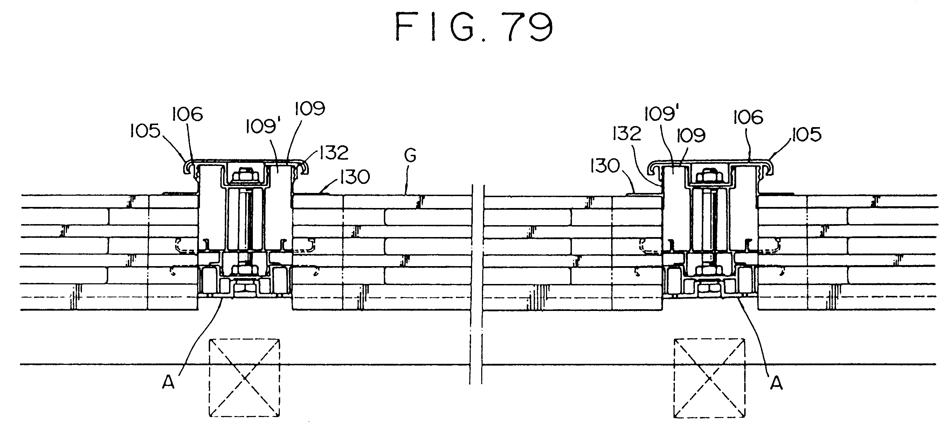

When the sheathing board width is narrower than that in the normal state, as shown in Fig. 77, the waterproof fixing wall 132 is located close to the center line of each connecting member A. On the other hand, when the sheathing board width is wider than that in the normal state, as shown in Fig. 79, the waterproof fixing wall 132 is mounted as being located close to the side edge of each connecting member A.

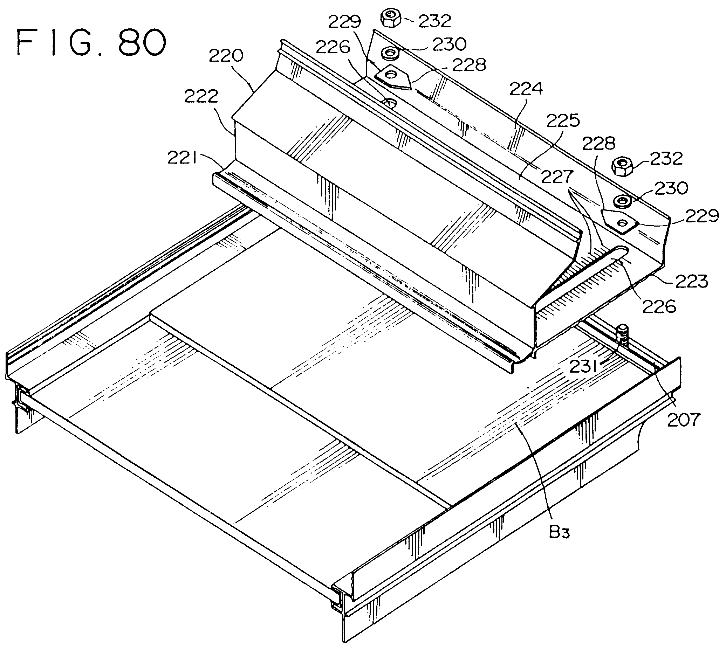

Referring to Fig. 80, reference numeral 22 designates a ridge adjusting member, which has a sprinkling pipe support bed 221 provided at an eaves-side end of the ridge adjusting member 22 and having a recess extending along the ridge, a ridge-opening filling-up plate 222 provided inward of the sprinkling pipe support bed 221, a mounting surface 223 extending from a lower end of the ridge-opening filling-up plate 222 toward the ridge, and an upright surface 224 extending upright from an end of the mounting surface 223, wherein a cleaning unit receiving space 225 is defined above the mounting surface 223.

The mounting surface 223 is provided with adjusting slots 226 having their long axes extending parallel to a line connecting the eaves and the ridge, and a scale mark 227 is provided at a side edge of each slot.

When the ridge adjusting member 22 is mounted to each ridge-side lighting frame B3, bolts 231 provided upright on the fitting slide engaging groove 207 of the ridge-side lighting frame B3 are inserted into the adjusting slots 226 of the ridge adjusting member 22, and then nuts 232 are screwed onto the bolts 231 through washers 230 and indicating members 229 provided at their one sides with pointed portions 228.

Then, by moving the mounting position of the ridge adjusting member 22, even the roof surface with any interval between the eaves and the ridge can be roofed with the light-transmitting frames B of the standard length.

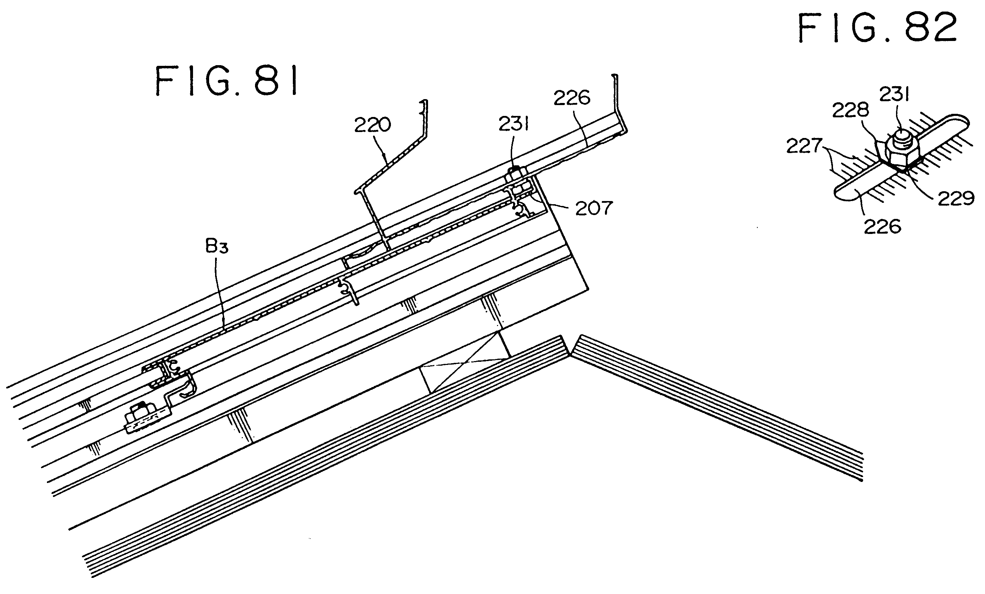

Namely, in case where the proper number of combined lighting frames B are roofed in substantially proportion to the interval between the eaves and the ridge as shown in Fig. 81, the light-transmitting frames B may be mounted in such manner that each bolt 231 is located at the substantially center of the adjusting slot 226 as shown in Fig. 82.

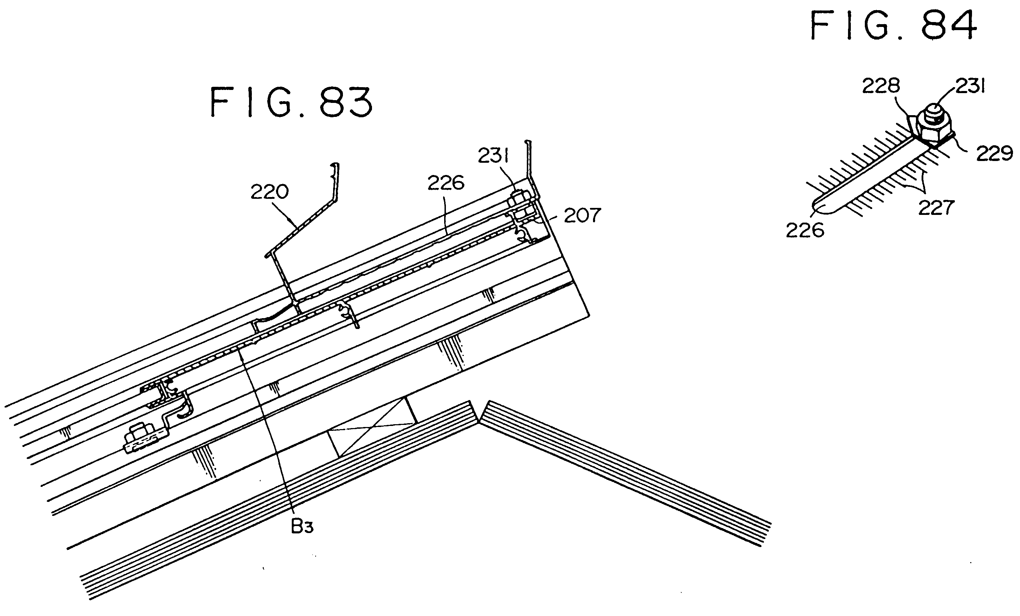

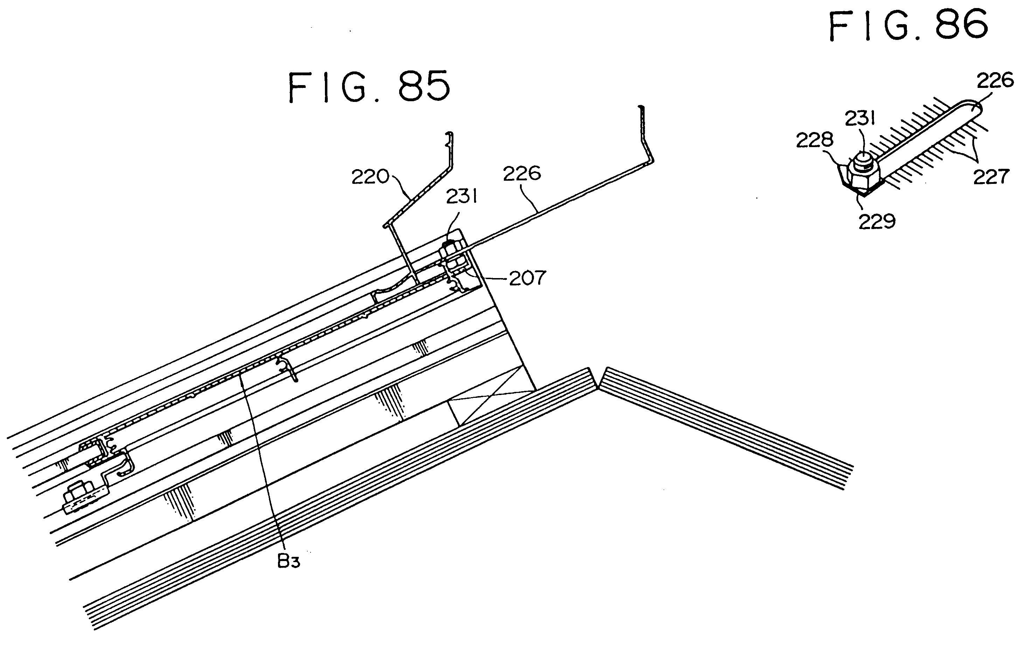

However, as shown in Fig. 83, in case where the light-transmitting frames B are longer in comparison with the interval between the eaves and the ridge, each bolt 231 is inserted into a ridge-side end of the adjusting slot 226 as shown in Fig. 84, and the ridge adjusting member 22 is mounted as being located close to the eaves.

Further, in case where the light-transmitting frames B are shorter in comparison with the interval between the eaves and the ridge, each bolt 231 is inserted into an eaves-side end of the adjusting slot 226 as shown in Fig. 86, and then the ridge adjusting member 22 is mounted as being located close to the ridge as shown in Fig. 85.

In this connection, if the pointed portions 228 of the indicating members 229 are disposed as indicating the same scale mark in all adjusting slots 226, the ridge adjusting member 22 may by mounted at a proper position in parallel to the ridge.

Further, the ridge side face member J with a stair-like shape in section is mounted outward of the ridge adjusting member 22 and along the ridge, and another ridge side face member J is similarly mounted to the other roof surface. The ridge cover I is provided across these ridge side face members J, and the ridge end face cap L is mounted to both the ridge cover I and an end of each ridge side face member J.

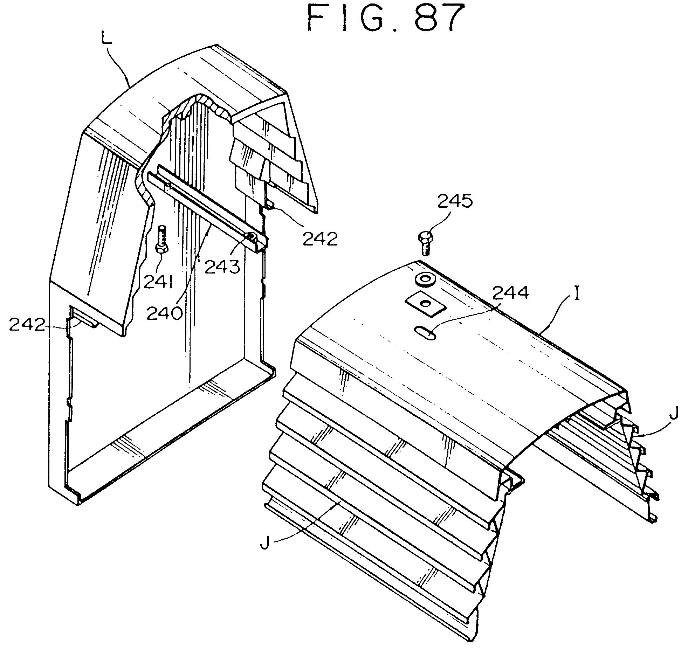

As shown in Fig. 87, a mounting rod-like member 240 is mounted to the backside of the ridge end face cap L at a portion close to its upper central portion by a screw 241, and outward bent fixing pieces 242 are provided on the backside of the ridge end face cap L at its opposite side edges.

Also, a nut 243 is fixedly attached to the upside of an end of the mounting rod-like member 240, and a mounting hole 244 having a long axis extending parallel to a line connecting the ridge and the eaves is bored in the upside end portion of the ridge cover I at a position corresponding to the nut 243.

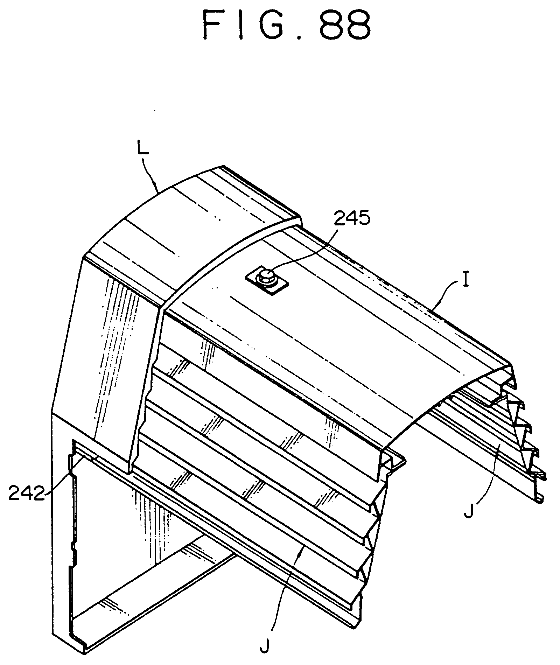

In mounting of the ridge end face caps L, each ridge end face cap L is fitted from outward of the ridge cover I and the ridge side face members J as shown in Fig. 88, and the mounting rod-like member 240 is inserted into the backside of the top of the ridge cover I to insert a bolt 245 into the mounting hole 244. And, the nut 243 is screwed onto the bolt 245. Since the mounting hole 244 is formed as a slot, the expansion and shrinkage of the ridge cover I or the like due to heat is absorbed through the mounting hole 244.

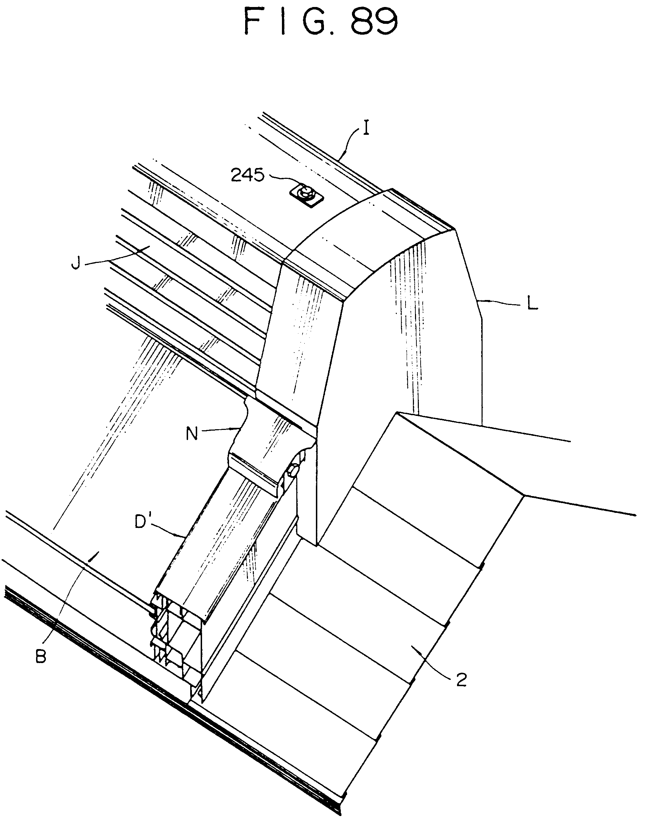

Subsequently, the ridge mounting member N engaged with the fixing piece 242 of the ridge end face cap L is mounted to the side connecting member cover D', and the ridge end face cap L is connected to the side connecting member cover D' as shown in Fig. 89.

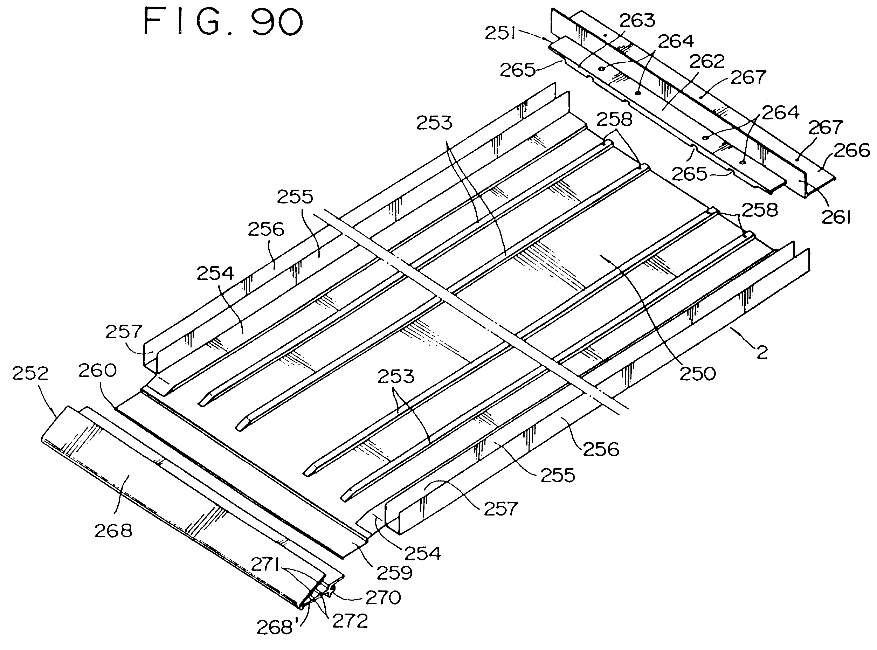

Fig. 90 shows the roof member 2 for vertical roofing, which is laid on the other roof surface of the gable roof 1 or the gable part and the eaves part enclosing the solar energy collecting portion.

The roof member 2 has a body 250, a ridge throating wall 251 and an eaves member 252.

The body 250 has a length substantially equal with the distance between the eaves and the ridge of the roof surface. The body 250 has a flat surface portion provided with a plurality of projection rows 253 extending in the eaves-ridge direction and projecting from the upside of the flat surface portion. On opposite side portions of the body 250, vertically upward bent inside waterproof walls 255 are formed through side projecting portions 254 having the same height as the projection 253, and outside waterproof walls 256 having the same height as the inside waterproof wall 255 are formed by folding back the tops of the inside waterproof walls 255, then bending horizontally outward the folded-back portions in the bottom and then bending vertically upward the resultant bent portions at a predetermined interval, wherein an engaging groove 257 is defined between each inside waterproof wall 255 and the corresponding outside waterproof wall 256 by folding back the top of each outside waterproof wall 256 and then bending horizontally inward the folded-back portion to a portion corresponding to the lower end of the inside waterproof wall 255 in the bottom.

Further, a fixing hole 258 is bored in a ridge-side end portion of each projection 253, and an eaves-side end of the body 250 turns down lower than the flat surface portion and is lengthened toward the eaves to provide a ridge member mounting piece 259. A downward piece 260 is formed at a front end of the eaves member mounting piece 259.

The ridge throating wall 251 has a rising portion 261, a press surface 262 projection from a lower end of the rising portion 261 toward the eaves, an engaging piece 263 formed by bending downward a front end of the press surface 262, holes 264 bored in the press surface 262 at positions corresponding to the fixing holes 258 of the body 250, and fit notches 265 provided on the engaging piece 263 and engaging with the corresponding projections 253 and side projection portions 254.

The ridge throating wall 251 also has an overhang wing piece 266 extending from the lower end of the rising portion 261 toward the ridge, and a plurality of nail holes 267 bored in the overhang wing piece 266.

The eaves member 252 is formed wider than the flat surface portion of the body 250, and has eaves-side upper and lower continuous clamp plates 268, 268', between which the eaves member mounting piece 259 of the body 250 is inserted. An eaves plate member insertion groove 270 is formed at the ridge side of the lower clamp plate 268' and engages with an eaves plate member 269 which will be later described.

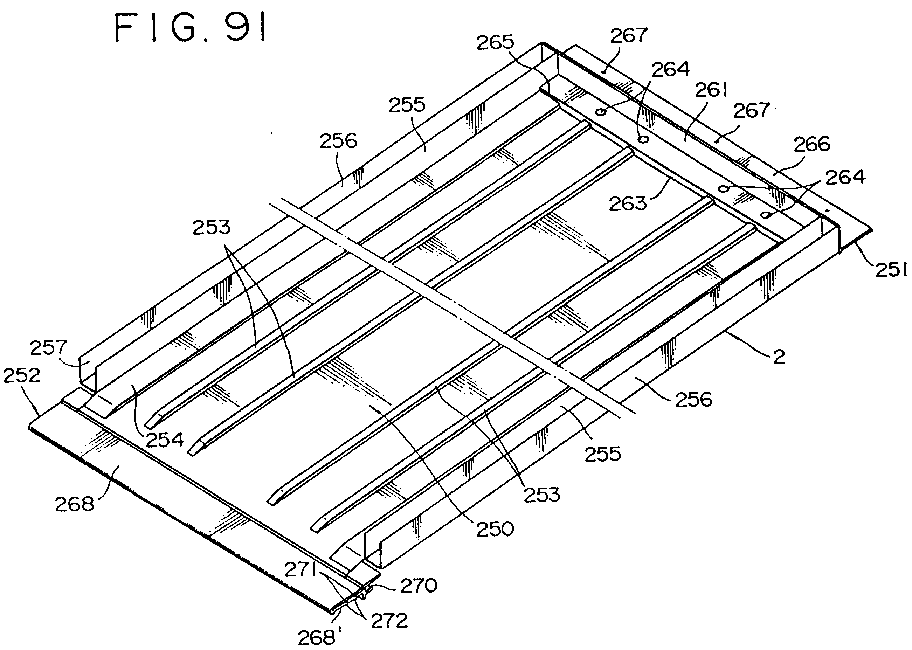

The underside of the upper clamp plate 268 and the upside of the lower clamp plate 268' are respectively provided with pointed projections 271 and V-shaped grooves 272 meshing with each other. The upper and lower clamp plates 268 and 268' sandwich the eaves member mounting piece 259 and are pressed. By so doing, the pointed projections 271 are meshed with the V-shaped grooves 272 to mount the eaves member 252 to the eaves-side end of the body 250, as shown in Fig. 91. Then, the fit notches 265 of the ridge throating wall 251 are fitted to the ridge-side ends of the projections 253 and to those of the side projection portions 254 to close the ridge-side end of each roof member 2 with the rising portion 261.

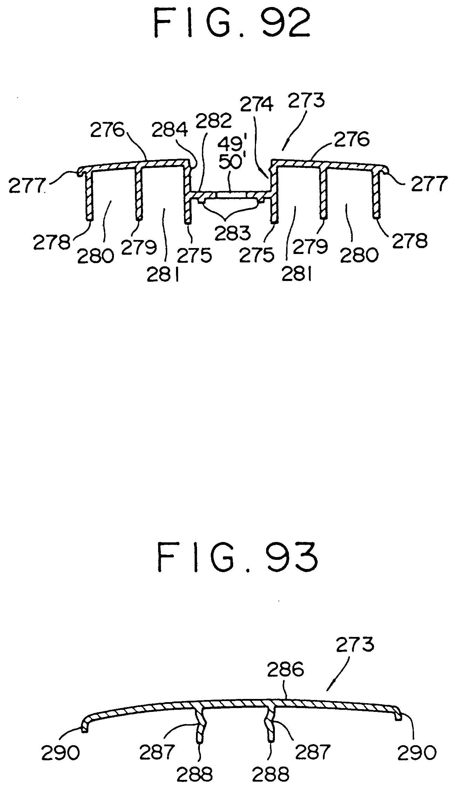

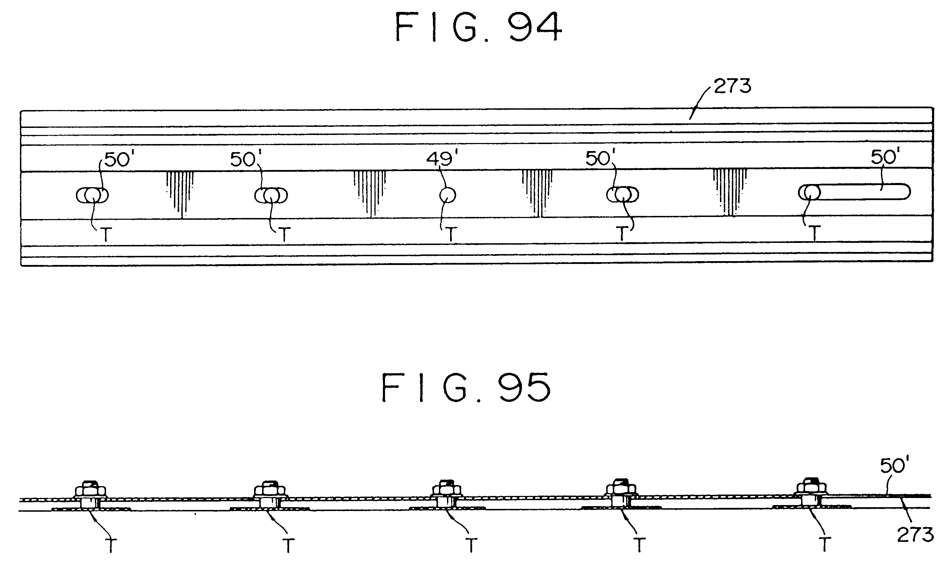

Fig. 92 shows a connecting member 273 for laterally interconnecting the roof members 2. As shown in Fig. 92, the connecting member 273 has an H-shaped body 274 in section, arm portions 276 extending outward from upper ends of opposite walls 275 of the body 274, a flashing portion 277 provided on the underside of an end of each arm portion 276, an outside piece 278 extending downward from the underside of each arm portion 276 and located slightly inward of the outer edge of each arm portion 276, and an inside piece 279 extending downward from the underside of each arm portion 276 and located inner than the outside piece 278 and at a predetermined distance therefrom. Then, a first receiving portion 280 is defined between each outside piece 278 and the corresponding inside piece 279, and a second receiving portion 281 is defined between each inside piece 279 and the side wall 275 of the body 274. Further, the body 274 has contact pieces 283 projecting from the underside of a horizontal portion 282 of the body 274 and contacting the connecting member fittings T. As shown in Figs. 94 and 95, a fixing circular hole 49' is bored in a substantially center portion of the horizontal portion between the contact pieces 283 in the eaves-ridge direction, and fixing slots 50' having the long axes extending parallel in the eaves-ridge direction are bored in the opposite side portions of the circular hole 49' at proper intervals, so that the expansion and shrinkage due to a change of heat are absorbed similarly to the case of the lower-part connecting member 40. Further, engaging projections 284 are formed on the inside of upper ends of the opposite walls 275.

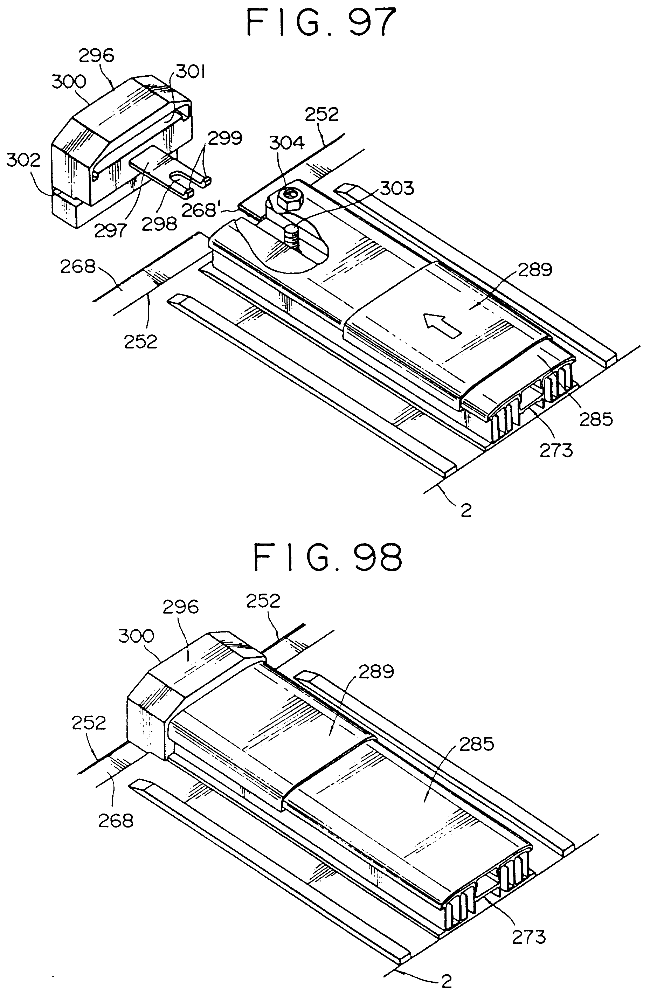

As shown in Fig. 93, a connecting member cover 285 has a cover-like body 286 fitted to the connecting member 273, and two pieces 288, 288 respectively having recesses 287 engaging with the engaging projections 284 of the connecting member 273 and extending downward from the underside of the cover-like body 286 at an interval. A reinforcing member 289 (see Fig. 97) against facing wind pressure is mounted to the upside of the cover-like body 286 to be slidable in the longitudinal direction. The connecting member cover 285 also has engaging pieces 290 provided at opposite side portions of the underside of the cover-like body 286 and engaging with the flashing portions 277 of the connecting member 273.

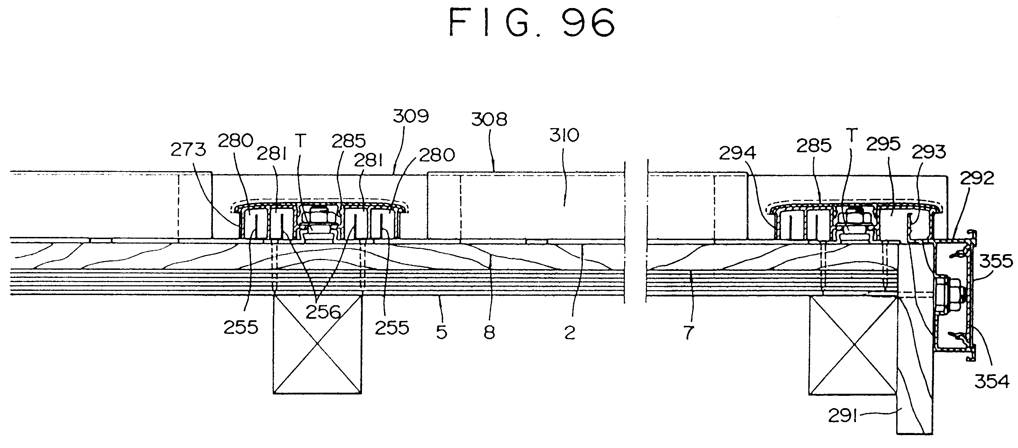

In fabrication of the roof members 2, as shown in Fig. 96, a plurality of crosspieces 8 are disposed on the sheathing boards 5 through the building paper 7 in such manner that the crosspieces 8 are orthogonal to the pitch of the roof, and the connecting member fittings T are mounted to the crosspieces 8 at proper intervals. Then, the roof members 2 are arranged parallel to each other in such manner that their adjacent side ends are spaced apart from each other so as to sandwich the connecting member fittings T. The bolts of the connecting member fittings T are inserted into the circular holes 49' and the slots 50' of the connecting members 273. The inside waterproof walls 255 of the roof members 2 are inserted into the first receiving portions 280 of the connecting members 273, and the outside waterproof walls 256 of the roof members 2 are inserted into the second receiving portions 281 to interconnect the adjacent roof members 2.

The roof member 2 is not laid on a side end of the gable part of the gable roof 1, while a side end face member 292 is mounted to the outside of a verge-board 291, and a rising wall 293 formed on an inside edge of the side end face member 292 is inserted into a side end receiving space 295 of a side connecting member 294 which will be later described.

Further, the connecting member covers 285 are respectively fitted to the upside of the connecting members 273 and that of the side connecting members 294.

Referring to Fig. 97, reference numeral 296 designates a cap, which has a dustproof plate 300 for closing the eaves end face of each of the connecting members 273 and 294, a mounting projection piece 297 projecting from the backside of the dustproof plate 300 toward the ridge, an elongate insertion notch 298 formed in the center of the tip of the mounting projection piece 297, and upward bent portions 299 provided at the opposite sides of the insertion notch 298. A cavity 301, into which the eaves-side end of the reinforcing member 289 is fitted, is formed above the mounting projection piece 297 at the backside of the dustproof plate 300, and an insertion groove 302, into which the side ends of the clamp plates 268 and 268' of the eaves member 252 are fitted, is formed at an intermediate portion of the side face of the dustproof plate 300.

Each cap 296 is mounted to the eaves-side end face of each of the connecting members 273 and 294 by inserting the tip of the bolt 303 projecting from the upside of each of the connecting members 273 and 294 into the insertion notch 298 and then screwing the nut 304 onto the bolt 303.

Subsequently, each reinforcing member 289 is made to slide in the longitudinal direction of the connecting member cover 285, and then covers the eaves end portion of each of the connecting members 273 and 294 as shown in Fig. 98. Then, the eaves end of each reinforcing member 289 is fitted into the cavity 301 of the cap 296. Thus, the eaves members are made integral to provide a structure, reinforced against the wind pressure. Also, the eaves members are mounted simply and easily and are excellent in external appearance without appearing any bolt on the surface.

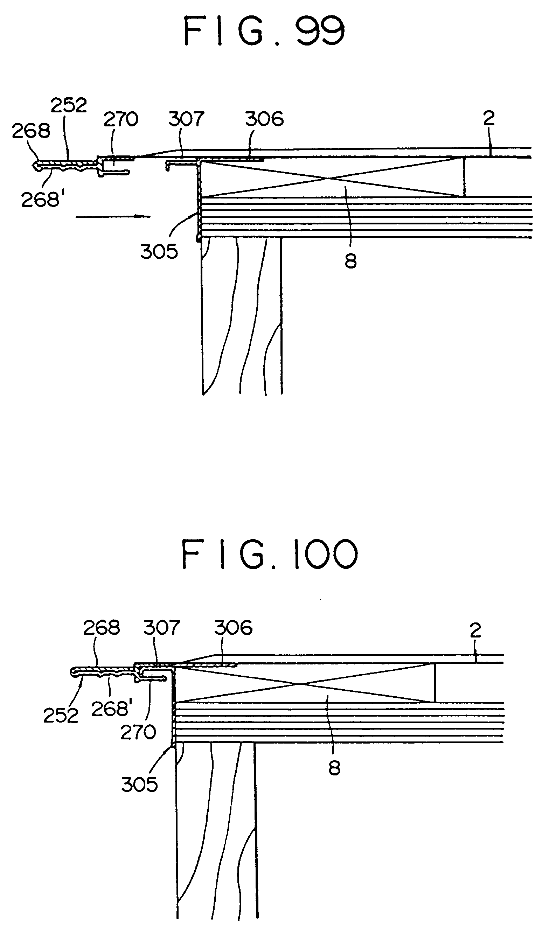

Also, as shown in Figs. 99 through 103, the eaves-side end of each roof member 2 is mounted to the sheathing board through an eaves plate member 305. The eaves plate member 305 has a fixing portion 306 having the inversed L-shaped section, and a projection piece 307 projection from an eaves-side upper end of the fixing portion 306 toward the eaves and having a downward bent front end. The roof member 2 is made to slide in the direction indicated by an arrow in Fig. 99 so as to insert the projection piece 307 of the eaves plate member 305 mounted to the eaves-side end face of the sheathing roof board into the eaves plate member insertion groove 270 of the eaves member 252, and the eaves member 252 of the roof member 2 is engaged with the eaves plate member 305, as shown in Fig. 100.

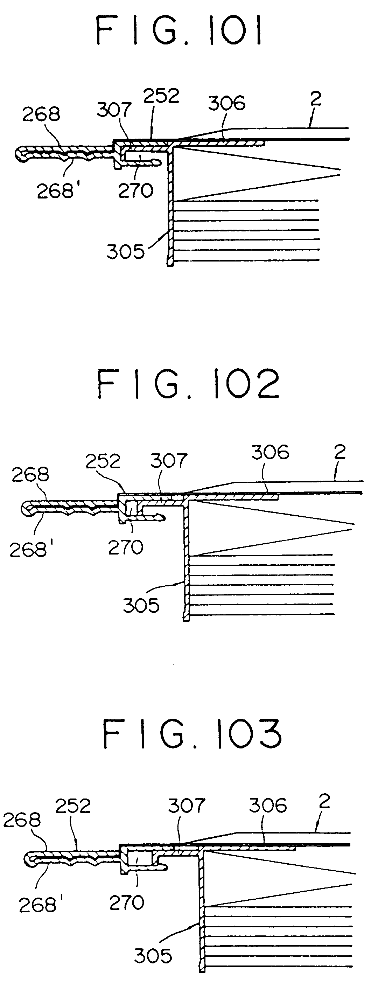

According to the above-mentioned structure, a mounting portion of each roof member 2 has an adjusting function for absorbing the expansion and shrinkage in the eaves-ridge direction of the roof member 2 due to heat. In case where each roof member 2 is in a normal state, the front end of the projection piece 307 of the eaves plate member 305 is located in the substantially center of the eaves plate member insertion groove 270 of the eaves member 252, as shown in Fig. 102. In case where each roof member 2 is shrunken lengthwise due to a change of temperature or the like, the front end of the projection piece 307 is located close to the bottom of the insertion groove 270, as shown in Fig. 101.

On the other hand, in case where each roof member 2 is expanded lengthwise under the direct rays of the sun or the like, the front end of the projection piece 307 is moved toward the neighborhood of an opening portion of the insertion groove 270, as shown in Fig. 103.

Next will be described a ridge opening filling-up unit 308 mounted close to a ridge-side end of each roof member 2 and that of each connecting member 273.

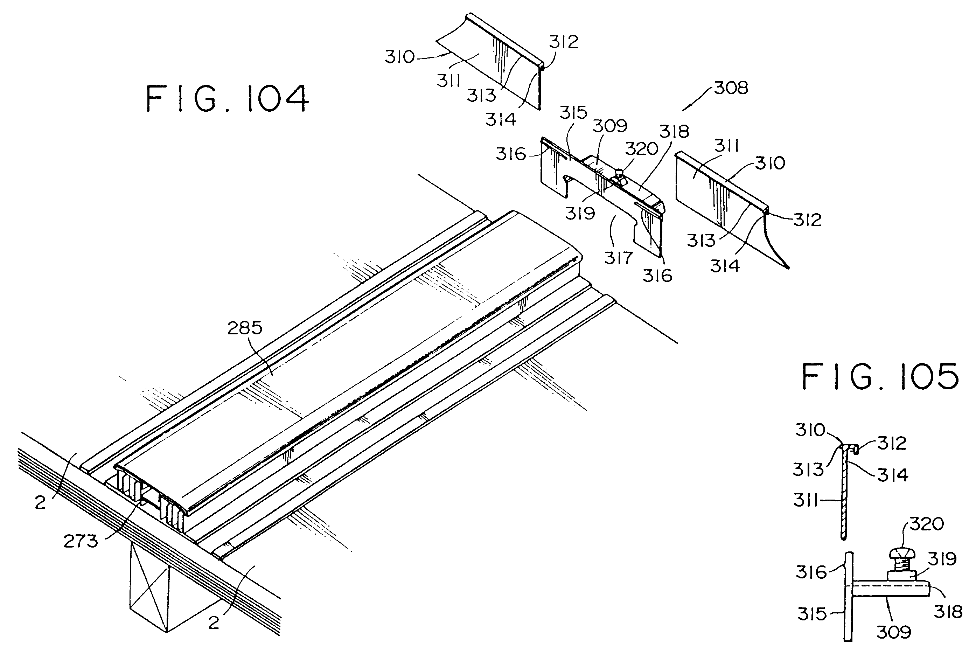

As shown in Fig. 104, the ridge opening filling-up unit 308 has an opening filling-up member fitting 309 fitted to the upside of each connecting member 273 and an opening adjustment board 310 disposed on the upside of each roof member 2 along the ridge line. The opening adjustment board 310 has a downward open engaging groove 312 provided along an upper end of the backside of a belt-like vertical wall 311, a flashing portion 313 projecting toward the eaves and provided along the upper end of the surface of the belt-like vertical wall 311, and a longitudinal recess groove 314 defined slightly below the engaging groove 312.

The opening filling-up member fitting 309 has projections 316 provided close to opposite-side upper ends of the surface of a rising wall 315 and engaging with the recess grooves 314 of the adjustment boards 310, a notch 317 defined at the central lower end of the rising wall 315 and fitted to the outside surface of the connecting member 273, and a covering piece 318 projecting from an upper peripheral edge of the notch 317 toward the backside thereof and covering the upside of the connecting member 273. A nut 319 is fixedly fitted into a hole bored in a center portion of the covering piece 381, and a screw 320 is screwed onto the nut 319.

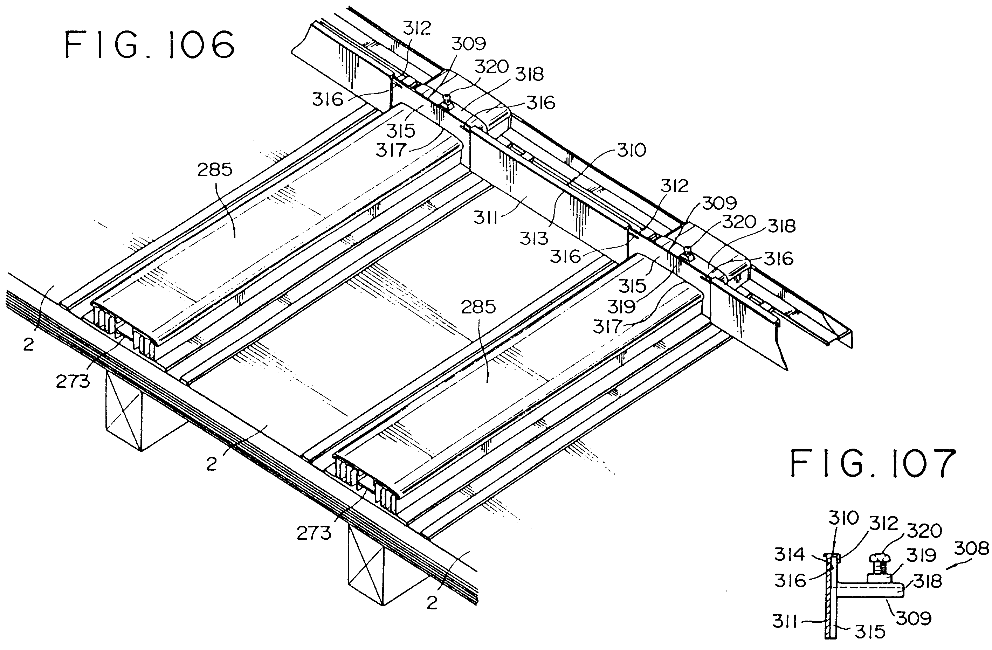

In mounting of each ridge opening filling-up unit 308, as shown in Figs. 106 and 107, the notch 317 is fitted to the outside surface of the connecting member cover 294 to vertically mount the opening filling-up member fitting 309 on the connecting member cover 294, and a side portion of the recess groove 314 of the opening adjustment board 310 is pressed downward to be engaged with one projection 316 of the fitting 309. Then, the engaging groove 312 of the adjustment board 310 is fitted to the upper end of the rising wall 315 of the fitting 309 to connect the adjustment board 310 to the fitting 309.

Further, the other fitting 309 is similarly mounted to the adjacent connecting member 273, and the adjustment board 310 is made to slide toward the other fitting 309 along the ridge line. Then, the recess groove 314 is engaged with the projection 316 of the other fitting 309 to fit the engaging groove 312 to the upper end of the rising wall 315, and the adjustment board 310 is mounted between a pair of fittings 309.

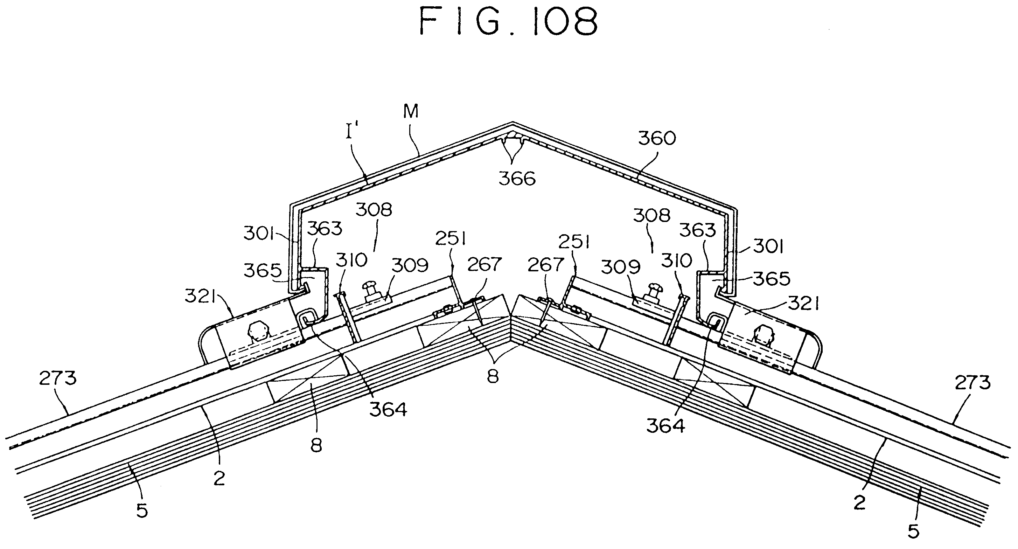

Then, the ridge cover I' is mounted across the upper ends of the confronting roof members 2 as shown in Fig. 108, and fixedly attached thereto by ridge cover fittings 321 to cover the ridge opening filling-up units 308.

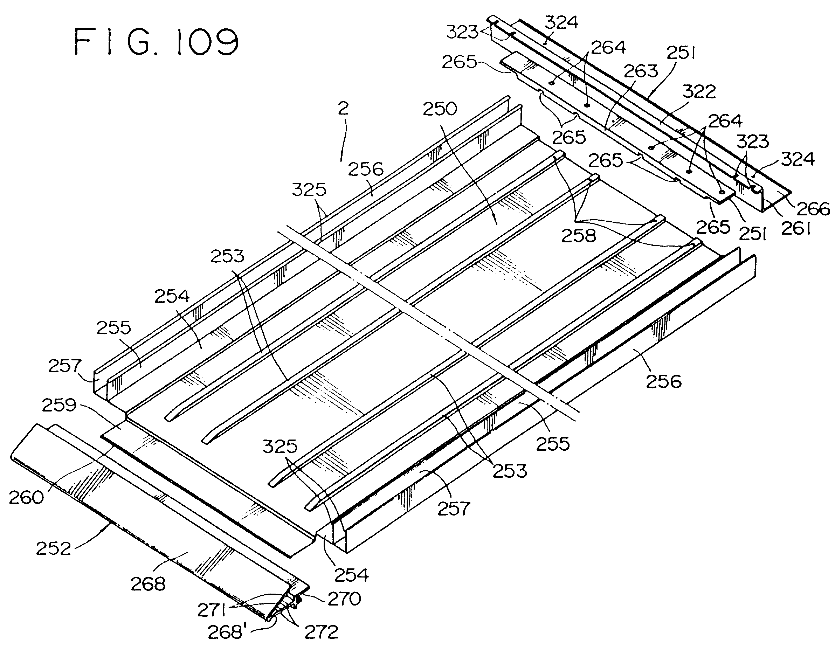

Fig. 109 shows another embodiment of the roof member 2, in which inward flashing bent portions 325 are formed on upper ends of the waterproof walls 255, 256 of the body 250, whereas the eaves member mounting piece 259 is not formed on a front end of each side projecting portion 254.

The eaves throating wall 251 has a press surface 262 projecting from a lower portion of a rising portion 261 toward the eaves, an engaging piece 263 formed by bending downward the tip of the press surface 262, holes 264 bored in positions of the press surface 262 corresponding to the fixing holes 258 of the body 250, and fit notches 265 formed in the engaging piece 263 and engaging with the projections 253 and the side projecting portions 254. Also, the eaves throating wall 251 has a bent water stop piece 322 projecting from the upper end of the rising portion 261 toward the eaves, notches 323 formed in opposite side portions of the water stop piece 322 and engaging with the waterproof walls 255, 256 of the body 250, and an overhang wingpiece 266 extending from the lower end of the rising portion 261 toward the eaves and having a plurality of nail holes 324.

Since the structure of the eaves members 252 and the method for assembling the roof members 2 are similar to those of the embodiment of Fig. 90, the detailed description thereof will be omitted.

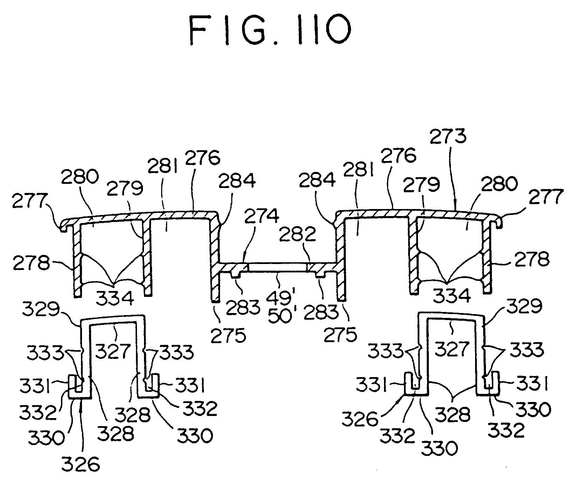

Fig. 110 shows another embodiment of the connecting member 273, which is provided with roof sheet fixing members 326 mounted to the substantially longitudinal center of the connecting member 273.

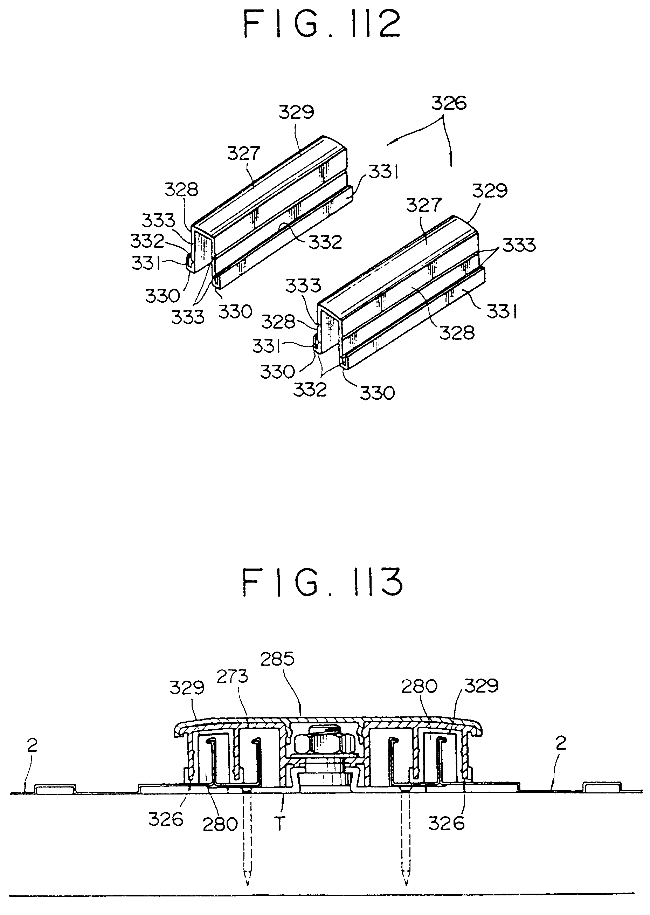

The roof sheet fixing member 326 has a fit portion 329 having side walls 328 provided on the underside of opposite ends of an upside plate 327, flange pieces 330 projecting outward form the opposite lower ends of the fit portion 329, a rising piece 331 provided at a front end of each flange piece 330, an engaging portion 332 formed between each rising piece 331 and the corresponding side wall 328, and recesses 333 longitudinally formed on the outside of each side wall 328, as shown in Fig. 112.

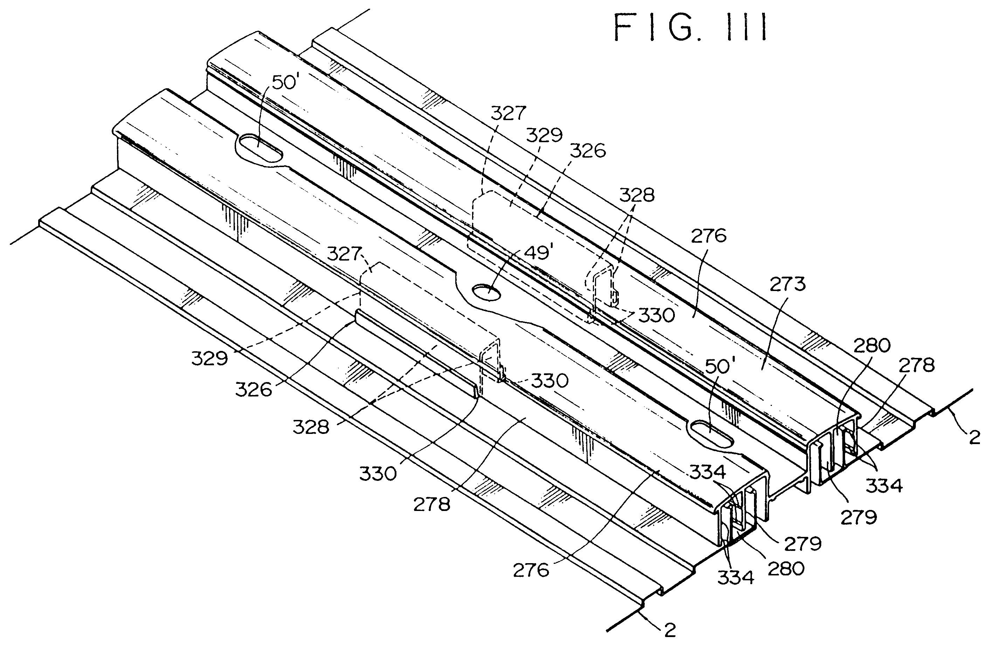

Further, the connecting member 273 has projections 334 longitudinally formed on confronting surfaces of each outside piece 278 and each inside piece 279. The fixing portion 329 of each roof sheet fixing member 326 is fitted in each first receiving portion 280 of the connecting member 273, and a lower end of each outside piece 279 and that of each inside piece 279 of the connecting member 273 are respectively inserted into the engaging portions 332 of each roof sheet fixing member 326 to engage the projections 334 of the connecting member 273 with the recesses 333 of the roof sheet fixing member 326, so that each roof sheet fixing member 326 is mounted in the longitudinal center of the corresponding connecting member 273, as shown in Fig. 111.

The roof sheet fixing member 326 is preferably made off synthetic resin from the viewpoint of prevention of electrolytic corrosion.

The roof members 2 are laid by using these connecting members 273 similarly to the embodiment shown in Fig. 96, while nails inserted into the temporarily fixing holes 324 of the roof members 2 are eventually removed to make a ridge-side end of each roof members free.

Accordingly, the flange pieces 330 of each roof sheet fixing member 326 are brought into contact with the upside of each roof member 2 in the substantially center of the inclination direction to press down the roof members 2, while the lower end of the outside piece 278 and that of the inside piece 279 of each connecting member 273 come up from the upside of each roof member 2, so that the roof members 2 are made slidable independently of the connecting members 273. Thus, even if the roof member 2 and the connecting member 273 are made of different materials, the roof members are freely expandable and contractible in their ridge side and their eaves side.

Next will be described a mounting structure, in which the roof members 2, the connecting members 273 and the opening filling-up member fittings 309 and the opening adjustment boards 310 are laterally interconnected to be mounted while the plus or minus adjustment is carried out for the error of the sheathing board width.

Since the actual sheathing board width of the roof varies depending upon the structure of a building, a lot area and a regional building structure difference, the adjusting function such as the normal mounting, plus mounting and minus mounting, which facilitates the absorption of the error in the sheathing board width, is necessary to easily execute the connection of the roof members.

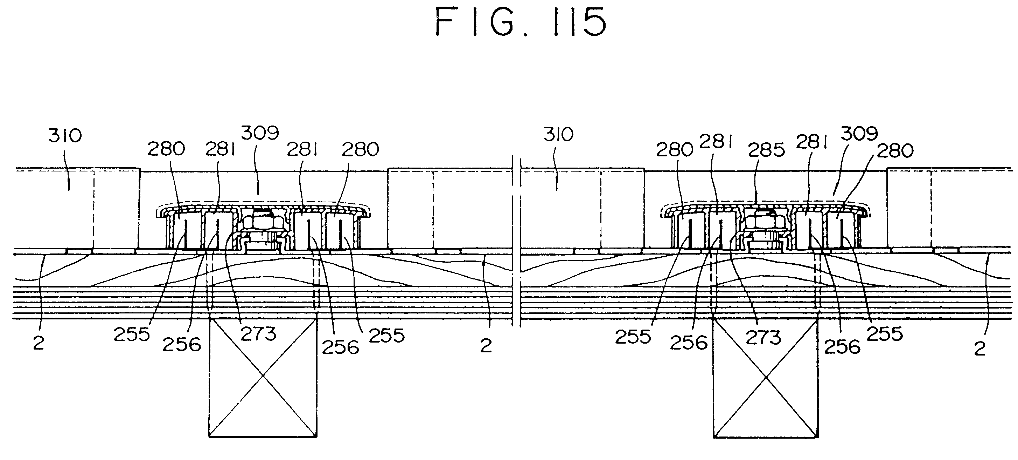

As shown in Fig. 115, in case where the sheathing board is normal in width to be free from any adjustment, the inside waterproof wall 255 and the outside waterproof wall 256 of each roof member 2 are respectively mounted as being located in the substantially centers of the first and second receiving portions 280 and 281 of each connecting member 273.

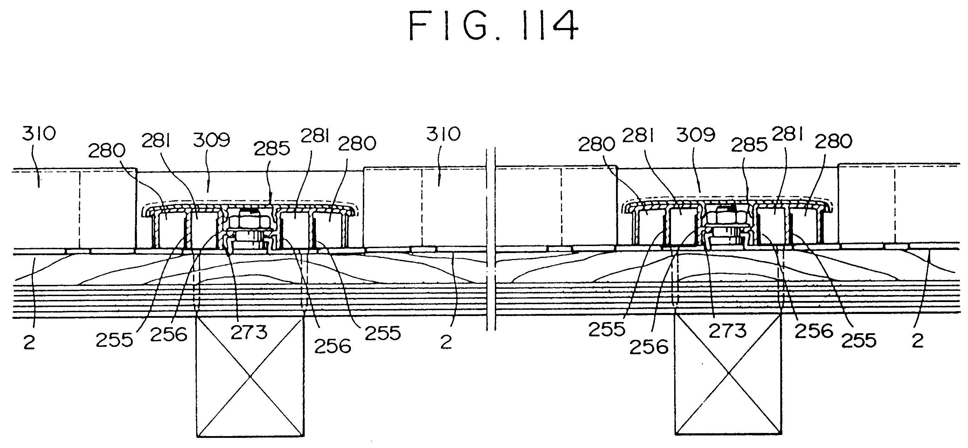

As shown in Fig. 114, in case where the sheathing board is narrower than that in its normal state, the inside waterproof wall 255 and the outside waterproof wall 256 of each roof member 2 are respectively located close to the inside of the first and second receiving portions 280 and 281 of each connecting member 273, and an overlap portion of the opening adjustment board 310 with the opening filling-up member fitting 309 is made wider to execute the minus adjusted mounting.

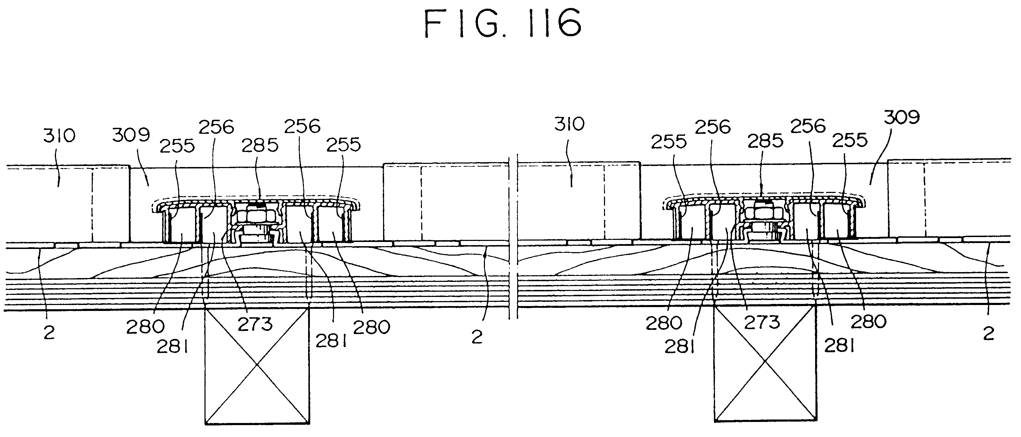

Also, as shown in Fig. 116, in case where the sheathing board is wider than that in its normal state, the inside waterproof wall 255 and the outside waterproof wall 256 of each roof member 2 are respectively located close to the outside of the first and second receiving portions 280 and 281 of each connecting member 273, and the overlap portion of the adjustment board 310 with the fitting 309 is made narrower to execute the plus adjusted mounting.

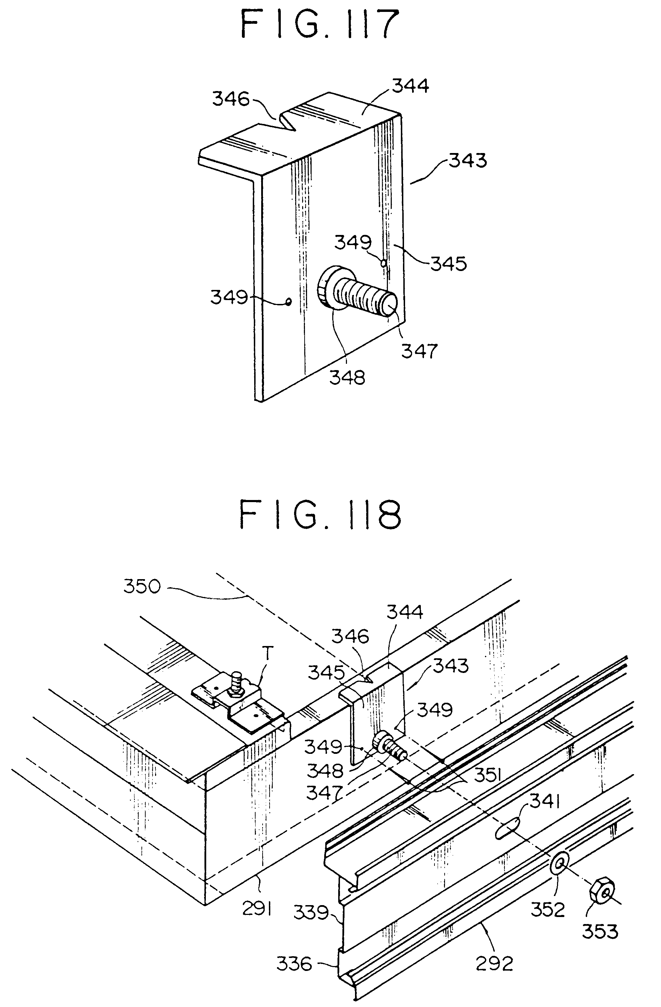

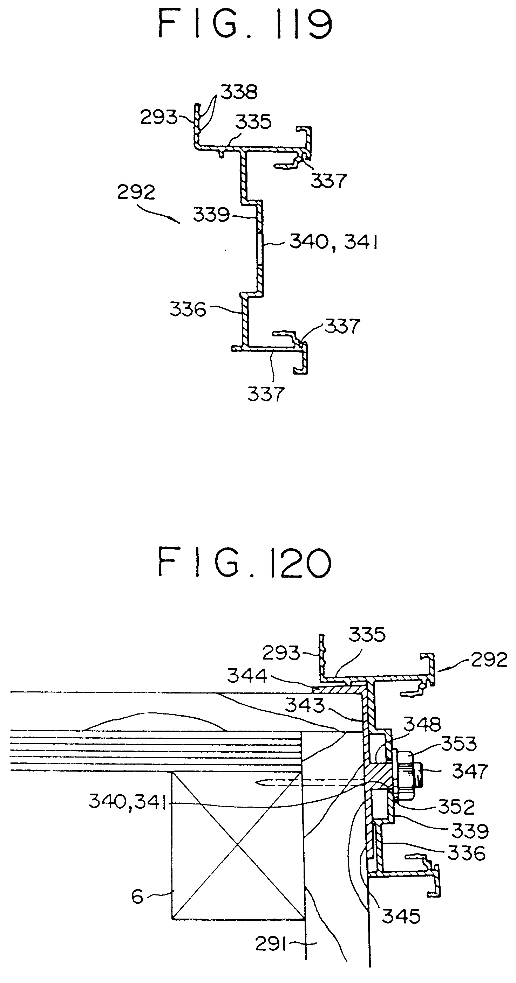

Referring to Figs. 118 and 119, reference numeral 292 designates the side end face member mounted to the side end of the gable part of the roof. The side end face member 292 has a belt-like upper horizontal portion 335, a vertical portion 336 provided integral with the horizontal portion 335 and longitudinally extending from the underside of the substantially widthwise central portion of the horizontal portion 335, a lower horizontal portion 337 projecting outward from a lower end of the vertical portion 336, a rising wall 293 having two throating portions 338 and extending from an upper portion of one side edge of the horizontal portion 335, and an outward projecting support groove 339 formed at the center of the vertical portion 336.

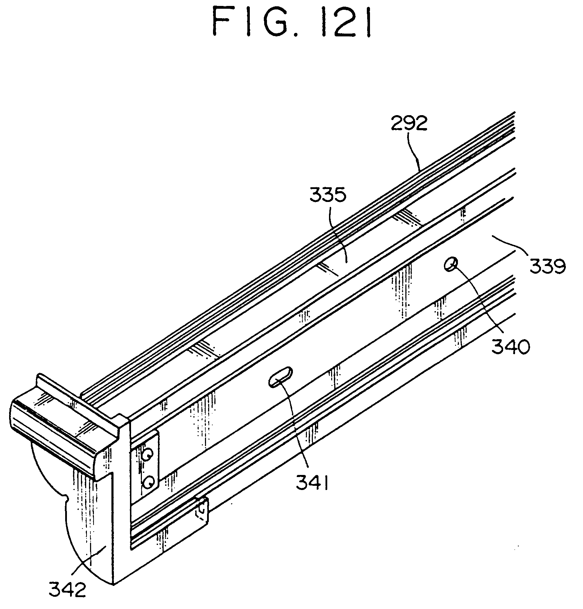

Also, the side end face member 292 has upward and downward open engaging grooves 340 respectively formed on the other side edge of the upper horizontal portion 335 and that of the lower horizontal portion 337 as confronting each other. As shown in Fig. 121, a circular hole 340 is bored in the neighborhood of the longitudinal center of the support groove 339, and slide mounting holes 341 of slots having the long axes extending parallel to the line connecting the ridge and the eaves are bored in opposite side portions of the circular hole 340 of the support groove 339 at fixed intervals.

Reference numeral 342 designates a side lower portion decoration cover mounted to an eaves end of the side end face member 292.

Fig. 117 shows a side roof member fitting 343 mounted to the eaves end of the side end face member 292. The fitting 343 has a horizontal plate body 344, a downward piece 345 extending downward from the underside of one side edge of the horizontal plate body 344, a triangular notch 346 used for eye measurement of marking and formed in the center of the other edge of the horizontal plate body 344, and a bolt 347 planted on the outside of the downward piece 345. A shaft portion 348 with a diameter larger than that of the bolt 347 and having no thread groove is provided on a distal portion of the bolt 347, and fixing holes 349 are bored in opposite side portion of the bolt 347 of the downward piece 345.

In mounting of each side roof member fitting 343, as shown in Fig. 118, the horizontal plate body 344 is brought into contact with the upside of the side edge of the sheathing roof board to determine the height of the bolt 347. Then, the downward piece 345 is brought into contact with the outside of the verge-board 291, and a marking 350 preliminarily drawn on the sheathing roof board and in parallel to the line of the eaves is made to align with the apex of the notch 346 for eye measurement of marking to determine the position of the side roof member fitting 343. Then, the nails 351 or the like are driven into the fixing holes 349 to fix the side roof member fitting 343 to the verge-board 291.

In mounting of each side end face member 292, as shown in Fig. 120, the bolts 347 of the side roof member fittings 343 are inserted into the fixing circular hole 340 and the slide mounting holes 341 bored in the support groove 336 of the side end face member 292, while the upside of the horizontal rectangular board 344 of each side roof member fitting 343 is covered with the horizontal portion 335 of the side end face member 292, and the side face of the verge-board 291 is covered with the vertical portion 336. Then, the nut 353 is screwed onto the bolt 347 of each side roof member fitting 343 through a washer 352.

Also, since the shaft portion 348 is provided on the distal portion of the bolt 347 of the side roof member fitting 343, and each slide mounting hole 341 of the side end face member 292 is provided as the slot, the side end face member 292 is constituted so as to be slidable under the expansion and shrinkage due to heat in case where the nut 353 is screwedly fastened to the bolt 347 through the washer 352.

Namely, when the side end face member 292 is mounted to the verge-board 291, the shaft portion 348 projects slightly from each slide mounting hole 341, so that the side end face member 292 is freely made slidable without being fastened to the verge-board 291 even if the nut 353 is strongly fastened to the bolt 347.

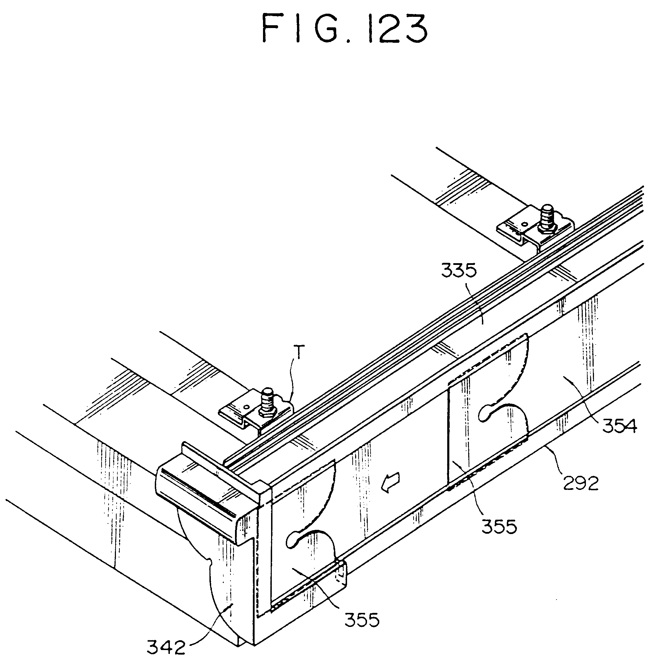

Then, the side end face cover 354 is mounted to the outside of the side end face member 292, and a side end face press member 355 is mounted to the outside of the side end face cover 354 by fitting the upper and lower ends of the side end face press member 355 into the engaging grooves 340 of the side end face member 292, and then sliding the side end face press member 355 in the direction indicated by an arrow in Fig. 123 to insert the eaves-side end of the side end face press member 355 between the side lower corner decoration cover 342 and the side end face cover 354.

Also, since the inside piece 279 is not provided on the underside of the outside arm portion 276 of the side connecting member 294, the rising wall 293 of the side end face member 292 is movable between each outside piece 278 and the corresponding side wall 275 of the side connecting member 294 to permit the plus or minus adjustment for the error of the sheathing board width.

Next will be described the ridge of the roof. As shown in Fig. 108, the ridge cover I' has an angled ridge top plate 360, ridge side face plates 361 extending downward from opposite sides of the ridge top plate 360, an engaging projection 362 provided by bending a lower end of each ridge side face plate 361 upward to the backside, a support leg 363 projecting inward from a portion of each ridge side face plate 361 close to its lower end of the backside and having the downward bent front end, and a ridge cover fixing piece 364 provided by bending outward and downward a lower end of each support leg 363 and further bending the bent portion outward and upward, wherein a fitting insertion space 365 is defined on the outside surface of each support leg 363. Further, two positioning projections 366 extending parallel to the ridge line are provided on the underside of the top of the ridge top plate 360.

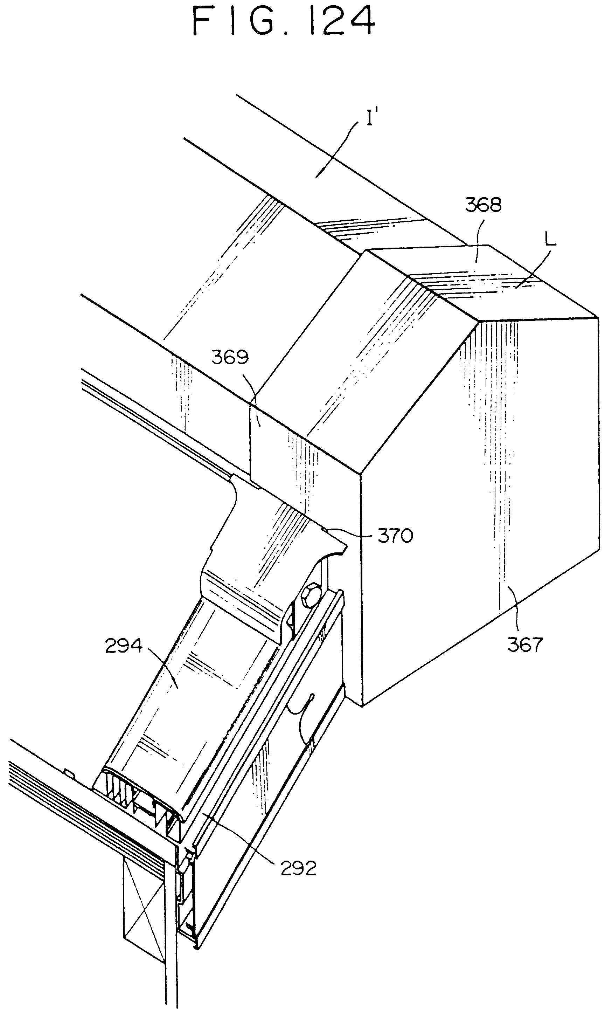

As shown in Fig. 124, the ridge end member L' mounted to the end of the ridge cover 6 has a ridge end face plate 367, a ridge end upside plate 368 extending inward from an upper edge of the ridge end face plate 367, ridge end side plates 369 extending inward from opposite side edges of the ridge end face plate 367, and a notch 370 formed in each ridge end side plate 369 and fitted to both the side connecting member 294 and the side end face member 292.

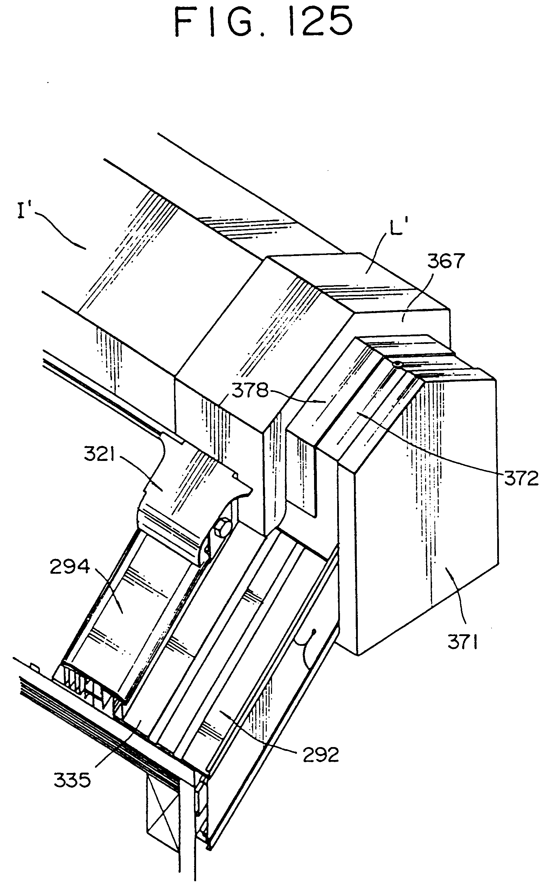

Fig. 125 shows the ridge end of the roof using the side end face member 292, which has a wide upper horizontal portion 335 and is large in side adjusting width. In this case, the ridge end member L' is connected to a ridge end face cap 371 through a ridge end member slide connector 372.

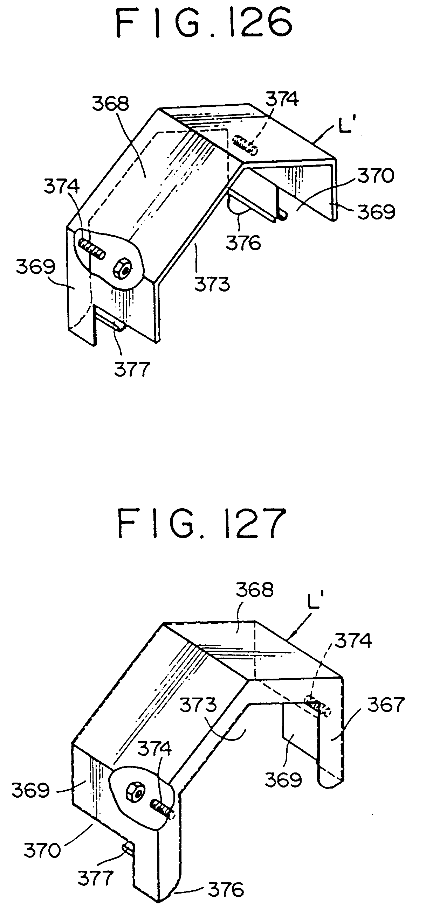

As shown in Figs. 126 and 127, the ridge end member L' has an opening window 373 defined below the lower end of the ridge end face plate 367, and a pair of bolts 374 planted in the inner surfaces of the ridge end face plate 367 and located at the sides of the opening window 373.

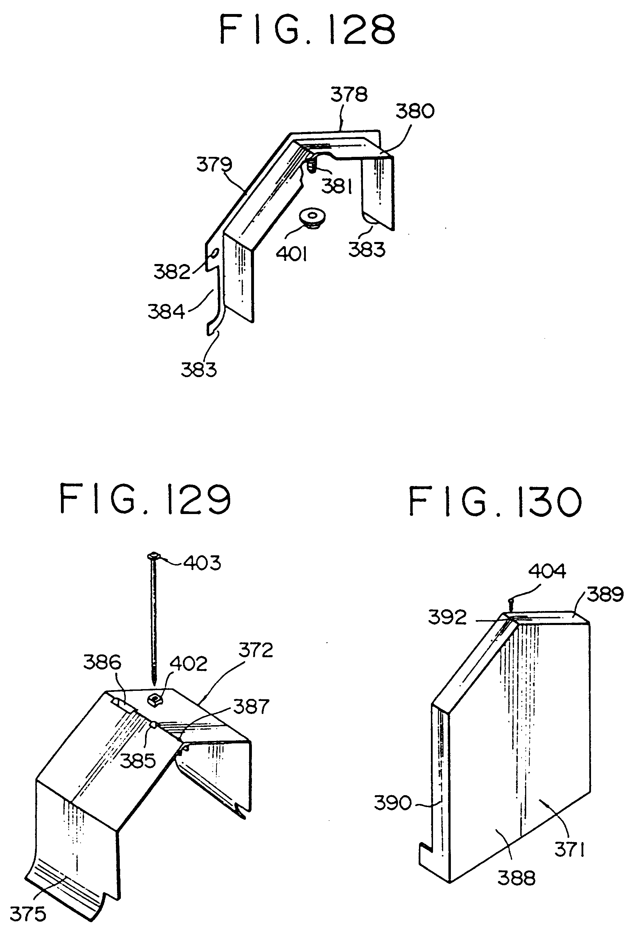

The ridge end member L' also has a curved notch 376 formed in the outside of the opening window 373 at the lower end of the ridge end face plate 367 and fitted to a roof pitch contact portion 375 (see Fig. 129) of the ridge end member slide connector 372 which will be later described.

The ridge end member L' shown in Figs. 126 and 127 has the ridge end face plate 367 lower than that of the ridge end member L' shown in Fig. 124, and also has a ridge end member press piece 377 provided on the backside of each ridge end side face plate 369 and contacting both the support leg 363 and the ridge cover fixing piece 364 of the ridge cover I'. The ridge end members press piece 377 is similar in shape to the support leg 363 and the ridge cover fixing piece 364.

As shown in Fig. 128, a fit frame member 378 fitted to the opening window 373 of the ridge end member L' consists of an edge overlap plate 379 overlapping to the backside of the ridge end face plate 367 along a peripheral edge of the opening window 373, and a projecting edge 380 projecting outward from an inner edge of the edge overlap plate 379 and similar in shape to the peripheral edge of the opening window 373. The fit frame member 378 has a bolt 381 planted in the underside of the top of the projecting edge 380, bolt holes 382 bored in opposite side portion of the edge overlap plate 379, fit notches 383 formed at opposite lower ends of the edge overlap plate 379 and similar to the curved notches 376 of the ridge end member L', and side notches 384 formed at opposite side edges of the edge overlap plate 379 and fitted to the press pieces 377 of the ridge end member L'.

The ridge end slide connector 372 is overlapped to the underside of the projecting edge 380 of the fit frame member 378, and has a fixing hole 385 bored in its top, a slot 386 having the long axis extending parallel to the ridge line and bored in a portion of the top located closer to the ridge end member L' than the fixing hole 385, a ridge end face cap mounting screw hole 387 bored in a portion of the top located closer to the ridge end face cap 371 than the fixing hole 385, and roof pitch contact curved portions 375 extending from its opposite lower ends except the ends at the side of the ridge end face cap 371 as being inclined outward and downward and also projectingly curved downward.

The ridge end face cap 371 has a ridge end closing plate 388 for closing the endmost portion of the ridge and having a peripheral edge bent to the backside, an upper overlap edge 389 projecting from an upper edge of the ridge end closing plate 388 and overlapped to the upside of the ridge end member slide connector 372, side overlap edges 390 projecting from opposite side edges of the ridge end closing plate 388, a lower bent edge 391 projecting from a lower edge of the ridge end closing plate 388, and a screw insertion hole 392 bored in the center of the lower bent edge 391.

Next will be described a way of connecting the ridge end member with the ridge cover I'.

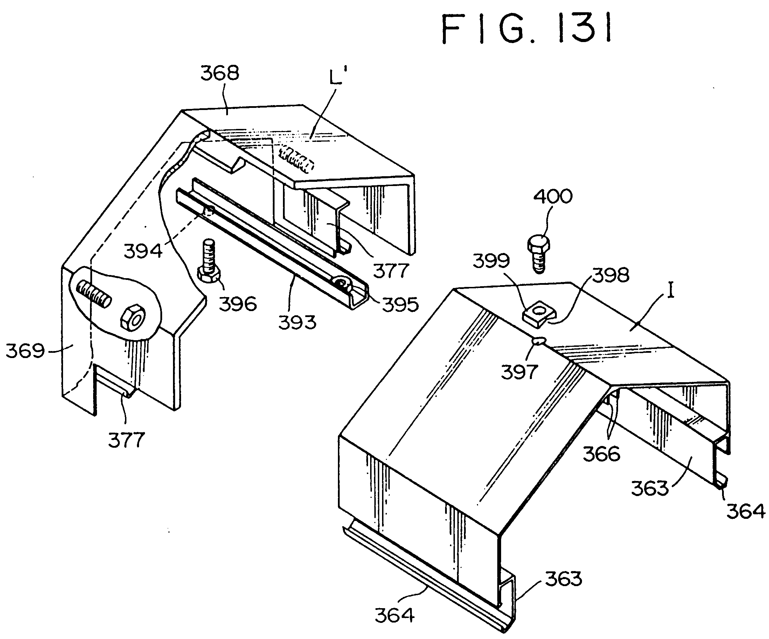

As shown in Fig. 131, a screw hole 394 is bored in one longitudinal end of the connection fitting 393 having a gutter-like sectional shape, and a nut 395 is fixedly mounted to the bottom of the other longitudinal end of the fitting 393. Then, the screw 396 inserted into the screw hole 394 is screwedly mounted to the backside of the ridge end upside plate 368 of the ridge end member L' to mount the connection fitting 393 to the ridge end member L'.

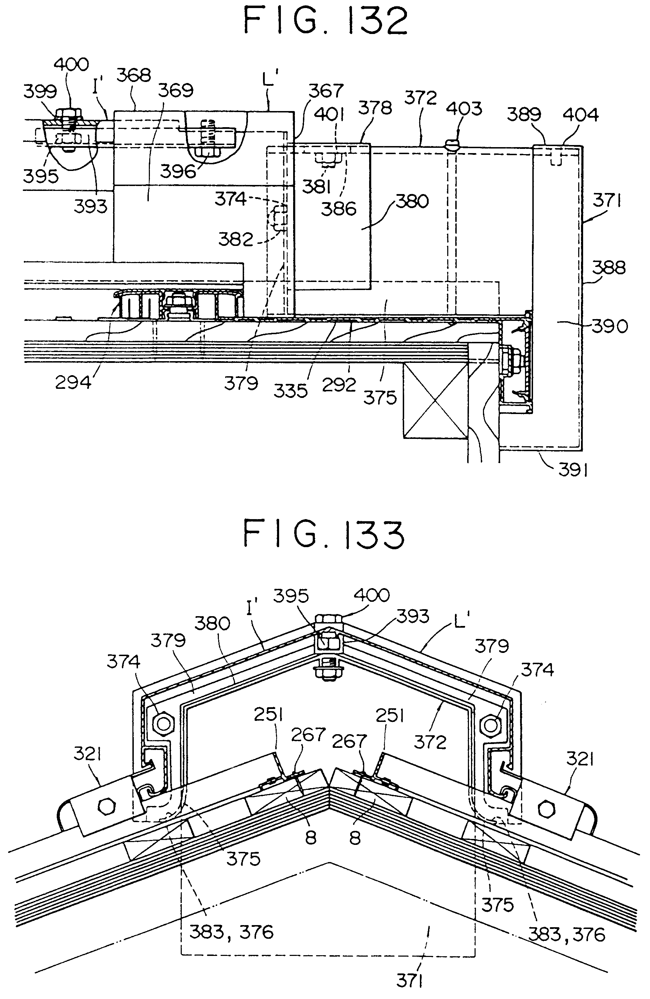

Then, the connection fitting 393 is fitted to the outside of the positioning projections 366 of the ridge cover I', and the ridge end upside plate 368 and the ridge end side plates 369 of the ridge end member L' are overlapped to the outside of the end of the ridge cover I' such that the support arms 363 and the ridge cover fitting pieces 364 of the ridge cover I' are abutted against the ridge end member press pieces of the ridge end member L'. Then, a bolt 400 is inserted into a bolt hole 397 bored in the top of the ridge cover I' through a washer 399 having an angle-shaped notch 398 formed on its underside, and is screwed into the nut 395 of the connection fitting 393 to connect the ridge end member L' with the ridge cover I' as shown in Fig. 132.

As shown in Fig. 132, the edge overlap plate 379 of the fit frame member 378 is overlapped to the lower portion of the backside of the ridge end face plate of the ridge end member L', and the bolt 374 of the ridge end member L' is inserted into the bolt hole 382 of the fit frame member 378 and fixed with the nut, so that the projecting edge 380 of the fit frame member 378 is projected outward from the opening window of the ridge end member L'.

The ridge end member slide connector 372 has the roof pitch contact curved portions 375 provided at its opposite lower ends and adapting to the change of the roof pitch to always determine the mounting height constant. As shown in Fig. 133, one end of the ridge end member slide connector 372 at the side of the slot 386 is overlapped to the underside of the projecting edge 380 of the fit frame member 378 such that each roof pitch contact curved portion 375 is fitted to the fit notch 383 of the fit frame member 378 and the curved notch 376 of the ridge end member L'. Then, the bolt 381 of the fit frame member 378 is inserted into each slot 386 and fastened with a nut 401 to connect the ridge end member slide connector 372 to the fit frame member 378.

While the ridge end member slide connector 372 is mounted to the sheathing board of the roof with a nail 403 inserted into the fixing hole 385 of the ridge end member slide connector 372 through a washer 402, the fixing hole 385 may be omitted in case where the length of the ridge end member slide connector 372 is short.

In subsequence, the ridge end face cap 371 is fitted to the outside of the other end of the ridge end member slide connector 372, and a tapping screw 404 is screwed into both the mounting screw hole 387 of the ridge end member slide connector 372 and the screw insertion hole 392 of the ridge end face cap 371 to mount the ridge end face cap 371.

By this, it is possible to cope with a case where the width of the upper horizontal portion 335 of the side end face member 292 varies depending on the adjustment in width of the side portion of the roof, only by changing the length of the ridge end member slide connector 372. The ridge end member L', the fit frame member 378 and the ridge end face cap 371 may use the same members, irrespective of the adjustment in width of the side portion of the roof.

The plus or minus fine adjustment may be also done with the use of the slot 386 provided in the ridge end member slide connector 372 and the bolt 381 of the fit frame member 378 in correspondence to the dimensional change due to heat or the width adjustment of the side end face member 292.

Further, to the gentle or steep change in the pitch of the roof, since one end of each ridge cover fixing piece of the ridge cover I' is bent downward to the outside, and then bent upward to the outside, and each roof pitch contact curved portion 375 is projectingly curved downward as shown in Fig. 133, each ridge cover fixing piece and each roof pitch contact curved portion are respectively brought into point contact with the upside of the connecting member cover 285 and that of the side end face member 292, so that the curved surface function is effectively displayed to naturally adapt to the change in the pitch.

The light-transmitting frame B according to another embodiment of the invention is composed of opposite longitudinal sash members 160, a light-transmitting sheet support sash member 420, an upper horizontal sash member 170, a lower horizontal sash member 150, and a light-transmitting sheet 180 made of glass and acrylic or the like and fitted to the inside of a square-shaped frame constituted by the above-mentioned respective sash members.

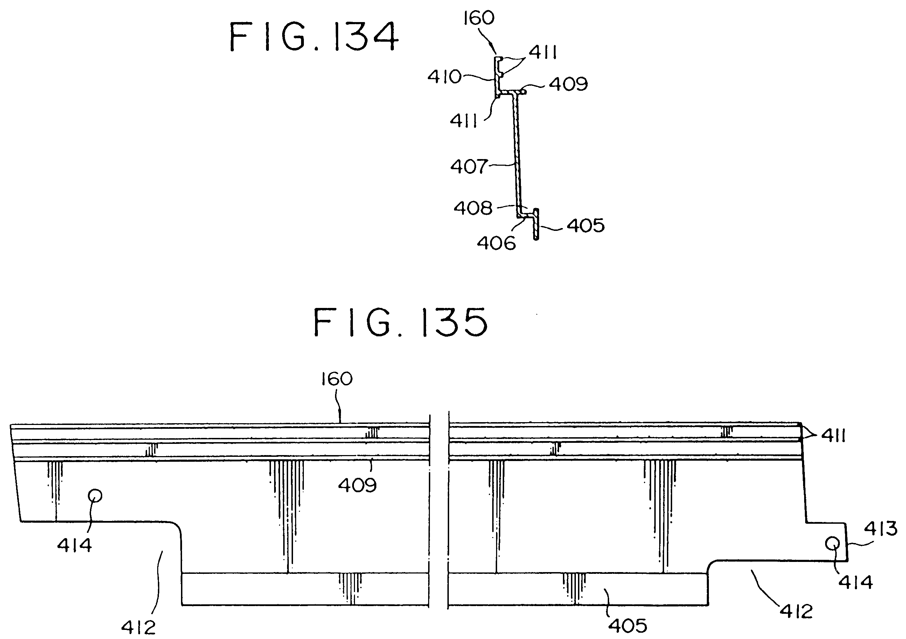

As shown in Fig. 134, each longitudinal sash member 160 has a vertical support leg 405 provided at the lower end of the sash member 160 and inserted into the fit groove 88 of each connecting member A or A', a lower horizontal wing piece 406 provided on the outside surface at an upper end of the vertical support leg 405, a vertical wall 407 extending upward from the tip of the lower horizontal wing piece 406, a drain groove 408 defined on the upside of the lower horizontal wing piece 406 and an upper horizontal wing piece 409 provided at an upper end of the vertical wall 407.

Each longitudinal sash member 160 also has a rising waterproof wall 410 extending upward form an outside end of the upper horizontal wing piece 409 and fitted to the upper-part adjusting space 92' of each connecting member A or A', and a plurality of longitudinal throating projections 411 provided on the inner surface and the lower end of the rising waterproof wall 410.

As shown in Fig. 135, exhaust notches 412 are respectively formed at opposite lower ends of the vertical support leg 405 and those of the vertical wall 407, and a projecting portion 413 is provided at an edge of the vertical wall 407 close to the ridge so as to face to the upper end of each notch 412. Also, mounting holes 414 are bored in the projecting portion 413 and an end of the vertical wall 407 close to the eaves such that the hole 414 close to the eaves is positioned higher than the other hole.

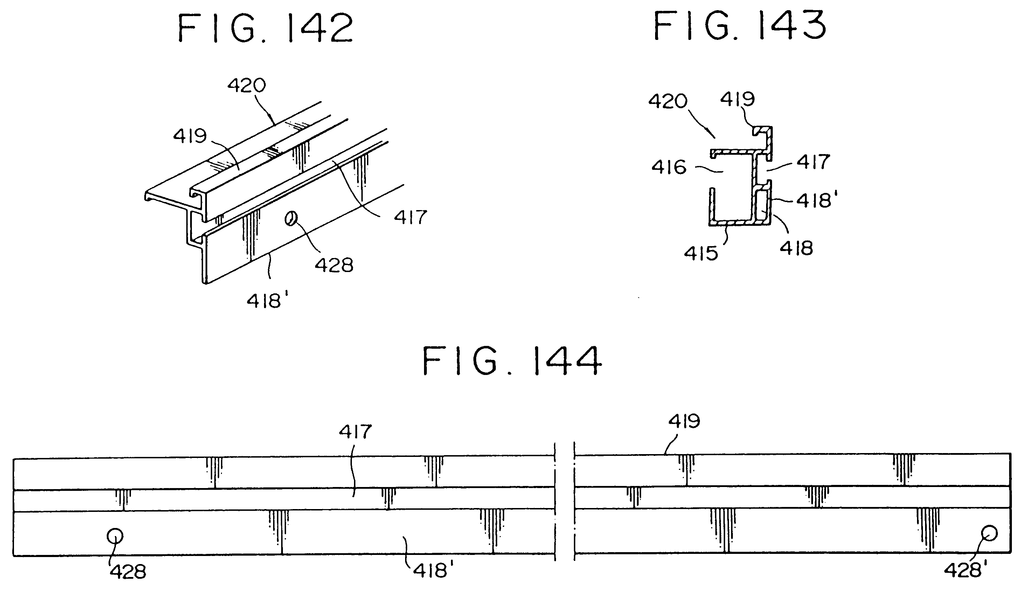

As shown in Fig. 143, the light-transmitting sheet support sash member 420 has a light-transmitting sheet insertion frame 415 having the substantially C-like form in cross section, a longitudinal void 416 used for the insertion of the light-transmitting sheet and defined above an inside wall of the light-transmitting sheet insertion frame 415, a recessed groove 417 defined above the outside surface of the light-transmitting sheet insertion frame 415 and preventing capillary action, a draining cavity 418 defined below the recessed groove 417, and an inverse L-shaped throating wall 419 extending from an outside end of the upside of the light-transmitting sheet insertion frame 415.

As shown in Fig. 142, the underside of the light-transmitting sheet insertion frame 415 and the cavity 418 positioned at the longitudinal opposite lower ends of the light-transmitting sheet support sash member 420 are partially notched in order to be fitted to the end of the upper horizontal sash member 170 and that of the lower horizontal sash member 150, and fixing holes 428 extending through the outside wall 418' of the cavity 418 are respectively bored in opposite ends of the light-transmitting sheet support sash member 420 in the eaves-ridge direction.

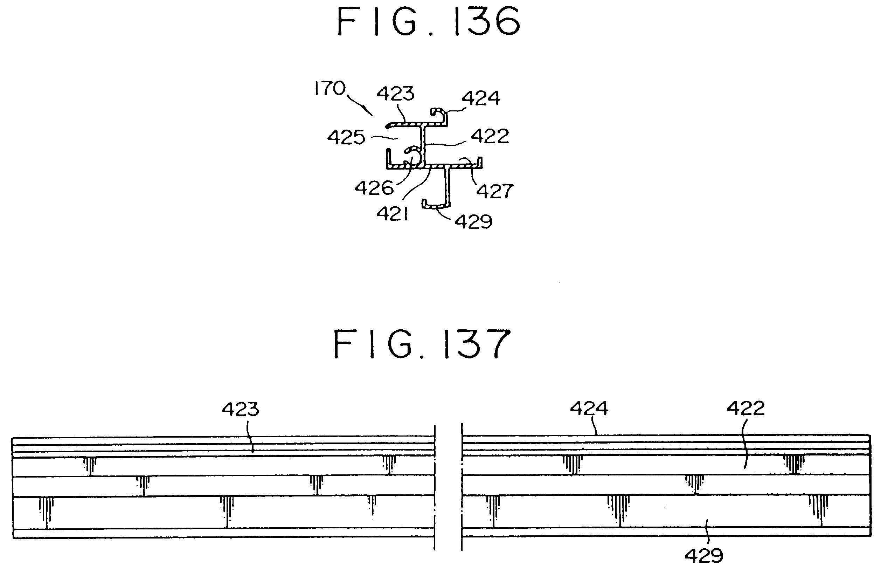

As shown in Fig. 136, the upper horizontal sash member 170 has a belt-like horizontal piece 421 extending orthogonally to the eaves-ridge direction, a rising wall 422 provided on the upside of the horizontal piece 421 in its longitudinal direction, a horizontal upper surface 423 provided on the upper end of the rising wall 422 and extending parallel to the horizontal piece 421, a flashing wall 424 provided by folding back a ridge-side end of the horizontal upper surface 423, a light-transmitting sheet support groove 425 defined at the eaves side of the rising wall 422, a hollow curved groove 426 defined at the eaves-side lower end of the rising wall 422, a drain groove 427 defined on the upside of the horizontal piece 421, and a fitting engagement piece 429 provided on the underside of the horizontal piece 421 and formed by extending downward from the underside of the horizontal piece 421, and then bending the tip toward the eaves and further upward.

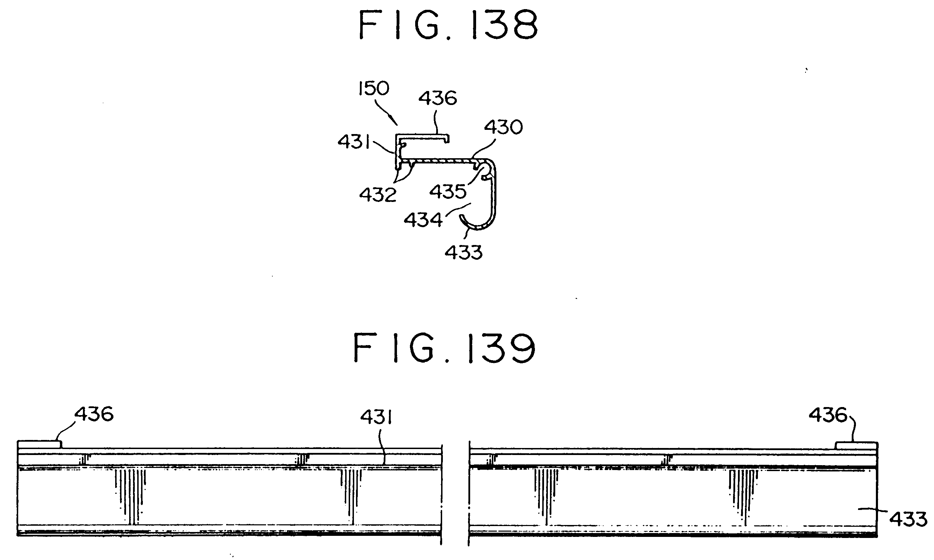

As shown in Fig. 138, the lower horizontal sash member 150 has a light-transmitting sheet mounting piece 430, a light-transmitting sheet contact wall 431 extending from the upside of an eaves-side edge of the light-transmitting sheet mounting piece 430 and having the height substantially equal to the thickness of the light-transmitting sheet 180, a plurality of throating projections 432 longitudinally provided on the underside of the light-transmitting sheet mounting piece 430, a curved waterproof gutter 433 provided at a ridge-side edge of the light-transmitting sheet mounting piece 430 and curved downward in the eaves direction, and a recess 434 defined by the underside of the light-transmitting sheet mounting piece 430 and the curved waterproof gutter 433 and fitted to the upper horizontal sash member 170.

The lower horizontal sash member 150 also has a hollow curved groove 435 provided at an eaves-side connection edge between the light-transmitting sheet mounting piece 430 and the curved waterproof gutter 433, and light-transmitting sheet press pieces 436 extending from longitudinal opposite upper edges of the light-transmitting sheet contact wall 431 toward the ridge.

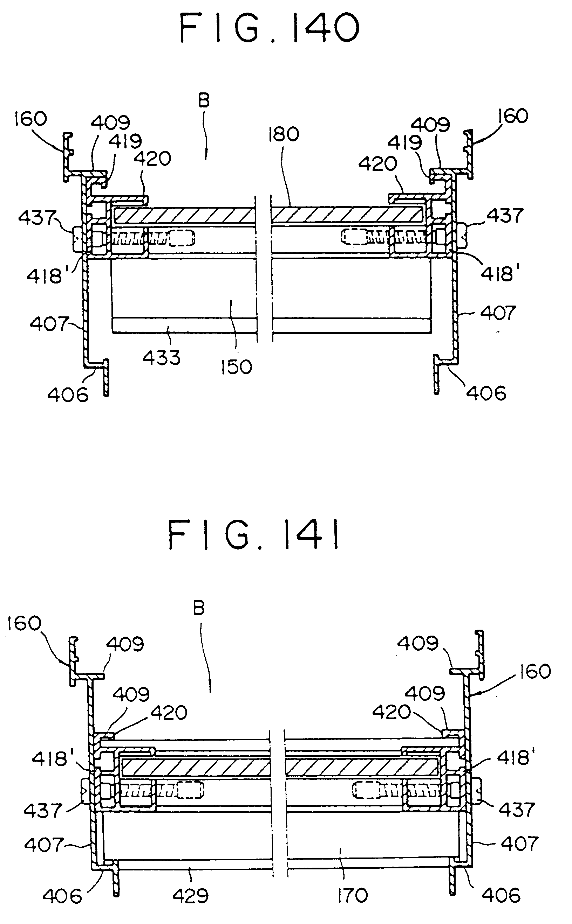

To assemble lighting frame B, the outside wall 418' of the cavity 418 of the light-transmitting sheet support sash member 420 is brought into contact with the inner surface of the vertical wall 407 of the longitudinal sash member 160, and the upper end of the throating wall 419 of the light-transmitting sheet support sash member 420 is brought into contact with the upper horizontal wing piece 409 of the longitudinal sash member 160, ash shown in Fig. 140, to regulate the mounting position of the eaves-side upper portion. Also, the longitudinal opposite end faces of the lower horizontal sash member 150 are respectively brought into contact with the inner surfaces of the eaves-side ends of the confronting light-transmitting sheet support sash members 420, and the light-transmitting sheet press pieces 436 are fitted to the light-transmitting sheet insertion frame 415 of the light-transmitting sheet support sash member 420. Then, as shown in Fig. 141, the longitudinal opposite end faces of the upper horizontal sash member 170 are respectively brought into contact with the inner surfaces of the ridge-side ends of the light-transmitting sheet support sash members 420, so that the lower end of the fitting engagement piece 429 of the change of temperature or the like, the front end of the projection piece 307 is located close to the bottom of the insertion groove 270, as shown in Fig. 101.

On the other hand, in case where each roof member 2 is expanded lengthwise under the direct rays of the sun or the like, the front end of the projection piece 307 is moved toward the neighborhood of an opening portion of the insertion groove 270, as shown in Fig. 103.

Next will be described a ridge opening filling-up unit 308 mounted close to a ridge-side end of each roof member 2 and that of each connecting member 273.

As shown in Fig. 104, the ridge opening filling-up unit 308 has an opening filling-up member fitting 309 fitted to the upside of each connecting member 273 and an opening adjustment board 310 disposed on the upside of each roof member 2 along the ridge line. The opening adjustment board 310 has a downward open engaging groove 312 provided along an upper end of the backside of a belt-like vertical wall 311, a flashing portion 313 projecting toward the eaves and provided along the upper end of the surface of the belt-like vertical wall 311, and a longitudinal recess groove 314 defined slightly below the engaging groove 312.

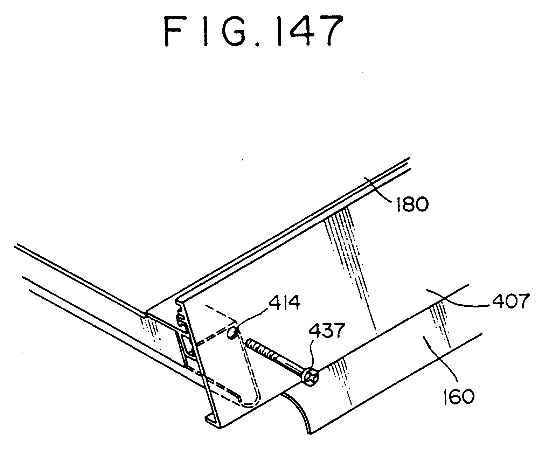

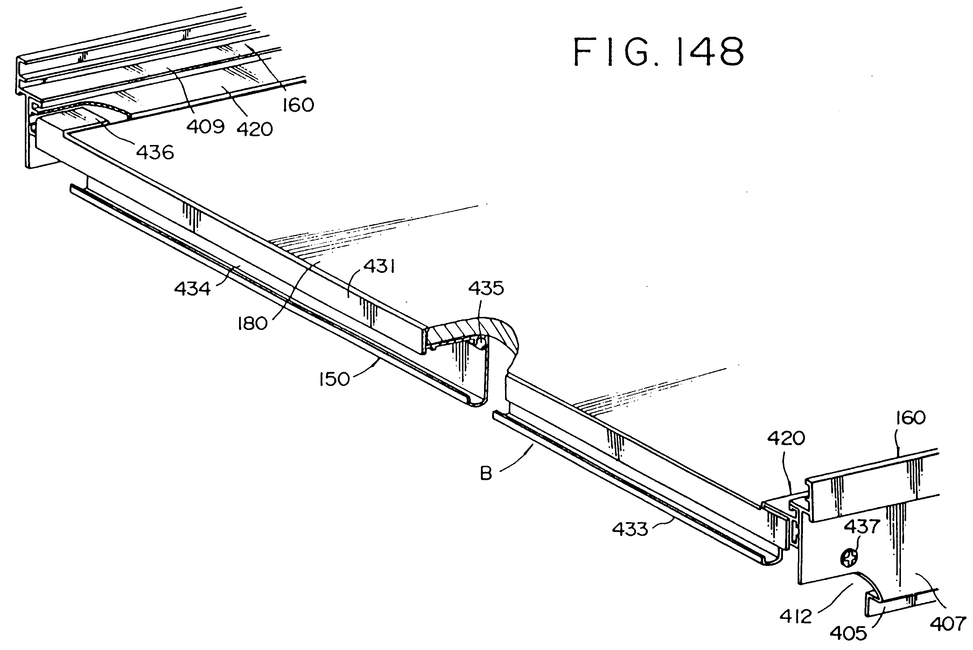

The opening filling-up member fitting 309 has projections 316 provided close to opposite-side upper ends of the surface of a rising wall 315 and engaging upper horizontal sash member 170 is made flush with the underside of the lower horizontal wing piece 406 of the longitudinal sash member 160. Then, as shown in Figs. 147 and 148, the screw 437 is inserted into the eaves-side mounting hole 414 of the longitudinal sash member 160, the eaves-side fixing hole 428 of the light-transmitting sheet support sash member 420 and the hollow curved groove 435 of the lower horizontal sash member 150, and the screw 437 is also inserted into the ridge-side mounting hole 414 of the longitudinal sash member 160, the ridge-side fixing hole 428 of the light-transmitting sheet support sash member 420 and the hollow curved groove 426 of the upper horizontal sash member 170, so that a rectangular frame is constructed.

Also, the periphery of the light-transmitting sheet 180 is supported through packing by the light-transmitting sheet insertion frames 415 of the light-transmitting sheet support sash members 420, the light-transmitting sheet support groove 425 of the upper horizontal sash member 170 and the upside of the light-transmitting sheet mounting piece 430 of the lower horizontal sash member 150, and the eaves-side opposite end portions of the upside of the light-transmitting sheet 180 are pressed by the light-transmitting sheet press pieces 436, so that any projection is not formed at the eaves-side end of the upside of the light-transmitting sheet 180 between the light-transmitting sheet press pieces 436 to prevent the deposition of dust and the staying of snow or rain water.

Further, the light-transmitting sheet 180 is lengthened by extending the light-transmitting sheet 180 to the position of the light-transmitting sheet contact wall 431 of the lower horizontal sash member 150, so that the area of the light-transmitting sheet 180 is enlarged to improve the efficiency of collection of light of the lighting frames B.

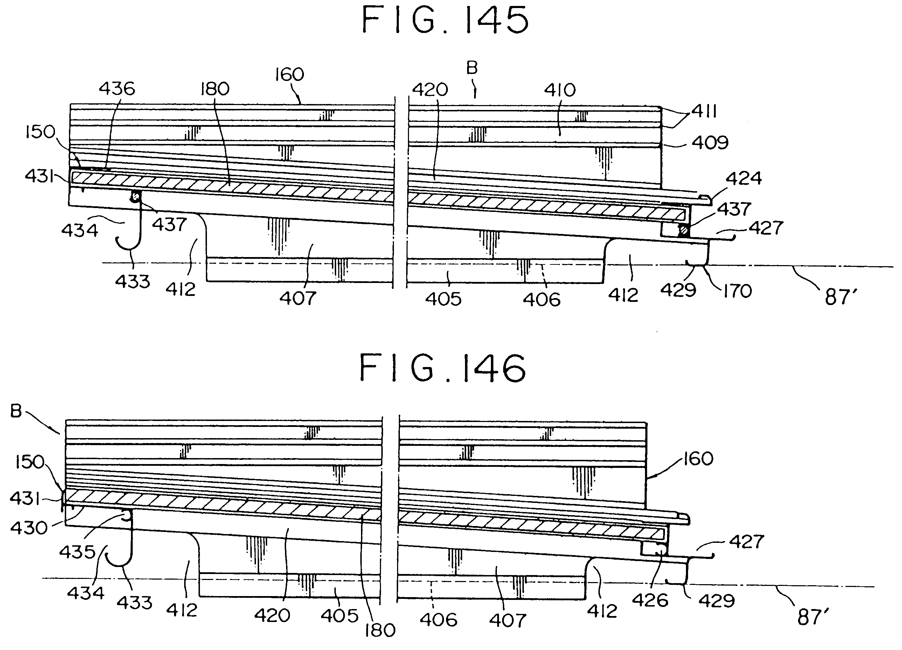

In this case, since the eaves-side mounting hole 414 of the longitudinal sash member 160 is bored above the ridge-side mounting hole 414, the light-transmitting sheet support sash member 420 is mounted as being inclined upward to the eaves relative to the longitudinal sash member 160, as shown in Figs. 145 and 146, and the lower horizontal sash member 150 is mounted above the upper horizontal sash member 170.

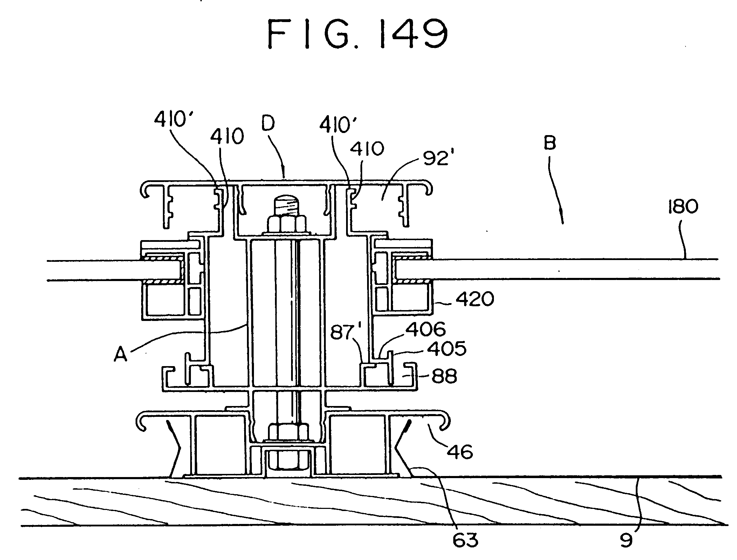

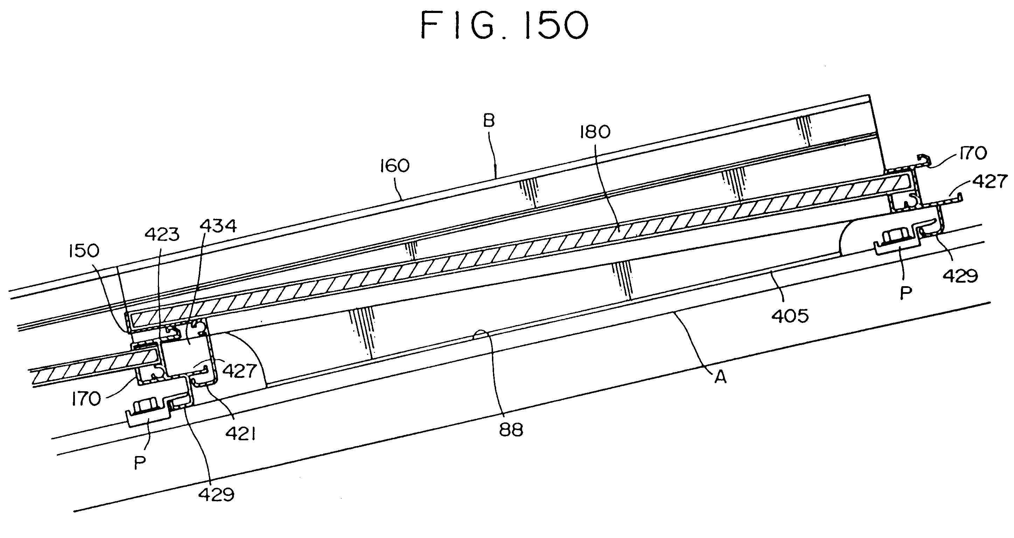

As shown in Fig. 149, when laying the light-transmitting frames B, each lower horizontal wing piece 406 of each longitudinal sash member 160 is brought into contact with the upside of one of the confronting projections 87 of each connecting member A or A', and the lower end of each vertical support leg 405 is inserted into the insertion groove 88 of each connecting member A or A' as being spaced apart from the bottom of the groove 88. Then, as shown in Fig. 150, the fitting engagement piece 429 of each upper horizontal sash member 170 is pressed by the fitting P mounted to the insertion groove 88, and each waterproof wall 410 of the longitudinal sash member 160 is inserted into the upper-part adjusting space 92' of each connecting member A or A', while a gap 410' is defined between the underside of the connecting member cover D and the upper end of the waterproof wall 410 in order to prevent capillary action.

Also, with the gap 410', hot air flowing from the underside of the lighting frames B through the exhaust notches 412 toward the connecting members A may be discharged to the outside.

In subsequence, another light-transmitting frame B is laid at the ridge side, and the horizontal piece 421 and the horizontal upper surface 423 of the upper horizontal sash member 170 of the light-transmitting frame B adjacent to the eaves-side light-transmitting frame are fitted to the recess 434 of the lower horizontal sash member 150 of another light-transmitting frame B at the ridge side. Then, the light-transmitting frame fitting P is engaged with the fitting engagement piece 429 of the upper horizontal sash member 170 of the ridge-side light-transmitting frame B.

The light-transmitting frames B are successively roofed toward the ridge in the same manner.

The light-transmitting sheet 180 of the ridge-side lighting frame B is partially overlapped with the upside of the light-transmitting sheet 180 of the eaves-side lighting frame B through the upper horizontal sash member 170 and the lower horizontal sash member 150, and the light-transmitting sheet 180 is inclined at an angle smaller than the pitch of the sheathing roof board.

Namely, the lower edge of the vertical sash member 160 is mounted parallel to the sheathing roof board as long as the upper end of the upper horizontal sash member 170 of the light-transmitting frame B and the upside of the recess 434 of the lower horizontal sash member 150 are made flush with the lower edge of the longitudinal sash member, so that in the longitudinal sash member 160, the position of the eaves-side mounting hole 414 is made higher than that of the ridge-side mounting hole 414 such that the upper horizontal sash member 170 and the lower horizontal sash member 150 have the positional relationship as noted above.

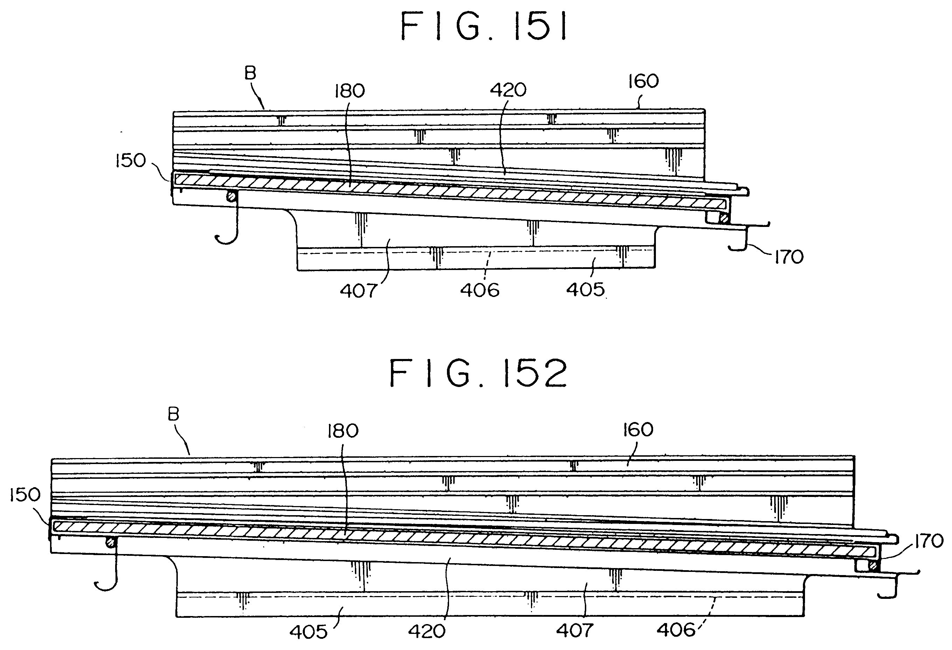

As a result, as shown in Figs. 151 and 152, the inclination of the light-transmitting sheet 180 to the longitudinal sash member 160 is made more steep the shorter the length of the light-transmitting frame B in the eaves-ridge direction is, whereas the inclination is made more gentle the longer the length thereof is. However, the relative inclination is easily varied by providing the longitudinal sash member 160 separately from the light-transmitting sheet support sash member 420.

## Claims

1. A roof-mounted light-transmitting frame (B) comprising:
a pair of left and right longitudinal sash members (160);
a light-transmitting sheet support sash member (420) mounted along an inner surface of each longitudinal sash member (160);
a lower horizontal sash member (150) mounted between front ends of said light-transmitting sheet support sash members (420);
an upper horizontal sash member (170) mounted between rear ends of said light-transmitting sheet support sash members (420); and
a light-transmitting sheet (180) mounted inside a space defined by said light-transmitting sheet support sash members (420), said upper horizontal sash member (170) and said lower horizontal sash member (150);
said light-transmitting support sash member (420) being mounted obliquely to said longitudinal sash member (160) such that a distance between its front end and a lower edge of said longitudinal sash member (160) is made larger than a distance between its rear end and a lower edge of said longitudinal sash member (160); and
a recess (434) being longitudinally formed on the front end of a lower portion of said lower horizontal sash member (150) to be fitted to said upper horizontal sash member (170).

2. A light transmitting frame (B) according to claim 1, wherein said lower horizontal sash member (150) has a light-transmitting sheet contact wall (431) with a height substantially equal to a thickness of the light-transmitting sheet (180) and longitudinally provided on an upper side of a front end of a belt-like light-transmitting sheet mounting piece, and a light-transmitting sheet press piece (436) provided at each of opposite upper ends of said light-transmitting sheet contact wall (431).
